(19) Europäisches Patentamt
European Patent Office
Office européen des brevets

(11) EP 2 823 959 A1

(12) **EUROPEAN PATENT APPLICATION**
published in accordance with Art. 153(4) EPC

(43) Date of publication:
**14.01.2015 Bulletin 2015/03**

(21) Application number: **13758164.1**

(22) Date of filing: **05.03.2013**

(51) Int Cl.:
***B32B 15/08*** *(2006.01)* ***B05D 7/14*** *(2006.01)*
***B05D 7/24*** *(2006.01)* ***C09D 5/08*** *(2006.01)*
***C09D 7/12*** *(2006.01)* ***C09D 201/00*** *(2006.01)*
***C23C 26/00*** *(2006.01)*

(86) International application number:
**PCT/JP2013/056021**

(87) International publication number:
**WO 2013/133284 (12.09.2013 Gazette 2013/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **06.03.2012 JP 2012049111**
**27.11.2012 JP 2012258553**

(71) Applicant: **Nippon Steel & Sumitomo Metal Corporation**
**Tokyo 100-8071 (JP)**

(72) Inventors:
- **YUASA, Kensei**
  **Tokyo 100-8071 (JP)**
- **YAMAOKA, Ikuro**
  **Tokyo 100-8071 (JP)**
- **MORISHITA, Atsushi**
  **Tokyo 100-8071 (JP)**

(74) Representative: **Vossius & Partner**
**Siebertstrasse 4**
**81675 München (DE)**

(54) **COATED METAL PLATE FOR VEHICLES WHICH EXHIBITS EXCELLENT RESISTANCE WELDABILITY, CORROSION RESISTANCE, AND MOLDABILITY**

(57) Precoated metal sheet for automobile use which is excellent in resistance weldability, corrosion resistance, and formability is provided. The present invention provides precoated metal sheet for automobile use comprising a metal sheet and a coat (α) on at least one surface of the metal sheet, wherein the coat (α) comprising an organic resin (A), non-oxide ceramic particles (B) selected from at least one type of borides, carbides, nitrides, and silicides and which have an electrical resistivity at 25°C of $0.1\times10^{-6}$ to $185\times10^{-6}$ Ωcm, and an anti-corrosive pigment (C).

FIG. 1

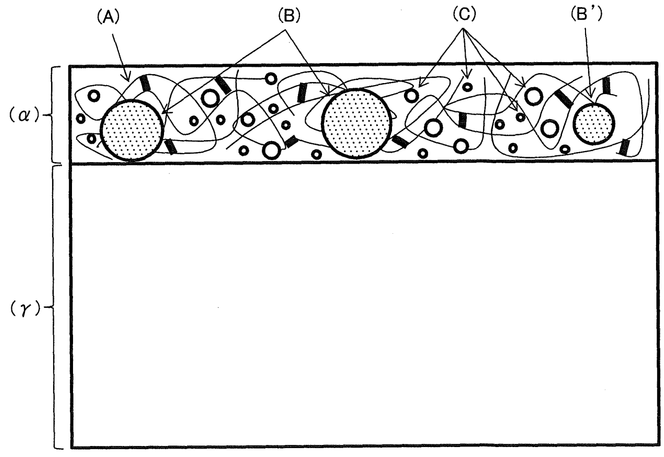




Printed by Jouve, 75001 PARIS (FR)

## Description

### Technical Field

The present invention relates to precoated metal sheet for automobile use which is excellent in resistance weldability, corrosion resistance, and formability and which is covered on at least part of its surface by a coat which contains an organic resin, particles of a non-oxide ceramic with an electrical resistivity in a specific range, and an anti-corrosive pigment.

### Background Art

Below, the background art of the present invention will be explained.

Most members for automotive chassis use are made of steel sheet or other metal sheets as materials and are produced by numerous steps such as [1] a blanking step which cuts the metal sheet into a predetermined size, [2] an oil cleaning step which cleans the metal sheet by an oil, [3] a step of press-forming the blank, [4] a welding step of assembling the formed materials by spot welding, adhesion, etc. into the desired shapes of members, [5] a step of removing the press oil and cleaning the member surface, [6] a chemical conversion step, and [7] an electrodeposition coating step. The members for chassis use which are used as outside panels are further generally subjected to [8] an intermediate coating step, [9] a topcoat coating step, and other coating steps. Therefore, in the automobile industry, there is a great need for cutting costs by elimination or streamlining of the production process, in particular the chemical conversion step or the coating steps.

Further, the corrosion resistance of automobile members is often secured by the above chemically converted coat and subsequent electrodeposited coat. However, at the joined parts of metal sheets (overlapping parts), in particular the overlapping parts at the inside surfaces, hem parts of bent parts, etc. of bag-shaped members, there are sometimes parts which the coat or paint does not reach. In this case, the possibility becomes greater of the joined parts of the metal member being exposed to a corrosive environment in a naked state. For this reason, a body sealer, primer, adhesive, bag part wax, or other rust-preventing secondary material is used to make up for these in corrosion resistance. These rust-preventing secondary materials are not only factors which increase the cost of automobile production, but also are factors which lower the productivity and increase the chassis weight, so the need for coated steel sheet for automobile use where corrosion resistance can be secured even if cutting back on these secondary materials has been high.

To answer these needs, much R&D has been conducted on precoated metal sheet which enables elimination of the chemical conversion step, elimination or streamlining of the electrodeposition coating step, and elimination or cutback of the secondary materials to be simultaneously achieved at the time of automobile production. Such precoated metal sheet is press-formed, then spot welded etc. to assemble it into desired shapes, then is coated by electrodeposition or coated with an intermediate coat when the electrodeposition step is eliminated. For this reason, it is necessary to improve the press-formability and make the coat electroconductive to enable resistance welding or further electrodeposition coating and to impart sufficient corrosion resistance.

For example, PLT 1 (Japanese Patent Publication No. 55-17508A) discloses the art of galvannealed steel sheet which has a resin-based electroconductive coat which contains zinc powder and has high corrosion resistance and weldability. It describes that the zinc powder is preferably included in the coat in 30 to 90 mass% and that the coat thickness is preferably 2 to 30 μm.

For example, PLT 2 (Japanese Patent Publication No. 9-276788A) discloses the art of organic composite plated steel sheet with excellent corrosion resistance and able to be resistance welded which has a rust preventive layer which is mainly comprised of a chromium compound over which an organic resin coat which contains 3 to 59 vol% of electroconductive powder and an anti-corrosive pigment is covered to a 0.5 to 20 μm thickness. The type of the electroconductive powder is not limited, but in the examples, as the electroconductive powder, iron phosphide, Fe-Si alloy, Fe-Co alloy, etc. are used. The corrosion resistance and spot weldability are considered to be excellent.

PLT 3 (Japanese Patent Publication No. 2000-70842A) proposes the art of an Ni-containing electrogalvanized steel sheet for automobile spare part use which is excellent in corrosion resistance, resistance weldability, etc. and which has a chromate primer for improving the corrosion resistance and coat adhesion over which an organic resin layer which contains 25 to 45 mass% of an electroconductive pigment which is mainly comprised of iron phosphide and an anti-corrosive pigment to a 2 to 8 μm thickness. The examples illustrate both water-based and solvent based coating resins, so the coating composition for forming the resin coating layer may be either a water-based or a solvent-based one.

PLT 4 (Japanese Patent Publication No. 2003-513141A) proposes a water-based coating agent as a metal surface coating agent which enables the formation of a corrosion resistant coat which has electroconductivity after curing on a metal surface and can be welded and which contains a specific organic binder: 10 to 30 mass% and electroconductive powder: 30 to 60 mass%. As examples of the electroconductive powder which is suitable for the preparation of this coating agent, zinc, aluminum, graphite, carbon black, molybdenum sulfide, and iron phosphide may be mentioned.

PLT 5 (Japanese Patent Publication No. 2005-288730A) and PLT 6 (Japanese Patent Publication No. 2005-325427A) propose the art of organic coated steel sheet for automobile use which achieves both excellent corrosion resistance and weldability by coating a galvanized steel sheet or aluminum plated steel sheet on the surface with a first layer coat which reinforces the adhesion with the plating and, through that, with a resin-based second layer coat which includes an electroconductive pigment and a rust-proofing additive to achieve both excellent corrosion resistance and weldability. The coating composition for forming the first layer coat is water-based. Further, the coating composition for forming the second layer coat is shown as being both water-based and solvent-based in the documents, so can be applied to either water-based or solvent-based compositions. The electroconductive pigment is contained in the thickness 1 to 30 $\mu$m second layer coat in 5 to 70 vol%. As a preferable electroconductive pigment, a metal, alloy, electroconductive carbon, iron phosphide, carbides, and semiconductor oxides may be illustrated.

PLT 7 (Japanese Patent Publication No. 2004-42622A) proposes the art of a coated metal material which is high in corrosion resistance and can be welded and which includes electroconductive particles constituted by a metal and semi-metal element alloy or compound and a specific urethane-based resin. It describes that the electroconductive particles are preferably alloys or compounds which contain at least 50 mass% of Si and more preferably ferrosilicon which contains at least 70 mass% of Si.

As art which uses electroconductive ceramic particles among electroconductive particles other than metal particles, for example, PLT 8 (Japanese Patent Publication No. 2003-268567A) proposes the art of an electroconductive material-coated corrosion resistant metal material which is excellent in corrosion resistance and electroconductivity and which is obtained by covering a core metal by a clad layer comprised of a corrosion resistant metal which is selected from titanium, zirconium, tantalum, niobium, or their alloys and further covering the top of this by a surface treatment layer comprised of at least one electroconductive material which is selected from a carbon material, electroconductive ceramic, or metal powder and any resin which bonds these.

Citations List

Patent Literature

PLT 1: Japanese Patent Publication No. 55-17508A
PLT 2: Japanese Patent Publication No. 9-276788A
PLT 3: Japanese Patent Publication No. 2000-70842A
PLT 4: Japanese Patent Publication No. 2003-513141A
PLT 5: Japanese Patent Publication No. 2005-288730A
PLT 6: Japanese Patent Publication No. 2005-325427A
PLT 7: Japanese Patent Publication No. 2004-42622A
PLT 8: Japanese Patent Publication No. 2003-268567A

Summary of Invention

Technical Problem

As stated in the section on the "Background Art", to make a coat electroconductive so as to enable resistance welding or enable coating by an electroconductive coat and impart sufficient corrosion resistance, when using the art of PLT 1, PLT 1 describes that since the galvannealed layer and coat are strongly bonded, the peeling resistance at the time of forming is excellent, but in practice there was the problem of remarkable coat peeling at the time of press-forming and a drop in the corrosion resistance of the parts from which the coat is peeled.

When using the art such as described in PLT 2 or PLT 3, to obtain the desired corrosion resistance, a rust-proofing layer which contains a chromium compound has to be provided as a primer. This does not match with the current need for avoiding the toxicity of hexavalent chrome and the environmental load. Further, a powder such as iron phosphide or Fe-Si alloy etc. which is used as an electroconductive pigment is remarkably inferior in electroconductivity compared with a metal powder, so for making the coat electroconductive, a large amount of electroconductive powder has to be added. There were the problems that remarkable coat peeling and galling occurred at the time of press-forming and the parts from which the coat peeled off dropped in corrosion resistance.

In the arts which are described in PLT 4, PLT 5, and PLT 6, when using zinc, aluminum, and other metal powders among the preferable electroconductive powders, if the content of the metal powder in the coat increases, the electroconductivity (resistance weldability) is improved, but there is the contradictory tendency for the corrosion resistance to remarkably fall. Both weldability and corrosion resistance cannot be achieved. Further, when using powders of electroconductive carbon, molybdenum sulfide, iron phosphide, semiconductor oxides, etc., these are remarkably inferior to metal powders in electroconductivity, so in the same way as the case of the arts which are described in PLTs 2 and

3, to make the coat electroconductive, it is necessary to add the powder in a large amount. There was the problem that remarkable coat peeling and galling occurred at the time of press-forming and the corrosion resistance fell.

In the art which is described in PLT 7, when using an electroconductive powder constituted by particles of metals or their alloys, in the same way as the above case, the increase in the content of particles in the coat causes the electroconductivity to improve, but the corrosion resistance tends to remarkably fall. Further, when using ferrosilicon particles, the electroconductivity becomes remarkably inferior compared with metal particles, so to make the coat electroconductive, a large amount of the particles have to be added. In the same way as above, there were the problems that remarkable coat peeling and galling occurred at the time of press-forming and the corrosion resistance feel.

The art which is described in PLT 8 is art which was proposed for special applications such as fuel cell separators or electrochemical electrodes, so the corrosion resistant metal which was used for the clad layer was extremely expensive and application to members for automobile chasses was difficult.

In this way, in the prior art, to enable both sufficient electroconductivity and corrosion resistance to be achieved, a chromate foundation has to be jointly used (PLTs 2 and 3). With conventional addition of electroconductive particles, the corrosion resistance and the formability were sacrificed (PLTs 2 to 7), inexpensive precoated metal sheet which can be used for members for automobile chassis use cannot be obtained (PLT 8), and various other problems arose.

As explained above, to simultaneously eliminate the chemical conversion step, eliminate or simplify the electrodeposition coating step, and eliminate or slash the secondary materials at the time of automobile production, precoated metal sheet which is provided with all of excellent press-formability, electroconductivity, and corrosion resistance is sought. To provide such precoated metal sheet, it was necessary to discover electroconductive particles which have the following characteristics all together, that is, (a) long-term stability in a coating composition for coating use, (b) expression of excellent electroconductivity even with addition of a relatively small amount to the coat, and (c) little fall in corrosion resistance or formability even if increasing the amount of addition to the coat.

The present invention was made in consideration of the above problems and relates to precoated metal sheet for automobile use which is excellent in resistance weldability, corrosion resistance, and formability and which has a chromate-free coat which contains non-oxide ceramic particles which are limited in electrical resistivity to an extremely low range and which covers at least part of its surface.

Solution to Problem

The inventors etc. engaged in intensive research for achieving such an object and as a result discovered that if forming a coat which contains particles of a non-oxide ceramic with an electrical resistivity of $0.1\times10^{-6}$ to $185\times10^{-6}$ $\Omega$cm and an anti-corrosive pigment in an organic resin, which can be obtained industrially relatively inexpensively, on a metal surface, a precoated metal sheet for automobile use which is excellent in all of electroconductivity, corrosion resistance, and formability is obtained.

The present invention was made based on the above findings and specifically is as follows:

(1) Precoated metal sheet for automobile use comprising a metal sheet and a coat ($\alpha$) on at least one surface of the metal sheet, wherein the coat ($\alpha$) comprises an organic resin (A), non-oxide ceramic particles (B) selected from at least one type of borides, carbides, nitrides, and silicides and which have an electrical resistivity at 25°C of $0.1\times10^{-6}$ to $185\times10^{-6}$ $\Omega$cm, and an anti-corrosive pigment (C).

(2) The precoated metal sheet for automobile use according to (1) wherein the organic resin (A) comprises an organic resin (A1) which has at least one type of a hydrophilic functional group.

(3) The precoated metal sheet for automobile use according to (1) wherein the organic resin (A) comprises an organic resin (A1) having at least one type of hydrophilic functional group and a derivative (A2) of the resin (A).

(4) The precoated metal sheet for automobile use according to (2) or (3) wherein the organic resin (A1) has at least one type of functional group which is selected from a carboxyl group (-COOH), a carboxylate group ($-COO^-M^+$, where $M^+$ is a monovalent cation), sulfonic acid group ($-SO_3H$), sulfonate group ($-SO_3^-M^+$, where $M^+$ is a monovalent cation), primary amino group ($-NH_2$), secondary amino group ($-NHR^1$, where $R^1$ is a hydrocarbon group), tertiary amino group ($-NR^1R^2$, where $R^1$ and $R^2$ are hydrocarbon groups), quaternary ammonium salt group ($-N^+R^1R^2R^3X^-$, where $R^1$, $R^2$, and $R^3$ are hydrocarbon groups, and $X^-$ is a monovalent anion), sulfonium salt group ($-S^+R^1R^2X^-$, where $R^1$ and $R^2$ are hydrocarbon groups, and $X^-$ is a monovalent anion), phosphonium salt group ($-P^+R^1R^2R^3X^-$, where $R^1$, $R^2$, and $R^3$ are hydrocarbon groups, and $X^-$ is a monovalent anion).

(5) The precoated metal sheet for automobile use according to (3) wherein the derivative (A2) of the resin (A1) is a resin ($A2_{Si}$) of the following general formula (I) :

General Formula (I)

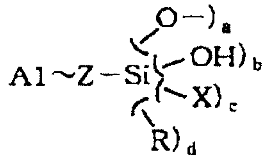

(where, "Al" indicates the organic resin (A1), "Z-" indicates a having $C_1$ to $C_9$, $N_0$ to $N_2$, and $O_0$ to $O_2$, and "A1~Z" indicates "A1" and "Z" which are covalently bonded through functional groups of the two. Further, "-O-" is an ether bond, "-OH" is a hydroxyl group, "-X" is a $C_1$ to $C_3$ hydrolyzable alkoxy group, hydrolyzable halogeno group, or hydrolyzable acetoxy group, "-R" is a $C_1$ to $C_3$ alkyl group, and "a", "b", "c", and "d" which show the numbers of substituents are all integers of 0 to 3, where a+b+c+d=3).

(6) The precoated metal sheet for automobile use according to any one of (1) to (5) wherein the non-oxide ceramic particles (B) have an electrical resistivity at 25°C of $0.1\times10^{-6}$ to $100\times10^{-6}$ $\Omega$cm.

(7) The precoated metal sheet for automobile use according to any one of (1) to (6) wherein among the non-oxide ceramic particles (B), the particles (B1) with a particle diameter of 1 $\mu$m to 24 $\mu$m are arranged on at least one surface of the metal sheet at a rate of 0.8/$mm^2$ to 40000/$mm^2$.

(8) The precoated metal sheet for automobile use according to any one of (1) to (7) wherein the non-oxide ceramic particles (B) are a mixture of one or more particles selected from the group consisting of boride ceramics: $BaB_6$, $CeB_6$, $Co_2B$, CoB, FeB, $GdB_4$, $GdB_6$, $LaB_4$, $LaB_6$, $Mo_2B$, MoB, $MoB_2$, $Mo_2B_5$, $Nb_3B_2$, NbB, $Nb_3B_4$, $NbB_2$, $NdB_4$, $NdB_6$, $PrB_4$, $PrB_6$, $SrB_6$, TaB, $TaB_2$, TiB, $TiB_2$, VB, $VB_2$, $W_2B_5$, $YB_4$, $YB_6$, $YB_{12}$, and $ZrB_2$, carbide ceramics: MoC, $Mo_2C$, $Nb_2C$, NbC, $Ta_2C$, TaC, TiC, $V_2C$, VC, WC, $W_2C$, and ZrC, nitride ceramics: $Mo_2N$, $Nb_2N$, NbN, ScN, $Ta_2N$, TiN, and ZrN, and silicide ceramics: $CoSi_2$, $Mo_3Si$, $Mo_5Si_3$, $MoSi_2$, $NbSi_2$, $Ni_2Si$, $Ta_2Si$, $TaSi_2$, TiSi, $TiSi_2$, $V_5Si_3$, $VSi_2$, $W_3Si$, $WSi_2$, ZrSi, and $ZrSi_2$.

(9) The precoated metal sheet for automobile use according to any one of (1) to (8) wherein the anti-corrosive pigment (C) comprises one or more types selected from silicate compounds, phosphate compounds, vanadate compounds, and metal oxide microparticles (D).

(10) The precoated metal sheet for automobile use according to (9) wherein the metal oxide microparticles (D) comprises one or more types of metal elements selected from the group consisting of Si, Ti, Al, and Zr.

(11) The precoated metal sheet for automobile use according to any one of (1) to (10) wherein among the metal oxide microparticles (D), the ratio (D1/B) of the total volume of the metal oxide nanoparticles (D1) with a particle diameter of 1 nm to 100 nm in the coat ($\alpha$) to the total volume of the non-oxide ceramic particles (B) is 20 or less.

(12) The precoated metal sheet for automobile use according to any one of (1) to (11) wherein the content of the non-oxide ceramic particles (B) in the coat ($\alpha$) at 25°C is 0.5 to 65 vol%.

(13) The precoated metal sheet for automobile use according to any one of (1) to (12) wherein the coat ($\alpha$) has a thickness of 2 to 30 $\mu$m.

(14) The precoated metal sheet for automobile use according to any one of (1) to (13) wherein the coat ($\alpha$) is formed by coating a water-based coating composition. Advantageous Effects of Invention

According to the present invention, by just adding specific electroconductive particles and an anti-corrosive pigment to a coat, a sufficient precoated metal sheet for automobile use which is excellent in resistance weldability, corrosion resistance, and formability can be provided. Further, the above electroconductive particles are stable over a long period of time in an acidic or alkali aqueous solution, neutral water, and various non-water-based media, so it is possible to freely select a suitable water-based or solvent-based coating composition for obtaining the coat of the present invention.

Brief Description of Drawings

[FIG. 1] FIG. 1 is a schematic view of the cross-section of precoated metal sheet for automotive use of the present invention.

[FIG. 2] FIG. 2 gives cross-sectional photographs of precoated metal sheets. FIG. 2(a) is a surface layer cross-section SEM of a precoated metal sheet, while FIG. 2(b) is a cross-sectional SEM photograph of an overlapping part of precoated metal sheets which judges the pressure applied at the welding electrode.

[FIG. 3] FIG. 3 is a schematic view which shows the state of precoated metal sheets for automobile use at the time

of welding.

[FIG. 4] FIG. 4 is a schematic view which shows metal oxide microparticles (D) which deposit around non-oxide ceramic particles (B) or are sandwiched between non-oxide ceramic particles (B) and obstruct electrical conduction.

Description of Embodiments

Below, the present invention will be explained in detail.

Metal Sheet

The precoated metal sheet of the present invention is a metal sheet in which a specific electroconductive coat covers at least part of the surface. This metal sheet may in accordance with the application be covered by a coat on both surfaces of the metal sheet or be covered on only one surface. Further, part of a surface may be covered or all of a surface may be covered. The portion of a metal sheet which is covered by a coat is excellent in resistance weldability, corrosion resistance, and formability.

The metal which forms a metal sheet which can be used for the precoated metal sheet of the present invention can, for example, contain aluminum, titanium, zinc, copper, nickel, steel, etc. The composition of the metal is not particularly limited. For example, in the case of use of steel, it may be ordinary steel or steel which contains chrome or other added elements. However, the metal sheet of the present invention is press-formed, so in the case of each metal sheet, it is preferable to suitably control the type and amount of the added elements and the metal structure so as to give the desired formability.

Further, when using steel sheet as a metal sheet, its surface may have a covering plating layer, but the type is not particularly limited. As the applicable plating layer, for example, plating which contains any of zinc, aluminum, cobalt, tin, or nickel and alloy plating which contains these metal elements and other metal elements and nonmetal element etc. may be mentioned. In particular, as a galvanized layer, for example, a plating comprised of zinc, an alloy plating of zinc and at least one type of element of aluminum, cobalt, tin, nickel, iron, chromium, titanium, magnesium, and manganese, or various galvannealed platings which contain further other metal elements and nonmetal elements (for example, a quarternary alloy plating of zinc, aluminum, magnesium, and silicon) may be mentioned, but the alloy components other than zinc are not particularly limited. Furthermore, these plating layers may further contain small amounts of different metal elements or impurities constituted by cobalt, molybdenum, tungsten, nickel, titanium, chromium, aluminum, manganese, iron, magnesium, lead, bismuth, antimony, tin, copper, cadmium, arsenic, etc. or silica, alumina, titania, or other inorganic substances in dispersions.

As an aluminum-based plating layer, aluminum plating or an alloy plating of aluminum and at least one type of element of silicon, zinc, and magnesium (for example, an alloy plating of aluminum and silicon, an alloy plating of aluminum and zinc, and a ternary alloy plating of aluminum, silicon, and magnesium), etc. may be mentioned.

Furthermore, a double-layer plating comprised of the plating and another type of plating, for example, iron plating, an alloy plating of iron and phosphorus, nickel plating, and cobalt plating combined together may also be applied.

The method of forming the plating layer is not particularly limited. For example, electroplating, electroless plating, hot dip coating, vapor deposition plating, dispersion plating, etc. may be used. The plating method may be either the continuous type or batch type. Further, when using steel sheet, as the treatment after plating, treatment for obtaining uniform appearance after hot dip coating, that is, zero spangle treatment, treatment for modifying the plating layer, that is, annealing treatment, temper rolling for adjusting the surface conditions or material properties, etc. are possible, but the present invention is not particularly limited to these. Any may be applied.

Coat ($\alpha$)

The coat ($\alpha$) which covers the metal sheet of the present invention is formed on at least one surface of the metal sheet and includes an organic resin (A), non-oxide ceramic particles (B) which are selected from borides, carbides, nitrides, and silicides and which have an electrical resistivity at 25°C of $0.1\times10^{-6}$ to $185\times10^{-6}$ $\Omega$cm, and anti-corrosive pigment (C).

The coat is not limited in type of coating solvent and method of formation on the metal sheet surface and method of curing so long as able to be industrially produced by coating the coating composition. Below, in the present invention, the coating composition for obtaining the coat ($\alpha$) will be referred to as the coating composition ($\beta$). As the coating composition ($\beta$), a water-based coating composition and organic solvent-based coating composition may be mentioned.

In the present invention, the "water-based coating composition" means a composition which is comprised using a "water-based medium" which contains water in an amount of at least 50 mass% of the medium. Further, the "organic solvent-based coating composition" means a composition which is comprised using an "organic solvent-based medium" which contains organic solvent in an amount of at least 50 mass% of the medium as a whole.

As components of the above "water-based medium" other than water, for example, ones which are highly

miscible with water such as sulfuric acid, nitric acid, hydrochloric acid, phosphoric acid, boric acid, hydrofluoric acid, and other inorganic acids, metal salts or ammonium salts or other inorganic salts of these inorganic acids which dissolve in water, silicates, thiosulfates, thiocyanates, and other inorganic compounds which dissolve in water, and organic compounds which are miscible with water may be mentioned. Further, in accordance with need, it is also possible to add an organic medium to the above "water-based medium". However, from the viewpoint of labor health, in the "water-based coating composition" of the present invention, it is preferable to adjust the types and amounts added of the organic medium so that the coating composition does not fall under organic solvents such as defined by the Japanese Labor Safety and Sanitation Law Enforcement Order (Regulations for Prevention of Poisoning by Organic Solvents, Chapter 1, Article 1) etc. (type 1 organic solvents, type 2 organic solvents, type 3 organic solvents, and the organic solvents contained in other media in over 5 mass%).

As the method of forming a film on a metal sheet, for example, in the case of a water-based or solvent-based coating composition, the method of using the roll coat, groove roll coat, curtain flow coat, roll curtain coat, dip, air knife, or other known coating method to coat the metal sheet with a coating composition ($\beta$), then drying off the moisture or solvent of the wet coat is preferable. As the method of curing such a dried coat, polymerization and curing by heating and baking the organic resin in the coat are preferable. If the resin in the coat can be polymerized by ultraviolet rays, polymerization or curing by irradiation by ultraviolet rays may be used, while if the resin in the coat can be polymerized by electron beams, polymerization or curing by irradiation by electron beams may be used.

For the purpose of further improving the adhesion of the coat ($\alpha$) to the metal sheet, the corrosion resistance, etc., it is possible to provide a chromate-free primer film between the coat and metal sheet surface. When providing a primer film, the number and composition of the layers are not limited, but to prevent the workability and corrosion resistance of the coat ($\alpha$) when forming the metal sheet from being impaired, the primer film has to be excellent in adhesion with the metal sheet and the upper layer coat ($\alpha$). Further, to secure sufficient electroconductivity in the film thickness direction, the primer film thickness is preferably made 0.5 $\mu$m or less.

When providing a primer film, the method of forming the primer film is not limited so long as a method of film formation which can be industrially applied. As the method of forming the primer film, a method such as coating a composition for primer use, vapor deposition, adhering a film, etc. may be illustrated, but from the viewpoint of the film-forming cost (productivity), general applicability, etc., the method of coating and drying a water-based or solvent-based composition for primer use is preferable. When using a water-based or solvent-based composition for primer use, it is possible to form a double-layer coat by repeatedly coating and drying each layer from a bottommost layer to a surfacemost layer of a plurality of coats including a primer film. Further, as a method of forming the coat on a metal sheet surface simply and efficiently, it is also possible to form a film by the lamination method comprising a step of successively or simultaneously forming double layers of coats of the different layers from the bottommost layer which is contiguous with the metal sheet surface to the surfacemost layer in a wet state (wet-on-wet coating or multilayer simultaneous coating step of coating composition), a drying step of simultaneously drying off the moisture or solvent of the layer films in the wet state, and a film forming step of curing the double-layer coat, in that order. Here, the "wet-on-wet coating method" is the method of coating a coating on a metal sheet, then coating another coating on top of this while in the medium-containing state (wet state) before the coating dries and simultaneously drying off the medium of the laminated coating which is obtained and curing the coating to prepare a film. Further, the "multilayer simultaneous coating method" is the method of using a multilayer slide type curtain coater or slot die coater etc. so as to simultaneously coat a plurality of layers of coating in a laminated state on the metal sheet, then simultaneously drying off the medium of the laminated coating and curing the coating to form a film.

The coat ($\alpha$) which covers the metal sheet of the present invention includes a later explained organic resin (A), non-oxide ceramic particles (B) which have a specific range of electrical resistivity, an anti-corrosive pigment (C), or, furthermore, in accordance with need, a surfactant etc. which is explained in the section on "Preparation of Coating Composition ($\beta$)". The content of the non-oxide ceramic particles (B) in such a coat ($\alpha$) at 25°C is preferably 0.5 to 65 vol%. From the viewpoint of securing the electrical conduction at the time of resistance welding, corrosion resistance, and formability, 1 to 40 vol% is more preferable, while 2 to 20 vol% is further preferable. From the viewpoint of securing sufficient corrosion resistance and formability plus sufficient resistance weldability, a range of 4 to 20 vol% is particularly preferable.

In the precoated metal sheet of the present invention, the reason why the coat ($\alpha$) exhibits a good electroconductivity is believed to be because, in the coat ($\alpha$), the electroconductive particles constituted by the non-oxide ceramic particles (B) do not aggregate much at all but are sufficiently uniformly dispersed over the entire coat surface and electrical conduction paths to the underlying metal sheet do not segregate inside the coat. If the electroconductive particles aggregate in the coat, it is difficult for electrical conduction paths to be formed inside the coat in the state uniformly scattered across the coat surface as a whole and it is easy for regions with no electrical conduction paths at all and obstructing resistance welding to be formed inside the coat. In such a case, to secure conduction paths, a greater amount of electroconductive material has to be added and the possibility rises of good corrosion resistance and formability no longer being able to be maintained. In the precoated metal sheet of the present invention, the possibility of such a

problem occurring is extremely low.

If the content of (B) in the coat (α) exceeds 65 vol%, sufficient electroconductivity can be maintained, but coat peeling and galling easily occur at the time of press-forming, good formability cannot be maintained, and portions from which the coat peels off are liable to fall in corrosion resistance. Further, if it exceeds 65 vol%, the amount of the electroconductive particles which are dispersed in the coat becomes greater, so the electrical connection points increase too much, corrosion current extremely easily flows, and the corrosion resistance of the coat as a whole is liable to become insufficient even in the copresence of the anti-corrosive pigment (C).

Note that, with addition of electroconductive particles in an amount of 0.5 vol% to less than 1 vol% of the coat, there is a possibility that the electrical conductivity will become insufficient at the time of resistance welding. Further, with addition of electroconductive particles in an amount of 40 vol% to 65 vol% of the coat, the formability and the corrosion resistance sometimes become insufficient, so addition at the volume ratio of (B) 1 vol% to less than 40 vol% is more preferable. Further, even with addition of electroconductive particles in an amount of 1 vol% to less than 2 vol% of the coat, there is a possibility that the electrical conductivity at the time of resistance welding will become somewhat insufficient. Further, even with addition of electroconductive particles in an amount of 20 vol% to less than 40 vol% of the coat, there is a possibility that the formability and the corrosion resistance will become somewhat insufficient, so addition of 2 vol% to less than 20 vol% is more preferable. However, with addition of electroconductive particles in an amount of 2 vol% to less than 4 vol% of the coat, if greatly changing the resistance welding conditions, constantly high stable weldability is liable to become unable to be secured, so addition of 4 vol% to less than 20 vol% is particularly preferable.

If the content of (B) in the coat (α) is less than 0.5 vol%, the amount of non-oxide ceramic particles which disperse in the coat is small, so good electroconductivity cannot be secured. Depending on the thickness of the coat (α), the coat is liable to not be able to be given sufficient resistance weldability. Here, the electroconductivity was explained from the viewpoint of the amount of non-oxide ceramic particles filled in the coat (α) (vol%), but at the time of resistance welding, the amount (number) of the non-oxide ceramic particles in the precoated metal sheet surface also affect the electroconductivity (that is, weldability). This point will be explained later.

The thickness of the coat (α) which covers the metal sheet of the present invention is preferably 2 to 30 μm thick in range, more preferably 3 to 15 μm thick in range. If less than 2 μm thick, the coat becomes too thin and sufficient corrosion resistance sometimes cannot be obtained. If the coat thickness exceeds 30 μm, the amount of the coating composition (β) which is used increases and the manufacturing cost rises. Not only this, the coat sometimes fractures due to aggregation or peels off at the time of press-forming. Further, a thick film causes the electrical insulating property in the film thickness direction to rise and makes resistance welding difficult. Furthermore, when using a water-based coating composition, the possibility rises of pinholes or other coat defects occurring. It is not easy to stably obtain the appearance required as an industrial product.

The thickness of the coat (α) can be measured by examining the cross-section of a coat etc. In addition, the mass of the coat which is deposited per unit area of a metal sheet can be calculated by division by the specific gravity of the coat or the specific gravity of the coating composition (β) after drying. The deposited mass of the coat can be suitably determined by existing techniques such as the difference in mass before and after coating, the difference in mass before and after peeling of the coat after coating, the amount of the elements of contents in the coat known in advance measured by fluorescent X-ray analysis of the coat, etc. The specific gravity of the coat or the specific gravity of the coating composition (β) after drying can be suitably determined by existing techniques such as measurement of the volume and mass of the isolated coat, measurement of the volume and mass after taking a suitable amount of coating composition (β) in a container and drying it, or calculation from the amount of the coat components and the known specific gravities of the components.

Organic Resin (A)

The organic resin (A) of the present invention is a binder component of the coat (α). It may be either of a water-based or an organic solvent-based resin. It includes the later explained resin (A1) or the further added reaction derivative (A2) of the resin (A1).

The coating composition (β) which is used for forming the coat (α) in the present invention may be used either water-based or organic solvent-based and includes the later explained resin (A1) in 50 to 100 mass% of the nonvolatile constituents. The resin (A1) is stably present in the coating composition (β). If coating such a coating composition (β) on a metal sheet and heating it, in many cases, the resin (A1) dries as it is without reacting. When the coating composition (β) contains a silane coupling agent, curing agent, cross-linking agent, etc., at least part of the resin (A1) reacts with these to form a derivative (A2) of the resin (A1). Therefore, in this case, the unreacted resin (A1) and the reaction derivative (A2) of the resin (A1) are included. These become the binder ingredient of the coat (α), that is, the organic resin (A).

The type of the resin (A1) is not particularly limited. For example, a polyurethane resin, polyester resin, epoxy

resin, (meth)acrylic resin, polyolefin resin, phenol resin, or these modified products etc. may be mentioned. One or more may also be mixed for use as the resin (A1), or one or more organic resins which are obtained by modifying at least one type of organic resin may also be mixed for use as the resin (A1). The reason why it is not particularly necessary to limit the type of the resin (A1) in the present invention in this way is that even if making the coat ($\alpha$) electroconductive and enabling a corrosion current to easily flow, the anti-corrosive pigment (C) is copresent, so it is not necessary to make the binder ingredient of the coat a special corrosion resistant resin.

Various resins can be used as the resin (A1). As the resin (A1), a polyurethane resin, modified polyurethane resin, mixed polyurethane resin, mixtures of these with other resins, etc. are preferably used. The urethane group (-NHCOO-) in the polyurethane resin has a higher molecular cohesive energy (8.74 kcal/mol) compared with many other organic groups, so if the resin (A1) includes a polyurethane resin, there is the effect that the coat becomes tougher and, at the time of press-forming, coat peeling or galling become harder and in addition the relatively high cohesive energy causes the coverage of corrosive factors (density of coat) to improve and raises the corrosion resistance. Organic groups other than urethane groups, for example, methylene groups ($-CH_2-$), ether groups (-O-), secondary amino groups (imino groups, -NH-), ester groups (-COO-), and benzene rings have molecular cohesive energies of respectively 0.68 kcal/mol, 1.00 kcal/mol, 1.50 kcal/mol, 2.90 kcal/mol, and 3.90 kcal/mol. The urethane groups (-NHCOO-) have considerably higher molecular cohesive energies compared with these. For this reason, in many cases, a coat which includes a polyurethane resin is tougher and higher in corrosion resistance compared with many other resins, for example, costs comprised of polyester resins, (meth)acrylic resins, polyolefin resins, phenol resins, etc.

If the resin (A1), as already explained, is stably present in the coating composition ($\beta$), it is not particularly limited in type. It is preferably a resin which includes, in the structure of the resin (A1), at least one type of functional group which is selected from a carboxyl group (-COOH), carboxylate group ($-COO^-M^+$, where $M^+$ is a monovalent cation), sulfonic acid group ($-SO_3H$), a sulfonate group ($-SO_3^-M^+$; where $M^+$ is a monovalent cation), primary amino group ($-NH_2$), secondary amino group ($-NHR^1$; where $R^1$ is a hydrocarbon group), tertiary amino group ($-NR^1R^2$; where $R^1$ and $R^2$ are hydrocarbon groups), quaternary ammonium salt group ($-N^+R^1R^2R^3X^-$; where $R^1$, $R^2$, and $R^3$ are hydrocarbon groups, $X^-$ is a monovalent anion), sulfonium salt group ($-S^+R^1R^2X^-$; where $R^1$ and $R^2$ are hydrocarbon groups, $X^-$ is a monovalent anion), and phosphonium salt group ($-P^+R^1R^2R^3X^-$; where $R^1$, $R^2$, and $R^3$ are hydrocarbon groups, $X^-$ is a monovalent anion). Details and specific examples will be explained later.

Note that, in the present invention, the resin which is used in the coating composition ($\beta$) for obtaining the coat ($\alpha$) may include a water-soluble or solvent-soluble type resin which completely dissolves in water or an organic solvent and a resin which uniformly finely disperses in water or a solvent in the form of an emulsion, suspension, etc. (water-dispersing resin or solvent-dispersing resin). Further, here, "(meth)acrylic resin" means an acrylic resin and methacrylic resin.

Among the resins (A1), the polyurethane resin is not particularly limited. For example, one which is obtained by reacting a polyol compound and polyisocyanate compound and then extending it by a chain extender etc. may be mentioned. The polyol compound is not particularly limited so long as a compound which contains two or more hydroxyl groups per molecule. For example, ethylene glycol, propylene glycol, diethylene glycol, 1,6-hexanediol, neopentyl glycol, triethylene glycol, glycerin, trimethylol ethane, trimethylol propane, polycarbonate polyol, polyester polyol, bisphenol hydroxypropyl ether, and other polyether polyols, polyester amide polyol, acryl polyol, polyurethane polyol, or their mixtures may be mentioned. The polyisocyanate compounds are not particularly limited so long as compounds which have two or more isocyanate groups per molecule. For example, hexamethylene diisocyanate (HDI) and other aliphatic isocyanates, isophoron diisocyanate (IPDI) and other alicyclic diisocyanates, tolylene diisocyanate (TDI) and other aromatic diisocyanates, diphenyl methane diisocyanate (MDI) and other aromatic aliphatic diisocyanates, or mixtures of the same may be mentioned. The chain extender is not particularly limited so long as a compound which contains one or more active hydrogens in a molecule. Ethylene diamine, propylene diamine, hexamethylene diamine, diethylene triamine, dipropylene triamine, triethylene tetramine, tetraethylene pentamine, and other aliphatic polyamines, tolylene diamine, xylylene diamine, diamino diphenyl methane, and other aromatic polyamines, diaminocyclohexyl methane, piperadine, 2,5-dimethyl piperadine, isophoron diamine, and other alicyclic type polyamines, hydrazine, dihydrazide succinate, dihydrazide adipate, dihydrazide phthalate, and other hydrazines, hydroxyethyl diethylene triamine, 2-[(2-aminoethyl)amino]ethanol, 3-aminopropanediol, and other alkanol amines etc. may be mentioned.

When desiring to obtain a water-based polyurethane resin, for example, at the time of production of a resin, it is possible to mention one which is obtained by replacing at least part of the polyol compound with a polyol compound which contains a carboxyl group, making it react with the polyisocyanate compound to introduce a carboxyl group in the resin chain, then neutralizing the carboxyl group by a base to obtain a water-based resin. Alternatively, at the time of production of a resin, it is possible to replace at least part of the polyol compound with a polyol compound which has a secondary amino group or tertiary amino group in its molecule, react it with the polyisocyanate compound to introduce the secondary amino group or tertiary amino group into the resin chain, then neutralize it by acid to obtain a water-based resin. When the resin chain has a tertiary amino group, it is possible to introduce an alkyl group into the tertiary amino group to quaternarize it and obtain a water-based cationic resin which has a quaternary ammonium salt group. These

compounds can be used alone or in mixtures of two or more types.

In this way, the polyurethane resin which can be used as the resin (A1) is not particularly limited. As the resin (A1), it is preferable to use a polyurethane resin which does not have aromatic rings or has few aromatic rings. Such a polyurethane resin has a glass transition temperature which is lower than a polyurethane resin which contains numerous aromatic rings, so the mobility of the molecular chain is high and the film formability at the time of forming a film tends to be excellent. Further, the elongation deformation rate of the coat is high, so the workability at the time of press-forming is often better than a polyurethane resin which contains numerous aromatic rings. Therefore, the polyol compound, polyisocyanate compound, and chain extender which are used for the production of a resin are not particularly limited, but it is preferable to use aliphatic or alicyclic compounds not containing aromatic rings or aromatic aliphatic or aromatic alicyclic or other compounds with few aromatic rings.

Among the resins (A1), the polyester resin is not particularly limited. For example, one which is obtained by dehydrating and polycondensing ethylene glycol, 1,3-propanediol, 1,2-propanediol, propylene glycol, diethylene glycol, 1,6-hexanediol, neopentyl glycol, triethylene glycol, bisphenol hydroxypropyl ether, 2-methyl-1,3-propanediol, 2,2-dimethyl-1,3-propanediol, 2-butyl-2-ethyl 1,3-propanediol, 1,4-butanediol, 2-methyl-1,4-butanediol, 2-methyl-3-methyl-1,4-butanediol, 1,5-pentanediol, 3-methyl-1,5-pentanediol, 1,6-hexanediol, 1,4-cyclohexane dimethanol, 1,3-cyclohexane dimethanol, 1,2-cyclohexane dimethanol, hydrated bisphenol A, dimer diol, trimethylol ethane, trimethylol propane, glycerin, pentaerythritol or other polyols, phthalic acid, phthalic acid anhydride, tetrahydrophthalic acid, tetrahydrophthalic acid anhydride, hexahydrophthalic acid, hexahydrophthalic acid anhydride, methyltetraphthalic acid, methyltetrahydrophthalic acid anhydride, isophthalic acid, terephthalic acid, succinic acid anhydride, adipic acid, sebacic acid, maleic acid, maleic acid anhydride, itaconic acid, fumaric acid, hymic acid anhydride, trimellitic acid, trimellitic acid anhydride, pyromellitic acid, pyromellitic acid anhydride, azeleic acid, succinic acid, succinic acid anhydride, lactic acid, dodecenyl succinic acid, dodecenyl succinic acid anhydride, cyclohexane-1,4-dicarboxylic acid, enoic acid anhydride, and other polyhydric carboxylic acids may be mentioned. Furthermore, ones which are obtained by neutralizing these by ammonia or an amine compound etc. to obtain water-based resins etc. may be mentioned.

Among the resins (A1), the epoxy resin is not particularly limited. For example, it may be obtained by reacting a bisphenol A type epoxy resin, bisphenol F type epoxy resin, resorcinol type epoxy resin, hydrogenated bisphenol A type epoxy resin, hydrogenated bisphenol F type epoxy resin, resorcinol type epoxy resin, novolac type epoxy resin, or other epoxy resin with diethanolamine, N-methylethanolamine, or another amine compound. Furthermore, ones which are obtained by neutralizing these by an organic acid or inorganic acid to obtain water-based resins, ones which are obtained by radical polymerizing high acid value acrylic resins in the presence of the above epoxy resins, then neutralizing them by ammonia or amine compounds etc. to obtain water-based resins, etc. may be mentioned.

Among the resins (A1), the (meth)acrylic resin is not particularly limited. For example, one which is obtained by radical polymerizing ethyl (meth)acrylate, 2-ethylhexyl (meth)acrylate, n-butyl (meth)acrylate, and other alkyl (meth)acrylates, 2-hydroxyethyl (meth)acrylate and other hydroxyalkyl (meth)acrylates, alkoxysilane and (meth)acrylate and other (meth)acrylic acid esters together with (meth)acrylic acid in water using a polymerization initiator may be mentioned. The polymerization initiator is not particularly limited. For example, potassium persulfate, ammonium persulfate, and other persulfates, azobis cyanovaleric acid, azobis isobutylonitrile, and other azo compounds etc. may be used. Here, "(meth)acrylate" means acrylate and methacrylate, while "(meth)acrylic acid" means acrylic acid and methacrylic acid.

Among the resins (A1), the polyolefin resin is not particularly limited. For example, one which is obtained by radical polymerizing ethylene and methacrylic acid, acrylic acid, maleic acid, fumaric acid, itaconic acid, crotonic acid, and other unsaturated carboxylic acids under high temperature and high pressure may be mentioned. Further, one which is obtained by further neutralizing these by ammonia or an amine compound, KOH, NaOH, LiOH, or other basic metal compound or ammonia or an amine compound etc. containing the metal compounds to obtain water-based resins etc. may be mentioned.

Among the resins (A1), the phenol resin is not particularly limited. For example, one which is obtained by reacting phenol, resorcin, cresol, bisphenol A, p-xylylenedimethyl ether, and other aromatic compounds with formaldehyde in the presence of a reaction catalyst by an addition reaction to obtain a methylolated phenol resin or other phenol resin and reacting this with diethanolamine, N-methylethanolamine, or another amine compound etc. may be mentioned. Furthermore, one which is obtained by neutralizing these by an organic acid or inorganic acid to obtain a water-based resin etc. may be mentioned.

The resin (A1) may be used as a single type or two or more types mixed together. Further, as the main ingredient of the coating composition (β), it is possible to modify at least part of the resin (A1) in the presence of at least one type of resin (A1) to obtain a composite resin and combine one or more types to obtain the resin (A1).

Furthermore, in accordance with need, when preparing the coating composition (β) which contains the resin (A1), while explained in detail below, it is possible to add a curing agent or cross-linking agent of the resin (A1) or introduce a cross-linking agent in the resin structure. The cross-linking agent is not particularly limited. For example, at least one type of cross-linking agent which is selected from the group comprising an amino resin, polyisocyanate compound, blocked polyisocyanate, epoxy compound, carbodiimide group-containing compound, etc. may be mentioned. By mixing these cross-linking agents, it is possible to increase the cross-linked density of the coat (α) or the adhesion to a metal surface and the corrosion resistance and coat flexibility at the time of working are improved. These cross-linking agents may be used as single types or two or more types may be jointly used.

The amino resin is not particularly limited. For example, a melamine resin, benzoguanamine resin, urea resin, glycoluril resin, etc. may be mentioned.

The polyisocyanate compound is not particularly limited, but, for example, hexamethylene diisocyanate, isophoron diisocyanate, xylylene diisocyanate, tolylene diisocyanate, etc. may be mentioned. Further, the blocked polyisocyanate is a blocked form of a polyisocyanate compound.

The epoxy compound is not particularly limited so long as a compound which has a plurality of three-member cyclic ether groups, that is, epoxy groups (oxirane groups). For example, an adipic acid diglycidyl ester, phthalic acid diglycidyl ester, terephthalic acid diglycidyl ester, sorbitan polyglycidyl ether, pentaerythritol polyglycidyl ether, glycerin polyglycidyl ether, trimethylpropane polyglycidyl ether, neopentylglycol polyglycidyl ether, ethylene glycol diglycidyl ether, polyethylene glycol diglycidyl ether, propyleneglycol diglycidyl ether, polypropyleneglycol diglycidyl ether, 2,2-bis-(4'-glycidyloxyphenyl)propane, tris(2,3-epoxypropyl)isocyanulate, bisphenol A diglycidyl ether, hydrogenated bisphenol A diglycidyl ether, etc. may be mentioned. Most of these epoxy compounds have glycidyl groups of epoxy groups to which single groups of $-CH_2-$ are added, so the compound names include the term "glycidyl".

As the carbodiimide group-containing compound, for example, one which is obtained by synthesizing a polycarbodiimide having isocyanate end by a condensation reaction accompanying removal of carbon dioxide of aromatic diisocyanate, aliphatic diisocyanate, alicyclic diisocyanate, and other compounds, then adding hydrophilic-based segments which have functional groups which have reactivity with isocyanate groups etc. may be mentioned.

The amount of the cross-linking agent is preferably 1 to 40 parts by mass with respect to 100 parts by mass of the resin (A1) for forming the coat (α). If less than 1 part by mass, the amount of addition is insufficient and the effect of addition may not be obtained, while if an amount which exceeds 40 parts by mass, the coat becomes brittle due to excessive curing and the corrosion resistance or the workability at the time of forming may fall.

As already explained, in the present invention, the anti-corrosive pigment (C) is copresent in the coat (α), so along with the electroconductivity of the coat, there is no particular need to make the resin which forms the coat a specific high corrosion resistance resin. However, to increase the corrosion resistance of the coat and expand the scope of application of the precoated metal sheet of the present invention, the organic resin (A) particularly preferably contains the resin (A1) alone or further additionally contains its derivative expressed by the following general formula (I) of the resin ($A2_{Si}$) in a total of 50 to 100 mass% of the organic resin (A).

General Formula (I)

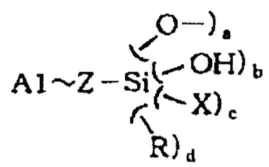

(where, the notation "A1" indicates the resin (A1), "Z-" indicates a hydrocarbon chain having $C_1$ to $C_9$, $N_0$ to $N_2$, $O_0$ to $O_2$, and the notation "A1~Z" indicates a covalent bond of "A1" and "Z" through the functional groups of the two. Further, "-O-" is an ether bond, "-OH" is a hydroxyl group, "-X" is a $C_1$ to $C_3$ hydrolyzable alkoxy group, hydrolyzable halogeno group, or hydrolyzable acetoxy group, "-R" is a $C_1$ to $C_3$ alkyl group, and "a", "b", "c", and "d" which show the numbers of substituent all each integers of 0 to 3, where a+b+c+d=3).

As already explained, the coating composition (β) which is used to form the coat (α) of the present invention includes the resin (A1) in 50 to 100 mass% of the nonvolatile constituents. The nonvolatile constituents other than the resin (A1) which are contained in the coating composition (β) are the anti-corrosive pigment (C), silane coupling agent (s), curing agent, cross-linking agent, etc. which are explained in detail later. The content of these compounds in the coat (α) after formation, as explained later, is a preferable range with respect to the resin (A1) alone or the total with ($A2_{Si}$), so when preparing a coating composition (β) which contains these compounds, the contents are adjusted so that these fall in the preferable range of content in the coat (α) after formation.

In the present invention, the resin ($A2_{Si}$) which is contained in the organic resin (A) is, for example, obtained by coating and drying a coating composition (β) which contains the resin (A1) and silane coupling agent (s) on the metal sheet which is used in the present invention. In general, a silane coupling agent can chemically bond with a metal surface which has hydroxyl groups or other functional groups and can chemically bond with numerous functional organic resin, so enables cross-linking of the metal surface and functional organic resins and cross-linking between molecules or in

molecules of functional organic resins in the copresence of a metal surface, functional organic resin, and silane coupling agent. In the present invention, by coating and drying the coating composition (β) which contains the resin (A1) and silane coupling agent (s) on a metal sheet, at least part of the functional groups of the resin (A1) and at least part of the functional groups of the metal surface react with the silane coupling agent (s) whereby the resin ($A2_{Si}$) is produced. Part of the -O-(ether bonds) or -OH (hydroxyl groups) of the resin ($A2_{Si}$) which is shown in the general formula (I) are bonded with the metal surface. When providing a primer film between the coat (α) and the metal sheet surface, at least part of the -O- (ether bonds) or -OH (hydroxyl groups) of the resin ($A2_{Si}$) which is shown in the general formula (I) bonds with the primer film surface. The bonds between the ether bonds and the metal surface and the bonds between the ether bonds and the primer-forming components are covalent bonds, while the bonds between the hydroxyl groups and metal surface and the bonds between the hydroxyl groups and primer film-forming components in most cases are hydrogen bonds or coordinate bonds. Due to such chemical bonds between the film-forming resin and metal surface or the chemical bonds between the upper layer film-forming resin and primer film, the adhesion between the two rises and the film exhibits excellent workability when the metal sheet is deformed in the forming process, so the appearance of the worked parts is not impaired and the corrosion resistance of the worked parts is improved.

When providing a primer film between the coat (α) which is obtained by coating and drying the coating composition (β) which contains the silane coupling agent (s) and the metal sheet surface, as already explained, it is also possible to form double-layer films by the sequential coating method of repeatedly coating and drying each layer from the primer layer to the surfacemost layer. Further, as a method for simply and efficiently forming a film on the surface of metal sheet, the above wet-on-wet method or multilayer simultaneous coating method may be used. With these methods, a laminated state between the bottommost layer and the surfacemost layer is formed once on the metal sheet in a water-containing or solvent-containing state (wet state). In such a state, the mobility of the silane coupling agent (s) which is contained in the surfacemost layer is high, so at least part of the silane coupling agent (s) efficiently reacts with the functional compounds which are contained in the primer layer directly underneath. Due to these chemical bonds (promotion of interlayer cross-linking), the adhesion between the surfacemost layer and primer layer tends to rise compared with the case of the sequential coating method. The film flexibility when the metal sheet is deformed in the forming process and the corrosion resistance of the worked parts are improved compared with the case of forming a film by the sequential coating method.

In the present invention, the silane coupling agent (s) which is used for forming the resin ($A2_{Si}$) of the general formula (I) can be one or more types of agents which are selected from silane coupling agents which have molecular structures which are shown by the general formula $Y\text{-}Z\text{-}SiX_mR_{3-m}$. Among the functional groups in the molecular structure, the -X groups which become reaction points with the metal surface and other silane coupling agents are $C_1$ to $C_3$ hydrolyzable alkoxy groups or hydrolyzable halogeno groups (fluoro groups (-F), chloro groups (-Cl), bromo groups (-Br), etc.), or hydrolyzable acetoxy groups ($-O-CO-CH_3$). Among these, $C_1$ to $C_3$ hydrolyzable acetoxy groups are preferable since it is easy to adjust the hydrolyzability by changing the number of carbon atoms of the alkoxy groups. A methoxy group ($-OCH_3$) or ethoxy group ($-OCH_2CH_3$) are particularly preferred. A silane coupling agent where the -X group is a functional group other than the above has a low hydrolyzability of the -X group or too high a hydrolyzability, so this is not preferable in the present invention. Note that if the coating composition (β) is not water-based, to break up the hydrolysable functional group of the silane coupling agent, it is also possible to add in advance a small amount of water and further a catalyst for hydrolyzation to the coating composition (β).

The -R group in the molecular structure is a $C_1$ to $C_3$ alkyl group. If the -R group is a methyl group or ethyl group, compared to a bulky n-propyl group or isopropyl group, this does not obstruct the approach of water molecules to the -X group in the composition and the -X group is hydrolyzed relatively easily, so this is preferable. Among these, a methyl group is particularly preferable. A silane coupling agent where the -R group is a functional group other than the above is extremely low in hydrolyzability of the -X group or overly high in reactivity, so this is not preferable in the present invention.

In the molecular structure, the "m" which shows the number of the substituents is an integer of 1 to 3. The greater the number of hydrolyzable -X groups, the greater the number of reaction points with the metal surface, so the "m" which shows the number of substituents is preferably 2 or 3.

The -Z- in the molecular chain of the above silane coupling agent (s) is a $C_1$ to $C_9$, $N_0$ to $N_2$, $O_0$ to $O_2$ hydrocarbon chain. Among these, a $C_2$ to $C_5$, $N_0$ or $N_1$, $O_0$ or $O_1$ hydrocarbon chain is preferable since the balance of the dispersability and reactivity of the silane coupling agent in water or a solvent is good. If the number of carbon atoms of -Z- is 10 or more, the number of nitrogen atoms is 3 or more, or the number of oxygen atoms is 3 or more, the balance of the dispersability and reactivity of the silane coupling agent in water or a solvent becomes poor, so this is not preferable in the present invention.

In the molecular structure $Y\text{-}Z\text{-}SiX_mR_{3-m}$ of the silane coupling agent (s), the -Y group which serves as the reaction point of the functional group of the resin (A1) or other copresent resin is not particularly limited so long as reacting with the resin (A1) or other copresent resin, but from the height of the reactivity, an epoxy group, amino group, mercapto group, or methylidene group ($H_2C=$) is preferable, while an epoxy group or amino group is particularly preferable.

When forming the covering coat of the present invention, the $-SiX_m$ groups of the silane coupling agent (s) molecule which is shown by the molecular structure $Y-Z-SiX_mR_{3-m}$ react with the metal surface etc. Further, if the -Y groups react with the resin (A1) etc., the result is the resin ($A2_{Si}$) which is shown by the general formula (I). That is, at least part of the -Si-X of the ends of the silane coupling agent (s) molecule are hydrolyzed to form -Si-OH (silanol groups). At least part of that is reacted with the metal surface or hydroxyl groups of another silane coupling agent (s) molecule by dehydration and condensation. A covalent bond -Si-O-Me (Me is a metal atom) or -Si-O-Si*- (Si* is an Si atom derived from another silane coupling agent molecule) is formed through an ether bond. The -Y groups at the other ends of the silane coupling agent (s) molecules react with the functional groups of the resin (A1) to form A1~Z bonds. As a result, a resin ($A2_{Si}$) which has the structure which is shown by the following general formula (I) is obtained. After these reactions end and the resin ($A2_{Si}$) is formed, if the numbers of -O-, -OH, -X, and -R groups which are bonded with the Si atoms in this ($A2_{Si}$) are "a", "b", "c", and "d", a+b+c=m. Further, the -R groups of the silane coupling agent (s) remain at the resin (A2) without participating in the reaction, so the number of -R groups is d=3-m=3-(a+b+c), a+b+c+d=3. Note that the notation of "A1~Z" of the general formula (I) shows that A1 and Z are covalently bonded through their functional groups.

As specific examples of the silane coupling agent (s), ones which have the molecular structure which is shown by the above general formula:

$$Y-Z-SiX_mR_{3-m}$$

(-X group is a $C_1$ to $C_3$ hydrolyzable alkoxy group, hydrolyzable halogeno group, or hydrolyzable acetoxy group, the -R group is a $C_1$ to $C_3$ alkyl group, "m" which shows the number of substituents is an integer of 1 to 3, -Z- is a $C_1$ to $C_9$, $N_0$ to $N_2$, $O_0$ to $O_2$ hydrocarbon chain, and the -Y group is a functional group which reacts with the resin (A1)),
for example, vinyltrimethoxysilane, vinyltriethoxysilane, 3-aminopropyltrimethoxysilane, 3-methacryloxypropylmethyl dimethoxysilane, 3-methacryloxypropyl trimethoxysilane, 3-methacryloxypropylmethyl diethoxysilane, 3-methacryloxypropyl triethoxysilane, 3-glycidoxypropyl triethoxysilane, 3-glycidoxypropylmethyl diethoxysilane, 3-glycidoxypropyl trimethoxysilane, N-2-(aminoethyl)-3-aminopropyl trimethoxysilane, N-2-(aminoethyl)-3-aminopropyl triethoxysilane, N-2-(aminoethyl)-3-aminopropylmethyl dimethoxysilane, 2-(3,4-epoxy cyclohexyl)ethyl trimethoxysilane, N-phenyl-3-aminopropyl trimethoxysilane, 3-mercaptopropyl trimethoxysilane, etc. may be mentioned.

In the present invention, when forming a coat ($\alpha$) which contains an organic resin (A) on a metal surface, the coating composition ($\beta$) which is used preferably contains the silane coupling agent (s) in 1 to 100 parts by mass with respect to 100 parts by mass of the resin (A1). If less than 1 part by mass, the amount of the silane coupling agent (s) is small and the cross-linked structure by the silane coupling agent does not develop that much, so there is a possibility that a sufficiently dense coat cannot be obtained and the corrosion resistance will become somewhat insufficient or a possibility that the working adhesion with the metal surface at the time of forming will become insufficient. If over 100 parts by mass, the effect of improvement of adhesion becomes saturated and expensive silane coupling agent has to be used more than required, so this is not economical. Not only that, the coating composition ($\beta$) is sometimes lowered in stability.

The organic resin (A) in the present invention preferably contains the resin (A1) alone or furthermore additionally the resin ($A2_{Si}$) in a total of 50 to 100 mass% of the resin (A), more preferably a total of the resin (A1) and the resin ($A2_{Si}$) of 75 to 100 mass% of the organic resin (A). If the total of the resin (A1) and the resin ($A2_{Si}$) is less than 50 mass% of the organic resin (A), the density of the coat and the adhesion with a metal surface may be insufficient and the desired corrosion resistance or coat adhesion and coat flexibility at the time of forming may not be able to be obtained.

In the present invention, the coat ($\alpha$) which includes the resin (A1) and the resin ($A2_{Si}$) preferably includes Si atoms which form -C-Si-O- bonds in the resin ($A2_{Si}$) in an amount of 0.1 to 30 parts by mass with respect to 100 parts by mass of the total of the resins (A1) and ($A2_{Si}$). If less than 0.1 part by mass, the amount of the -C-Si-O- bonds which govern the denseness of the coat, the adhesion with a metal surface etc., and the coat flexibility when forming the metal sheet is small and a sufficient corrosion resistance or adhesion may not be obtained. Further, if exceeding 30 parts by mass, the effect of improvement of adhesion with the metal surface etc. becomes saturated and an expensive silane coupling agent has to be used more than necessary for forming the coat, so this is uneconomical and causes the coating composition ($\beta$) to drop in stability. Note that, the Si atoms which form the -C-Si-O- bonds may be identified and quantified by using the FT-IR spectrum of the coat on the metal sheet or the $^{29}Si$-NMR or other method of analysis.

As already explained, the resin (A1) is contained as one ingredient of the coating composition ($\beta$) which is used for formation of the coat ($\alpha$) of the present invention in an amount of 50 to 100 mass% of the nonvolatile constituents. After the coat ($\alpha$) is formed by coating this on a metal sheet, the organic resin (A) in the coat contains the resin (A1) or furthermore additionally contains its reaction derivative (A2). The resin (A1), as already explained, is not particularly limited in type or structure so long as one which is stably present in a water-based or organic solvent-based coating composition ($\beta$). Its structure preferably contains at least one type of functional group which is selected from a carboxyl group (-COOH), carboxylate group ($-COO^-M^+$, where $M^+$ is a monovalent cation), sulfonic acid group ($-SO_3H$), a sulfonate group ($-SO_3^-M^+$; where $M^+$ is a monovalent cation), primary amino group ($-NH_2$), secondary amino group ($-NHR^1$; where

$R^1$ is a hydrocarbon group), tertiary amino group ($-NR^1R^2$; where $R^1$ and $R^2$ are hydrocarbon groups), quaternary ammonium salt group ($-N^+R^1R^2R^3X^-$; where $R^1$, $R^2$, and $R^3$ are hydrocarbon groups, and $X^-$ is a monovalent anion), sulfonium salt group ($-S^+R^1R^2X^-$ where $R^1$ and $R^2$ are hydrocarbon groups, and $X^{-=}$ is a monovalent anion), phosphonium salt group $-P^+R^1R^2R^3X^-$; where $R^1$, $R^2$, and $R^3$ are hydrocarbon groups, and $X^-$ is a monovalent anion). That is, the organic resin (A) in the coat ($\alpha$) preferably includes the resin (A1) which includes at least one type of functional group selected from the above carboxyl group, carboxylate group, sulfonic acid group, sulfonate group, secondary amino group, tertiary amino group, quaternary ammonium salt group, sulfonium salt group, and phosphonium salt group (below, in the present invention, referred to overall as "group of polar functional groups") in its structure or furthermore a derivative (A2) of that resin.

The reason why it is preferable that the resin (A1) contains the group of polar functional groups in its structure will be explained below.

The coating composition ($\beta$) contains the resin (A1) which forms at least part of the organic resin (A) after film formation. When the coating composition ($\beta$) is water-based, if there is a group of polar functional groups in the low polarity structure of the resin (A1) mainly comprised of a hydrocarbon chain during the storage of the coating composition ($\beta$) or in an environment with a large amount of water right after coating, the group of polar functional groups which exhibit high polarity and extremely high hydrophilicity extend in the water and hydrate with the surrounding water. As a result, the resin (A1) easily stably disperses in the coating composition ($\beta$). Further, this group of polar functional groups are adsorbed at the surfaces of the non-oxide ceramic particles (B) which are present in the coating composition and have the effect of preventing aggregation of non-oxide ceramic particles (B) and maintaining dispersion.

In general, a water-based coating composition differs from an organic solvent-based coating composition in that during storage of the coating composition or right after coating, it contains a large amount of water and is highly polar, but if the water evaporates in the process of forming the coat, the polarity environment in the coating composition greatly changes from a high polarity to a low polarity. In the case of the present invention, there is a group of polar functional groups in the structure of the resin (A1), so if water evaporates during the coat forming process and the polarity sharply drops, at least part of the group of polar functional groups will desorb from the hydrated water or metal surface and contract into coil shapes. On the other hand, the low polarity resin chain parts of the resin (A1) extend, a 3D barrier layer is formed, and this acts to prevent aggregation of non-oxide ceramic particles (B).

In this way, if there is a group of polar functional groups which are high in polarity and exhibit extremely high hydrophilicity in a low polarity structure of the resin (A1) mainly comprised of a hydrocarbon chain, according to the change in polarity in the coating composition (coat) during storage of the water-based coating composition or at the time of formation of the coat, the groups or chains which match with that polarity extend and the dispersability of non-oxide ceramic particles is easily maintained.

When the coating composition ($\beta$) is an organic solvent-based one, if there is the group of polar functional groups which are high in polarity and exhibit extremely high hydrophilicity in a low polarity structure of the resin (A1) mainly comprised of a hydrocarbon chain, these are adsorbed at the surfaces of the non-oxide ceramic particles (B) which are present in the coating composition. Further, in the organic solvent, the low polarity resin chain part of the resin (A1) extends and the groups of polar functional groups in the resin structure are separated from each other, so there is the effect that aggregation of non-oxide ceramic particles (B) is prevented and the dispersability is maintained in the coating composition or in the process of formation of the coat.

As other merits of the resin (A1) containing the above group of polar functional groups, by the inclusion of these functional groups, improvement of the adhesion with the base material constituted by the metal sheet (when there is a primer film, that film), and improvement of the corrosion resistance of the coat ($\alpha$), the workability of the coat at the time of forming (coat adhesion, crack resistance, color fading resistance, etc. of worked parts at the time of press-forming the metal sheet), scratch resistance, etc. may be mentioned.

The sulfonic acid group is a functional group which is expressed by the structural formula $-SO_3H$. Further, the sulfonate group is a functional group which is expressed by the structural formula $-SO_3^-M^+$ ($M^+$ is a monovalent cation) and neutralizes a sulfonic acid group by alkali metals, amines including ammonia, etc.

When the resin (A1) is a polyester resin which contains a sulfonic acid group or sulfonate group in its structure, there is no limit on the polyol, polyhydric carboxylic acid, sulfonic acid group-containing compound, or sulfonate group-containing compound which is used as a material for synthesis of the resin. As the polyol and polyhydric carboxylic acid, ones already illustrated can be used. Further, as the sulfonic acid group-containing compound, for example, 5-sulfoisophthalic acid, 4-sulfonaphthalene-2,7-dicarboxylic acid, 5(4-sulfophenoxy)isophthalic acid, or other sulfonic acid group-containing dicarboxylic acids or 2-sulfo-1,4-butanediol, 2,5-dimethyl-3-sulfo-2,5-hexyldiol, or other diols etc. can be used. As the sulfonate group-containing compound, for example, 5-sulfosodium isophthalic acid, dimethyl 5-sulfosodium isophthalate, etc. can be used. If desiring to obtain a resin where the sulfonic acid groups are neutralized, it is possible to introduce already neutralized sulfonic acid groups into the resin or introduce sulfonic acid groups into the resin, then neutralize them. If the coating composition ($\beta$) is water-based, to make the resin be uniformly and finely dispersed in water, it is preferable that the number of sulfonate groups which are neutralized by alkali metals, amines including

ammonia, etc. be greater than the number of sulfonic acid groups which are not neutralized. The reason is that sulfonate groups which are neutralized by alkali metals, amines including ammonia, etc. are easily dissociated and hydrated in water, so resins which contain a large amount of these groups in the structure easily uniformly finely disperse in water. Among these, metal sulfonate groups which are neutralized by Li, Na, K, and other alkali metals are particularly preferable since they inhibit aggregation of non-oxide ceramic particles (B) during storage of the water-based coating composition (β) or in an environment with a large amount of water right after coating and raise the adhesion of the coat (α) and the base material. A sodium sulfate group is most preferable.

The amount of use of the dicarboxylic acid which contains sulfonic acid groups or sulfonate groups or diol is preferably a total of the dicarboxylic acid which contains sulfonic acid groups or sulfonate groups or diol of 0.1 to 10 mol% with respect to the total polyhydric carboxylic acid components or total polyol components. If less than 0.1 mol%, during storage of the water-based coating composition (β) or in an environment with a large amount of water right after coating, there are few sulfonic acid group and sulfonate group parts for stabilizing dispersion of a resin which contains carboxyl groups or sulfonic acid groups or sulfonate groups. There is a possibility that sufficient resin dispersability cannot be obtained. Further, since the amount of the sulfonic acid groups and sulfonate groups which are adsorbed on the non-oxide ceramic particles (B) which are copresent in the coating composition is small, sometimes the effect of prevention of aggregation of non-oxide ceramic particles is insufficient. Further, since the amount of the sulfonic acid groups and sulfonate groups which act on the base material of the metal sheet (of primer layer if there is a primer) is small, sometimes the effect of improvement of the adhesion or corrosion resistance cannot be obtained. If over 10 mol%, due to the sulfonic acid groups and sulfonate groups, sometimes the amount of moisture which the coat holds increases and the corrosion resistance falls. If considering the balance of performance, 0.5 to 5 mol% in range is more preferable.

The carboxyl group is a functional group which is expressed by the structural formula -COOH. Further, a carboxylate group is a functional group which is expressed by the structural formula $-COO^-M^+$ ($M^+$ is a monovalent cation) which neutralizes a carboxyl group by an alkali metal, an amine including ammonia, etc.

When the resin (A1) is a polyester resin which contains a carboxyl group or carboxylate group in its structure, the method of introducing the carboxyl group or carboxylate group into the polyester resin is not particularly limited. For example, the method of polymerizing the polyester resin, then adding under ordinary pressure in a nitrogen atmosphere one or more compounds selected from trimellitic acid anhydride, phthalic acid anhydride, pyromellitic acid anhydride, succinic acid anhydride, 1,8-naphthalic acid anhydride, 1,2-cyclohexane dicarboxylic acid anhydride, cyclohexane-1,2,3,4-tetracarboxylic acid-3,4-anhydride, ethylene glycol bisanhydrotrimellitate, 5-(2,5-dioxotetrahydro-3-furanyl)-3-methyl-3-cyclohexene-1,2-dicarboxylic acid anhydride, naphthalene-1,4,5,8-tetracarboxylic acid dianhydride, etc., the method of charging these acid anhydrides to the polyester in the oligomer state before polymerizing it, then polymerizing it by polycondensation under reduced pressure, etc. may be mentioned.

When using a resin where the carboxyl groups are neutralized, it is possible to introduce already neutralized carboxyl groups into the resin or introduce carboxyl groups into the resin, then neutralize them. When the coating composition (β) is water-based, to make the resin be uniformly and finely dispersed in water, it is preferable that the number of carboxylate groups which are neutralized by alkali metals, amines including ammonia, etc. be greater than the number of carboxyl groups which are not neutralized. The reason is that carboxylate groups which are neutralized by alkali metals, amines including ammonia, etc. are easily dissociated and hydrated in water, so resins which contain a large amount of these groups in the structure easily uniformly finely disperse in water.

The amount of introduction of the carboxyl groups or carboxylate groups is not particularly limited. The acid value, which corresponds to the total amount of the carboxyl groups and carboxylate groups, is preferably 0.1 to 50 mgKOH/g in range. If less than 0.1 mgKOH/g, there are few carboxyl group parts for stabilizing the dispersion of the resin which contains carboxyl groups or sulfonic acid groups and there is a possibility that sufficient resin dispersability cannot be obtained during storage of the water-based coating composition (β) or in an environment with a large amount of water right after coating. Further, since the amount of carboxyl groups or carboxylate groups which are adsorbed at the non-oxide ceramic particles (B) which are copresent in the coating composition is small, sometimes the effect of prevention of aggregation of the non-oxide ceramic particles becomes insufficient. Further, since the amount of the carboxyl groups and carboxylate groups which act on the base material of the metal sheet (of primer layer if there is a primer) is small, sometimes the effect of improvement of the adhesion or corrosion resistance cannot be obtained. If the acid value is over 50 mgKOH/g, due to the carboxyl groups or carboxylate groups, sometimes the amount of moisture which the coat holds increases and the corrosion resistance falls. If considering the balance of performance, an acid value of 0.5 to 25 mgKOH/g in range is more preferable.

The primary amino group, secondary amino group, tertiary amino group, and quaternary ammonium salt group are respectively functional groups expressed by $-NH_2$, $-NHR^1$, $-NR^1R^2$, and $-N^+R^1R^2R^3X^-$. $R^1$, $R^2$, and $R^3$ are hydrocarbon groups, while $X^-$ is a monovalent anion.

When the resin (A1) includes a primary amino group or secondary amino group (imino group), the method of introducing these groups to the resin structure is not particularly limited. For example, the method of condensation polymerizing urea, melamine, hexamethoxymethyl melamine, benzoguanamine, or other compound which has two or

more primary amino groups with formaldehyde and etherifying part or all of the methylol groups of the obtained product by methanol, ethanol, butanol, or other lower alcohol to obtain an amino resin etc. may be mentioned.

When the resin (A1) is a cationic resin which contains a secondary amino group, tertiary amino group, or a quaternary ammonium salt group, the method when introducing functional groups into the resin structure is not particularly limited. For example, the method of making a primary, secondary, or tertiary amine compound react with the three-member cyclic ether group, that is, epoxy group (oxirane group), in the epoxy resin chain and introducing secondary amino group, tertiary amino group, and quaternary ammonium group to the resin chain etc. may be mentioned. Furthermore, a resin where these groups are neutralized by an organic acid, inorganic acid, etc. to obtain a water-based resin etc. may be mentioned.

The structural formulas of the secondary amino group, tertiary amino group, quaternary ammonium salt group, sulfonium salt group, and phosphonium salt group are respectively $-NHR^1$, $-NR^1R^2$, $-N^+R^1R^2R^3X^-$, $-S^+R^1R^2X^-$, and $-P^+R^1R^2R^3X^-$ where $R^1$, $R^2$, and $R^3$ are hydrocarbon groups and $X^-$ is a monovalent anion. $R^1$, $R^2$, $R^3$, and, $X^-$ are not particularly limited so long as the resin which has the functional groups is stably present in the coating composition (β), the coatability on the metal sheet and the film formability are excellent, and the precoated metal sheet after film formation is excellent in resistance weldability, corrosion resistance, and formability.

As $R^1$, $R^2$, and $R^3$, for example, a $C_1$ to $C_{18}$ linear chain or branched alkyl group, alkyl group which is substituted by an aryl group, hydroxyl group, or alkoxy group, aryl group, or arakyl group may be mentioned. As specific examples, a methyl, ethyl, propyl, butyl, pentyl, hexyl, heptyl, octyl, dodecyl group or other alkyl group, phenyl, tolyl, xylyl group, or other aryl group, benzyl, phenetyl, or other arakyl group, a group substituted by a hydroxyl group, alkoxyl group, etc. may be mentioned. $R^1$, $R^2$, and $R^3$ may be the same groups or different groups. As $X^-$, for example, fluorine, chlorine, bromine, iodine, or other halide ions, sulfuric acid ions, phosphoric acid ions, perchloric acid ions, etc. may be mentioned.

The organic resin (A) is preferably a resin which is cured by a curing agent. The curing agent is not particularly limited so long as one which cures the organic resin (A). Among those which are already illustrated as cross-linking agents of the resin (A1), at least one type of cross-linking agent which is selected from one amino resin, that is, a melamine resin, or polyisocyanate compounds may be use as the curing agent.

The melamine resin is a resin wherein part or all of the methylol groups of the products which are obtained by condensation of melamine and formaldehyde are etherified by methanol, ethanol, butanol, or other lower alcohol. The polyisocyanate compound is not particularly limited. For example, the hexamethylene diisocyanate, isophoron diisocyanate, xylylene diisocyanate, tolylene diisocyanate, etc. which have been already illustrated as cross-linking agents of the resin (A1) may be mentioned. Further, as the block product, a blocked polyisocyanate compound, that is, blocked hexamethylene diisocyanate, blocked isophoron diisocyanate, blocked xylylene diisocyanate, blocked tolylene diisocyanate, etc. may be mentioned. These curing agent may be used alone or may be used as two or more types combined.

The content of the curing agent is preferably 5 to 35 mass% of the organic resin (A). If less than 5 mass%, bake curing is insufficient and the corrosion resistance and scratch resistance sometimes fall, while if over 35 mass%, the bake curability becomes excessive and the corrosion resistance and workability sometimes fall.

From the viewpoint of scratch resistance of the coat (α), the curing agent preferably contains a melamine resin. The content of the melamine resin is preferably 30 to 100 mass% of the curing agent. If less than 30 mass%, the obtained coat (α) sometimes falls in scratch resistance.

Non-Oxide Ceramic Particles (B) In the present invention, as the electroconductive particles in the coat (α), non-oxide ceramic particles (B) are used. In the present invention, even when the coating composition (β) for obtaining the coat (α) is a water-based composition, these non-oxide ceramic particles (B) do not degrade in composition and a high conduction ability is permanently maintained. For this reason, excellent resistance weldability can be maintained for an extremely long period compared with electroconductive particles which degrade due to moisture, for example, base metal particles, ferrosilicon particles, etc.

The non-oxide ceramic which forms the non-oxide ceramic particles (B) which are contained in the coat (α) of the present invention is a boride ceramic, carbide ceramic, nitride ceramic, or silicide ceramic with an electrical resistivity at 25°C (volume resistivity, specific resistance) of $0.1 \times 10^{-6}$ to $185 \times 10^{-6}$ Ωcm in range. The "non-oxide ceramic" referred to here is a ceramic comprised of elements or compounds not containing oxygen. Further, the boride ceramics, carbide ceramics, nitride ceramics, and silicide ceramics referred to here are respectively non-oxide ceramics having boron B, carbon C, nitrogen N, and silicon S as main nonmetal component elements. Among these, none are found with electrical resistivities at 25°C of less than $0.1 \times 10^{-6}$ Ωcm. Further, when the electrical resistivity at 25°C of a non-oxide ceramic (volume resistivity, specific resistance) exceeds $185 \times 10^{-6}$ Ωcm, it is necessary to add a large amount of the ceramic to the coat so as to impart sufficient electroconductivity to the resin coat. When press-forming the precoated metal sheet of the present invention, remarkable coat peeling or galling occurs and the corrosion resistance falls, so this is unsuitable.

The non-oxide ceramic particles (B) which are contained in the coat (α) of the present invention have a high electroconductivity, so the amount of addition for imparting sufficient electroconductivity to a resin coat can be made smaller and as a result the corrosion resistance and formability of the precoated metal sheet are detrimentally affected. Note that for reference, the electrical resistivity of pure metal is $1.6 \times 10^{-6}$ Ωcm (Ag alone) to $185 \times 10^{-6}$ Ωcm (Mn alone)

in range. It is learned that the non-oxide ceramic which is used as electroconductive particles in the present invention (electrical resistivity $0.1\times10^{-6}$ to $185\times10^{-6}$ Ωcm) has an excellent electroconductivity of the same extent as pure metal.

As the non-oxide ceramic which can be used in the present invention, the following can be illustrated. That is, as boride ceramics, borides of Group IV (Ti, Zr, Hf), Group V (V, Nb, Ta), and Group VI (Cr, Mo, W) transition metals of the Periodic Table, Mn, Fe, Co, Ni, rare earth elements, or alkali earth metals other than Be and Mg (Ca, Sr, Ba) can be illustrated. However, among borides of Be, ones with an electrical resistivity at 25°C of over $185\times10^{-6}$ Ωcm (for example, $Be_2B$, $BeB_6$, etc.) are not sufficient in electroconductivity, so are unsuitable for application to the present invention. Further, borides of Mg ($Mg_3B_2$, $MgB_2$, etc.) are unstable against water or acid, so are unsuitable for application to the present invention. As carbide ceramics, carbides of Group IV, Group V, and Group VI transition metals and Mn, Fe, Co, and Ni may be illustrated. However, carbides of rare earth elements or alkali earth metals (for example, $YC_2$, $LaC_2$, $CeC_2$, $PrC_2$, $Be_2C$, $Mg_2C_3$, $SrC_2$, etc.), which are liable to be hydrolyzed in a wet environment, are unsuitable for application to the present invention. As nitride ceramics, nitrides of Group IV, Group V, and Group VI transition metals or Mn, Fe, Co, and Ni may be illustrated. However, nitrides of rare earth elements or alkali earth metals (for example, LaN, $Mg_3N_2$, $Ca_3N_2$, etc.), which are liable to be hydrolyzed in a wet environment, are unsuitable for application to the present invention. As silicide ceramics, silicides of Group IV, Group V, and Group VI transition metals or Mn, Fe, Co, and Ni may be illustrated. However, silicides of rare earth elements or alkali earth metals (for example, LaSi, $Mg_2Si$, $SrSi_2$, $BaSi_2$, etc.), which are liable to react with water and produce hydrogen in a wet environment, is unsuitable for application to the present invention. Furthermore, mixtures of two or more types of compounds which are selected from these borides, carbides, nitrides, and silicides or cermets etc. obtained by mixing these ceramics with metal binders and sintering them may be illustrated.

When preparing a coat (α) from a water-based coating composition, the standard electrode potential of the metal which forms part of the cermet is preferably -0.3V or more. Resistance to water degradation is preferable. If the standard electrode potential which forms part of the cermet is less than -0.3V, if the cermet particles are present in the water-based coating composition for a long period of time, a rust layer or a thick oxide insulating layer forms at the surfaces of the particles and the particles are liable to lose electroconductivity. As examples of cermet particles which are resistant to water degradation, WC-12Co, WC-12Ni, TiC-20TiN-15WC-10$Mo_2C$-5Ni, etc. may be mentioned. The standard electrode potentials of Co and Ni are respectively -0.28V and -0.25V or both more precious than -0.3V. Each metal is resistant to water degradation.

Among the above non-oxide ceramics, Cr-based ceramics (CrB, $CrB_2$, $Cr_3C_2$, $Cr_2N$, CrSi, etc.) are disadvantageous due to fears on the environmental load. Further, Hf-based ceramics ($HfB_2$, HfC, HfN, etc.) and most rare earth element-based ceramics at the rare earth side heavier than Tb are high in price and further not available on the market, so in the present invention, it is preferable to use a non-oxide ceramic excluding these from the above group or a mixture of two or more types selected from these.

Furthermore, from the viewpoint of the existence of industrial products and stable distribution on the domestic and foreign markets, prices, electrical resistivity, etc., the following non-oxide ceramics are more preferable, that is, $BaB_6$ (electrical resistivity $77\times10^{-6}$ Ωcm), $CeB_6$ (same, $30\times10^{-6}$ Ωcm), $Co_2B$ (same, $33\times10^{-6}$ Ωcm), CoB (same, $76\times10^{-6}$ Ωcm), FeB (same, $80\times10^{-6}$ Ωcm), $GdB_4$ (same, $31\times10^{-6}$ Ωcm), $GdB_6$ (same, $45\times10^{-6}$ Ωcm), $LaB_4$ (same, $12\times10^{-6}$ Ωcm), $LaB_6$ (same, $15\times10^{-6}$ Ωcm), $Mo_2B$ (same, $40\times10^{-6}$ Ωcm), MoB (same, $35\times10^{-6}$ Ωcm), $MoB_2$ (same, $45\times10^{-6}$ Ωcm), $Mo_2B_5$ (same, $26\times10^{-6}$ Ωcm), $Nb_3B_2$ (same, $45\times10^{-6}$ Ωcm), NbB (same, $6.5\times10^{-6}$ Ωcm), $Nb_3B_4$ (same, $34\times10^{-6}$ Ωcm), $NbB_2$ (same, $10\times10^{-6}$ Ωcm), $NdB_4$ (same, $39\times10^{-6}$ Ωcm), $NdB_6$ (same, $20\times10^{-6}$ Ωcm), $PrB_4$ (same, $40\times10^{-6}$ Ωcm), $PrB_6$ (same, $20\times10^{-6}$ Ωcm), $SrB_6$ (same, $77\times10^{-6}$ Ωcm), TaB (same, $100\times10^{-6}$ Ωcm), $TaB_2$ (same, $100\times10^{-6}$ Ωcm), TiB (same, $40\times10^{-6}$ Ωcm), $TiB_2$ (same, $28\times10^{-6}$ Ωcm), VB (same, $35\times10^{-6}$ Ωcm), $VB_2$ (same, $150\times10^{-6}$ Ωcm), $W_2B_5$ (same, $80\times10^{-6}$ Ωcm), $YB_4$ (same, $29\times10^{-6}$ Ωcm), $YB_6$ (same, $40\times10^{-6}$ Ωcm), $YB_{12}$ (same, $95\times10^{-6}$ Ωcm), $ZrB_2$ (same, $60\times10^{-6}$ Ωcm), MoC (same, $97\times10^{-6}$ Ωcm), $Mo_2C$ (same, $100\times10^{-6}$ Ωcm), $Nb_2C$ (same, $144\times10^{-6}$ Ωcm), NbC (same, $74\times10^{-6}$ Ωcm), $Ta_2C$ (same, $49\times10^{-6}$ Ωcm), TaC (same, $30\times10^{-6}$ Ωcm), TiC (same, $180\times10^{-6}$ Ωcm), $V_2C$ (same, $140\times10^{-6}$ Ωcm), VC (same, $150\times10^{-6}$ Ωcm), WC (same, $80\times10^{-6}$ Ωcm), $W_2C$ (same, $80\times10^{-6}$ Ωcm), ZrC (same, $70\times10^{-6}$ Ωcm), $Mo_2N$ (same, $20\times10^{-6}$ Ωcm), $Nb_2N$ (same, $142\times10^{-6}$ Ωcm), NbN (same, $54\times10^{-6}$ Ωcm), ScN (same, $25\times10^{-6}$ Ωcm), $Ta_2N$ (same, $135\times10^{-6}$ Ωcm), TiN (same, $22\times10^{-6}$ Ωcm), ZrN (same, $14\times10^{-6}$ Ωcm), $CoSi_2$ (same, $18\times10^{-6}$ Ωcm), $Mo_3Si$ (same, $22\times10^{-6}$ Ωcm), $Mo_5Si_3$ (same, $46\times10^{-6}$ Ωcm), $MoSi_2$ (same, $22\times10^{-6}$ Ωcm), $NbSi_2$ (same, $6.3\times10^{-6}$ Ωcm), $Ni_2Si$ (same, $20\times10^{-6}$ Ωcm), $Ta_2Si$ (same, $124\times10^{-6}$ Ωcm), $TaSi_2$ (same, $8.5\times10^{-6}$ Ωcm), TiSi (same, $63\times10^{-6}$ Ωcm), $TiSi_2$ (same, $123\times10^{-6}$ Ωcm), $V_5Si_3$ (same, $115\times10^{-6}$ Ωcm), $VSi_2$ (same, $9.5\times10^{-6}$ Ωcm), $W_3Si$ (same, $93\times10^{-6}$ Ωcm), $WSi_2$ (same, $33\times10^{-6}$ Ωcm), ZrSi (same, $49\times10^{-6}$ Ωcm), $ZrSi_2$ (same, $76\times10^{-6}$ Ωcm), or mixtures of two or more ceramics which are selected from these.

Among these, non-oxide ceramics with an electrical resistivity at 25°C of $0.1\times10^{-6}$ to $100\times10^{-6}$ Ωcm are particularly preferable. The reason is that these have a higher electroconductivity than non-oxide ceramics with an electrical resistivity at 25°C of over $100\times10^{-6}$ Ωcm to $185\times10^{-6}$ Ωcm in range, so the amount of particles added to impart sufficient electroconductivity to the resin coat can be made smaller, only a few conduction paths of corrosion current which pass through the coat are formed, and the corrosion resistance does not fall much at all. Further, since the amount

of addition of particles is small, coat peeling or galling is not induced at the time of press-forming and the formability does not fall much at all.

The electrical resistivities in parentheses of the non-oxide ceramics show representative values of ceramics which are sold and used as industrial materials (documentary values). These electrical resistivities change due to the types and amounts of impurity elements which are introduced into the crystal lattice of the non-oxide ceramics, so at the time of use of the present invention, for example, it is sufficient to measure the electrical resistivity at 25°C by the four-terminal, four-probe method and constant current using Resistivity Meter Loresta EP (Mitsubishi Chemical Analytech Co., Ltd., MCP-T360) and ESP probe (diameter of flat head of terminal of 2 mm) and the constant current application system based on JIS K 7194 and confirm that it is $0.1\times10^{-6}$ to $185\times10^{-6}$ $\Omega$cm in range before use.

The particle shape of the non-oxide ceramic particles (B) is preferably a spherical particle or quasi spherical particle (for example, an ellipsoid shape, egg shape, rugby ball shape, etc.) or polyhedral particle (for example, soccer ball shape, dice shape, gem brilliant cut shape, etc.) or other such shape close to a sphere. An elongated shape (for example, rod shape, pin shape, fiber shape, etc.) or a flat shape (for example, flake shape, plate shape, slice shape, etc.) is not suited to the application of the present invention since the particles become arranged in parallel to the coat surface in the coating process, the particles settle near the interface between the base material for coating use constituted by the metal sheet (primer layer when there is a primer on the metal surface) and the coat, and it becomes difficult to form effective conduction parts which pass through the thickness direction of the coat.

The non-oxide ceramic particles (B) are not particularly limited in average particle diameter. In the coating composition ($\beta$) of the present invention, presence as volume average size 0.2 to 20 $\mu$m particles is preferable, presence as volume average size 0.5 to 12 $\mu$m particles is more preferable, and presence as volume average size 1 to 8 $\mu$m particles is particularly preferable. If the dispersed particles which have the volume average size are stably present in the coating composition ($\beta$) in the process of production of the coating composition ($\beta$), at the time of storage and transport, and in the coating process on the base material for coating use constituted by the metal sheet (primer layer when there is a primer on the metal surface), the particles may be single particles or multiple single particles which strongly aggregate to form secondary particles. In the coating process of the base material of the coating composition, the (B) particles aggregate at the time of drying and forming the coat and the volume average size in the coat can become larger.

Note that the "volume average size" which is referred to here is the average value based on volume which was found from the volume distribution data of particles. This may be found by using any generally known particle diameter distribution measurement method, but it is preferable to use the average value of the distribution of the equivalent diameter of equal volume sphere measured by the Coulter method (Pore Electrical Resistance Method). The reason is that with the Coulter method, compared with other particle diameter distribution measurement methods (for example, (a) calculation from the volume distribution obtained by the laser diffraction scattering method, (b) conversion of the circle area equivalent diameter distribution obtained by the image analysis method to a volume distribution, (c) calculation from the mass distribution obtained by the centrifugation method, etc.), there is almost no difference in measurement values due to the manufacturer or model of the measurement equipment and accurate, high precision measurement is possible. In the Coulter method, the particles being measured are suspended in an electrolyte aqueous solution, a constant current is run through the pores of a glass tube, and the negative pressure causes the particles to pass through the pores. If the particles pass through the pores, the electrical resistance of the pores increases due to the volume of the electrolyte aqueous solution from which the particles have been removed (= volume of particles). If applying a constant current, the change in resistance when the particles pass is reflected in the change of the voltage pulse, so it is possible to directly measure the volume of the individual particles by measuring the height of the voltage pulse one particle at a time. Particles are often irregular shapes, so a sphere of an equal volume to a particle is assumed and the value is converted to the diameter of that sphere =equivalent diameter of equal volume sphere). The method of measurement of the equivalent diameter of equal volume sphere by the Coulter method is well known. For example, it is described in detail in a web page on the official Internet site of Beckman Coulter (http: //www.beckmancoulter.co.jp/product/product03/Multisizer3. html (Precision Particle diameter Distribution Measurement System Multisizer 3)).

Non-oxide ceramic particles with a volume average size of less than 0.2 $\mu$m are generally more expensive than non-oxide ceramic particles with a volume average size larger than that and are rarely available on the market as industrial products. Further, the specific surface area is relatively large, so when preparing a water-based or organic solvent-based coating composition, even if using a moist dispersant, it is difficult to wet the particle surface as a whole and cause dispersion, so the result is often lumps not mixed by water or an organic solvent and should not be used in the present invention. Further, non-oxide ceramic particles with a volume average size of over 20 $\mu$m easily settle faster in a water-based or organic solvent-based coating composition compared with non-oxide ceramic particles with volume average sizes smaller than that (clear from Stokes' Law). Therefore, even if tinkering with the dispersant, it is difficult to secure dispersion stability and sometimes particles do not float up but settle in a short time making aggregation, solidification, and redispersion difficult and creating other problems, so this should not be used in the present invention.

If designating the volume average size of the non-oxide ceramic particles (B) which are dispersed in the coat

($\alpha$) as "c $\mu$m" and the thickness of the coat ($\alpha$) as "b $\mu$m", preferably the relationship of $0.5 \leq c/b \leq 1.5$ is satisfied. FIG. 1 is a schematic view of the cross-section of the precoated metal sheet for automobile use of the present invention. (A) indicates an organic resin, (B) and (B') non-oxide ceramic particles, and (C) an anti-corrosive pigment, while (y) indicates a metal sheet. (B) indicates particles with a ratio c/b of particle diameter to thickness of 0.5 or more. In this case, electroconductivity in the thickness direction is secured. (B') indicates particles with a ratio c/b of particle diameter to thickness of less than 0.5. In this case, sometimes electroconductivity is not sufficiently secured. If the ratio c/b of the particle diameter to the thickness exceeds 1.5, sometimes the corrosion resistance and press-formability will fall.

The available non-oxide ceramic particles (B) are generally usually prepared to predetermined particle diameters by pulverizing the raw materials and classifying them in accordance with need, so have a particle diameter distribution in which particles of different particle diameters are mixed together. Therefore, even if the volume average size is in the above range of particle diameter, depending on the particle diameter distribution, it may affect the weldability. In the non-oxide ceramic particles (B), the particles (B1) with volume particle diameters of 1 to 24 $\mu$m are particularly effective for obtaining good weldability.

Further, the amount of the non-oxide ceramic particles (B) at the precoated metal sheet surface also affects the weldability. In the present invention, arrangement of particle diameter 1 $\mu$m to 24 $\mu$m non-oxide ceramic particles particles (B1) at the precoated metal sheet surface in amounts of $0.8/mm^2$ to $40000/mm^2$ is preferable in the weldability of the precoated metal sheet. Particles (B) with a particle diameter less than 1 $\mu$m contribute little to weldability, while particles (B) with a particles size over 24 $\mu$m easily fall off from a coat and do not exhibit any effect on welding in particular when the film is thin. If the number if less than $0.8/mm^2$, the effect of improvement of weldability is small, while if over $40000/mm^2$, the effect of improvement of weldability with respect to the amount of addition is small.

Anti-Corrosive Pigment (C)

The anti-corrosive pigment (C) which is used in the present invention is not particularly limited in type, but it preferably includes one or more types of compounds which are selected from silicate compounds, phosphate compounds, vanadate compounds, and metal oxide microparticles (D).

Silicate compounds, phosphate compounds, and vanadate compounds can release silicic acid ions, phosphoric acid ions, vanadic acid ions, and counter cations of these anions (for example, alkali earth metal ions, Zn ions, Al ions, etc.) in the coating composition ($\beta$) or the coat ($\alpha$) when contacting the moisture or copresent substances in the composition or coat and in accordance with changes in the environment such as the pH. Among these ions, ions which are already eluted into the coating composition ($\beta$) are taken into the coat ($\alpha$) at the time of film formation. Along with the change in moisture in the coat, the contact with copresent substances and the surface of the base material, the change of the pH, etc., they are believed to form insoluble salts and a film of oxide with other atoms or groups of atoms which are copresent and suppress corrosion. Further, silicate compounds, phosphate compounds, and vanadate compounds which are taken into the coat ($\alpha$) also gradually release anions and cations in accordance with the changes in environment after coat formation, form insoluble salts and a film of oxide, and suppress corrosion.

As silicate compounds which can be used in the present invention, for example, magnesium silicate, calcium silicate, or other silicates of alkali earth metals, lithium silicate, sodium silicate, potassium silicate, and other silicates of alkali metals, aluminum silicate, etc. may be mentioned. Among these, as lithium silicate, sodium silicate, and potassium silicate, lithium silicate with a molar ratio of silicon oxide ($SiO_2$) and lithium oxide ($Li_2O$) of $0.5 \leq (SiO_2/Li_2O) \leq 8$, sodium silicate with a molar ratio of silicon oxide ($SiO_2$) and sodium oxide ($Na_2O$) of $0.5 \leq (SiO_2/Na_2O) \leq 4$, and potassium silicate with a molar ratio of silicon oxide ($SiO_2$) and potassium oxide ($K_2O$) of $0.5 \leq (SiO_2/K_2O) \leq 4$, and hydrates of these silicates can be illustrated. As specific examples of these, o-lithium silicate ($Li_4SiO_4$; $2Li_2O \cdot SiO_2$), o-hexalithium disilicate ($Li_6Si_2O_7$; $3Li_2O \cdot 2SiO_2$), lithium metasilicate ($Li_2SiO_4$; $Li_2O \cdot SiO_2$), lithium disilicate ($Li_2Si_2O_5$; $Li_2O \cdot 2SiO_2$), tetralithium heptasilicate ($2Li_2O \cdot 7SiO_2$), lithium tetrasilicate ($Li_2Si_4O_9$; $Li_2O \cdot 4SiO_2$), tetralithium nonasilicate ($2Li_2O \cdot 9SiO_2$), tetralithium quindecisilicate ($2Li_2O \cdot 15SiO_2$), and o-sodium silicate ($Na_4SiO_4$; $2Na_2O \cdot SiO_2$), sodium metasilicate ($Na_2SiO_3$; $Na_2O \cdot SiO_2$), sodium bisilicate ($Na_2Si_2O_5$; $Na_2O_2SiO_2$), sodium tetrasilicate ($Na_2Si_4O_9$; $Na_2O \cdot 4SiO_2$), o-potassium silicate ($K_4SiO_4$; $2K_2O \cdot SiO_2$), potassium metasilicate ($K_2SiO_3$; $K_2O \cdot SiO_2$), potassium bisilicate ($K_2Si_2O_5$; $K_2O \cdot 2SiO_2$), potassium tetrasilicate ($K_2Si_4O_9$; $K_2O \cdot 4SiO_2$), and hydrates of the silicates may be mentioned. Note that, most hydrates of these silicates easily gel in the hydrated state due to changes in the pH, temperature, and rest of the environment and sometimes partially polymerize to form polysilicates. The silicate compounds which can be applied in the present invention include such polysilicates as well.

As the phosphate compound which can be used in the present invention, for example, o-phosphoric acid, polyphosphoric acid (linear polymer with polymerization degree of o-phosphoric acid of up to 6 alone or as mixture of two or more types), m-phosphoric acid (cyclic polymer with polymerization degree of o-phosphoric acid of 3 to 6 alone or as mixture of two or more types), tetrametaphosphoric acid, hexametaphosphoric acid or other metal salts, phosphorus pentaoxide, monetite, triphylite, *whitlockite,* xenotime, stercorite, struvite, vivianite, and other phosphate ores, silica polyphosphate and tripolyphosphate and other commercially available composite phosphate pigments, metal salts of

phytic acid, phosphonic acid, phosphinic acid, etc., or mixtures of two or more of the same etc. may be mentioned. The o-phosphoric acid salt referred to here includes a salt of hydrogen phosphate ($HPO_4^{2-}$) and dihydrogen phosphate ($H_2PO_4^-$). Further, a polyphosphoric acid salt includes a hydrogen salt. The cationic species which forms the phosphoric acid salt is not particularly limited. For example, Co, Cu, Fe, Mn, Nb, Ni, Sn, Ti, V, Y, Zr, Al, Ba, Ca, Mg, Sr, Zn, and other metal ions, vanadyl, titanyl, zirconyl, and other oxocations may be mentioned, but Al, Ca, Mg, Mn, and Ni are preferably used. The phosphoric acid salt compounds may be used alone or as two or more types combined.

As the cationic species which forms the phosphate, use of a large amount of alkali metal is not preferred., When using a phosphate of an alkali metal, the product which is obtained by baking in an industrial production process tends to overly dissolve in water. However, when using a phosphate of an alkali metal, if possible to control the dissolution in water at the time of production of an anti-corrosive pigment, at the time of production of a coating composition, at the time of forming a film on the metal sheet, at the time of use of a precoated metal sheet, etc., use of a somewhat larger amount is also possible. Such control, for example, is performed by establishing the copresence of the anti-corrosive pigment with another additive which suppresses dissolution in water or establishing the copresence of highly cross-linked resin-based or inorganic-based polymer to control the rate of elution to water.

The vanadate compounds which can be used in the present invention are composite compounds with have atomic values of vanadium of one or more values of 0, 2, 3, 4, or 5. For example, these oxide, hydroxides, oxoates of various metals, vanadyl compounds, halides, sulfates, metal powder, etc. may be mentioned. These break down at the time of heating or in the presence of water and react with the copresent oxygen. For example, metal powder of vanadium or bivalent compounds finally change to either 3, 4, 5 values. Ones with a 0 value, for example, vanadium metal powder, can be used for the above reasons, but there are problems such as an insufficient oxidation reaction etc., so this is not practical. Hexavalent vanadium compounds have vanadic acid ions, react with phosphoric acid ions upon heating, and easily forms hetero polymers which contribute to rust proofing, so inclusion of a pentavalent vanadium compound as one ingredient is preferable. As specific examples of the vanadium compound, vanadium oxide (II), vanadium hydroxide (II), or other vanadium (II) compounds, vanadium oxide (III), and other vanadium (III) compounds, vanadium oxide (IV), vanadyl halides, or other vanadium (IV) compounds, vanadium oxide (V), vanadates (o-vanadate, m-vanadate, pyrovanadate, etc. of various metals) and other vanadium (V) compounds or mixtures of the same may be mentioned. The preferable metal species which forms the vanadate are the same as the metals which are shown for phosphates.

When using a vanadate of an alkali metal, the product which is obtained by baking in an industrial production process tends to overly dissolve in water, so in the same way as a phosphate, it is not preferable to use a large amount of vanadate of an alkali metal. However, in the same way as using a phosphate of an alkali metal, if possible to control the dissolution in water, these may also be used. The same is true for the case of halides and sulfonates of vanadium.

In the precoated metal sheet of the present invention, the total amount of the silicate compound, phosphate compound, and vanadate compound is 1 to 40 vol% of the coat ($\alpha$), preferably 1 to 20 vol%, more preferably 2 to 15 vol%. If less than 1 vol%, the silicate compound, phosphate compound, and vanadate compound insufficiently act, so the corrosion resistance sometimes falls. If over 20 vol%, the coat becomes brittle and cohesive failure of the coat occurs, so the adhesion of the coat and coat flexibility at the time of forming fall and the weldability sometimes falls.

The anti-corrosive pigment (C) preferably includes one or more types of pigment among silicate compounds, phosphate compounds, and vanadate compounds, but copresence of at least one type of compounds of phosphate compounds (phosphoric acid ion sources), silicate compounds (silicic acid ion sources), or vanadate compounds (vanadic acid ion sources) is more preferable in terms of raising the rust-proofing effect. The ratio of the total amount of the mixed phosphoric acid ion sources, silicic acid ion sources, and vanadic acid ion sources is more preferably made a ratio of [number of moles of $P_2O_5$]:[total number of moles of $SiO_2$ and $V_2O_5$] of 25:75 to 99:1. If the molar ratio of the total amount of silicic acid ion sources and the vanadic acid ion sources to the total amount of the phosphoric acid ion sources, silicic acid ion sources, and vanadic acid ion sources exceeds 75%, the rust-proofing effect due to phosphoric acid ions sometimes falls. If the molar ratio of the total amount of the silicic acid ion sources and the vanadic acid ion sources is smaller than 1%, sometimes the oxidation of the surrounding chemical species or fastening effect due to the silicic acid ions (or vanadic acid ions) becomes insufficient.

As the anti-corrosive pigment (C) which is used in the present invention, metal oxide microparticles (D) which are comprised of one or more types of metal elements which are selected from the group which is comprised of Si, Ti, Al, and Zr can be used. By using these metal oxide microparticles (D) alone or by mixing them together with a silicate compound, phosphate compound, and vanadate compound, the corrosion resistance can be improved more. If making a silicate compound, phosphate compound, and vanadate compound copresent with silica, the corrosion resistance is much further improved, so this is preferable. As the silica, for example, fumed silica, colloidal silica, aggregated silica, etc. may be mentioned. Further, calcium precipitated silica may also be used.

As the metal oxide microparticles (D) which can be used in the present invention, for example, silica microparticles, alumina microparticles, titania microparticles, zirconia microparticles, etc. may be mentioned. Metal oxide nanoparticles (D1) with a volume average size of 1 to 100 nm or so are more preferable. These may be used alone or as two or more types combined. Among these, silica nanoparticles can be added when both improvement of the corrosion

resistance of the coat and greater toughness are required.

As particle diameter 1 nm to less than 100 nm metal oxide nanoparticles (D1), for example, colloidal silica, colloidal titania, and colloidal zirconia may be used. These differ in process of production from metal oxides which are pulverized to obtain microparticles. Therefore, fine primary particles (particle diameter 1 nm to 100 nm) easily disperse in the coat of the coated metal material in the coating and after coating as they are. These metal oxide nanoparticles (D1) have a greater rust-proofing effect compared with metal oxide microparticles of the same composition but larger particle diameter. However, such metal oxide nanoparticles (D1), for example, sometimes obstruct weldability in resistance welding such as spot welding which applies a load by electrodes while welding by Joule's heat.

FIGS. 2 show photographs of cross-sections of a precoated metal sheet. FIG. 2(a) is a SEM photograph of the cross-section of the surface of a precoated metal sheet. FIG. 2(b) is a SEM photograph of the cross-section of the joined part of precoated metal sheets at the time of applying pressure by welding electrodes and shows the cross-section of the joined parts of precoated metal sheets in the state receiving pressure at the time of electrical welding. It is learned that at the arrow position, the non-oxide ceramic particles (B) pass through the coat and contact to form conduction paths.

FIG. 3 is a schematic view which illustrates the state where precoated metal sheets for automobile use are overlaid at the time of electrical welding and electrodes are used to apply a load. The position of the joined part of the precoated metal sheets which is shown in FIG. 2(b) is shown by the square frame in FIG. 3. With the precoated metal sheet for automobile use at the time of welding, two or more precoated metal sheets are overlaid and a load is applied by the welding electrodes. At that time, the electrodes and non-oxide ceramic particles (B) contact, and the non-oxide ceramic particles (B) in the coat ($\alpha$) contact or the non-oxide ceramic particles (B) and metal sheet contact to form conduction paths and thereby enable electrical resistance welding.

FIG. 4 is a schematic view which shows the state when metal oxide nanoparticles (D1) deposit around non-oxide ceramic particles (B) or are sandwiched between non-oxide ceramic particles (B) and obstruct conduction. If, in this way, particle diameter 1 nm to less than 100 nm metal oxide nanoparticles (D1) are present in large amounts in the coat ($\alpha$), the metal oxide nanoparticles (D1) obstruct conduction between the electrodes and non-oxide ceramic particles (B), between non-oxide ceramic particles (B), or between non-oxide ceramic particles (B) and metal sheet and have a detrimental effect on the weldability. For example, sometimes the electrical resistance during the welding becomes too high resulting in excessive generation of heat and splattering of the metal material or coat and consequently insufficient weld strength or degraded appearance due to deposition of splattered substances and other detrimental effects. In the more remarkable case, sometimes the electrical resistance becomes too high, so welding is not possible. Therefore, (D1) becomes too great with respect to (B) in the coat. This is not preferable for securing weldability.

The amount of the metal oxide nanoparticles (D1) is preferably one giving a ratio (D1/B) of the total volume of the metal oxide nanoparticles (D1) in the coat to the total volume of the non-oxide ceramic particles (B) of 20 or less. When stressing the weldability, 10 or less is more preferable. As the lower limit of (D1/B), 0.1 or more is preferable. If (D1/B) is less than 0.1, the amount of the non-oxide ceramic particles (B) in the coat is too great or the amount of metal oxide nanoparticles (D1) is too small. In the former case, if the amount of non-oxide ceramic particles (B) in the coat is too large, the coat becomes brittle and sometimes coat cracking or coat detachment occurs at the time of forming. Coat cracking or coat detachment lead to a drop in the corrosion resistance due to the coat and poor appearance of the precoated metal sheet. In the latter case, the amount of the metal oxide nanoparticles (D1) in the coat becomes insufficient, so the effect of improvement of the corrosion resistance sometimes cannot be sufficiently obtained. A particularly preferable range of (D1/B) is 0.5 to 6. To secure weldability, the rust-proofing action which falls due to the amount of metal oxide nanoparticles (D1) being inhibited can be corrected by adding particle diameter 100 nm or more anti-corrosive pigment (C). All or part of the particle diameter 100 nm or more anti-corrosive pigment (C) may be made particle diameter 100 nm or more metal oxide microparticles (D2). Particle diameter 100 nm or more anti-corrosive pigment (C) has a hard time entering between the electrodes and (B), between (B)'s, or between (B) and the metal sheet in a state where the coat is coated on a metal sheet or a state where the load by the welding electrodes causes the coat to deform, so the detrimental effect on electrical resistance welding is smaller compared with metal oxide nanoparticles (D1).

The amount of the anti-corrosive pigment (C) is 1 to 40 vol% of the coat ($\alpha$). The total with the amount of non-oxide ceramic particles (B) preferably does not exceed 80 vol%. When stressing the weldability of the precoated metal sheet, the amount of the anti-corrosive pigment (C) is more preferably 1 to 20 vol%, still more preferably 2 to 15 vol%. When stressing the corrosion resistance of the precoated metal sheet, the amount of the anti-corrosive pigment (C) is more preferably 3 to 40 vol%, still more preferably 7.5 to 40 vol%. When stressing the corrosion resistance of the precoated metal sheet even more, the amount of the anti-corrosive pigment (C) is more preferably 13 to 40 vol%. If less than 1 vol%, the amount of anti-corrosive pigment (C) is insufficient, so the effect of improving the corrosion resistance sometimes is not sufficiently obtained. If over 40 vol%, the coat becomes brittle and the adhesion of the coat to a metal surface falls, so at the time of forming, the coat fractures or the coal peels off thereby exposing the metal sheet whereby the appearance of the precoated metal sheet is degraded and the effect of improvement of the corrosion resistance by the coat sometimes falls.

The amount of the non-oxide ceramic particles (B), the amount of the particle diameter 1 nm to less than 100

nm metal oxide nanoparticles (D1), the amount of the particle diameter 100 nm or more anti-corrosive pigment (C), and the amount of the particle diameter 100 nm or more metal oxide microparticles (D2) can be calculated by examining the cross-section of the coat by an electron microscope to discriminate the particles, then count the numbers per cross-section and converting the numbers to numbers per coat volume. In this case, in accordance with need, it is possible to use an EDX spectrometric system etc. to differentiate the particles. It is possible to calculate the amounts of particles in the coat from the amounts of the (B), (C), (D1), and (D2) which are contained in the coating before application and the amount of deposition of a coat on the metal sheet. If the charged amounts of (B), (C), (D1), and (D2) in the coating before application are known, it is possible to calculate the amounts of particles in the coat from the charged amounts and the amount of deposition of the coating on the metal sheet. If the charged amounts are unknown, for example, the amounts can be calculated by using a Malvern Particle Image Analysis System Morphologi G3 or other system to individually discriminate and count the particles in a coating which has been diluted to a suitable concentration. This technique can also be used in the case of dissolving a coat deposited on a metal sheet and counting the number of particles.

Various anti-corrosive pigments are dissolved or dispersed in suitable amounts in the coating composition (β) and introduced to the organic resin (A) in the coat (α).

Preparation of Coating Composition (β)

The method of production of the coating composition (β) which is used for forming the coat (α) of the present invention is not particularly limited. For example, the method of adding the components for forming the coat (α) in water or an organic solvent, using a disperser or other dispersion machine to stir them, and making them dissolve, disperse, or be crushed and dispersed may be mentioned. In the case of a water-based coating composition, to improve the solubility or dispersability of the components for forming the coat (α), in accordance with need, a known hydrophilic solvent etc. may also be added.

In particular, in the case of the water-based coating composition (β), in addition to the resin (A1), the non-oxide ceramic particles (B), and the anti-corrosive pigment (C), if necessary, various water-soluble or water-dispersible additives may be added in a range not impairing the water basis or coatability of the coating. For example, various water-soluble or water-dispersible rust-proofing agents which do not take the form of pigments, a defoamer, settling preventer, leveling agent, moist dispersant, or other surfactant and thickener, viscosity adjuster, etc. may be added. Furthermore, to stabilize the resin and other organic compounds and other components of the coating composition (β), it is possible to add a small amount of organic solvent in a range not falling under the Japanese Labor Safety and Sanitation Law Enforcement Order (Regulations for Prevention of Poisoning by Organic Solvents, Chapter 1, Article 1) etc. (type 1 organic solvents, type 2 organic solvents, type 3 organic solvents, and the organic solvents contained in other media in over 5 mass%).

When forming the coat (α) of the present invention from a water-based coating composition (β), since this is water-based, the surface tension is higher compared with an organic solvent-based coating composition. When the base material constituted by the metal sheet (primer layer when there is a primer), non-oxide ceramic particles (B), or anti-corrosive pigment (C) is inferior in wettability and the base material is coated by a predetermined amount, sometimes uniform coatability and particle dispersability cannot be obtained. In such a case, the above moist dispersant or thickener may be added. As the moist dispersant, a surfactant which lowers the surface tension can be used, but a high molecular weight surfactant (high molecular weight dispersant) with a molecular weight of 2000 or more should be used. A low molecular weight surfactant can relatively easily move in a resin coat which contains moisture, so easily calls up water which was adsorbed at the polar groups of the surfactant or dissolved oxygen, dissolved salts, and other corrosive factors to the metal surface through the water, further bleeds out on its own and easily elutes, so often degrades the rust-proofness of the coat. As opposed to this, a high molecular weight surfactant can be adsorbed at multiple points on the surface of metal, ceramic particles, or a pigment, so are difficult to separate if once adsorbed. This is effective for improving the wettability at a low concentration. On top of this, since the molecules are bulky, the surfactant has a hard time moving through the resin coat and does not easily call up corrosive factors to the metal surface. Some of the acrylic resins for which addition to the organic resin (A) is recommended in the section on "Organic Resin (A)" have the function of such a high molecular weight surfactant and have the effect of suppressing settling of the non-oxide ceramic particles (B) and anti-corrosive pigment (C) in the water-based coating composition and enabling uniform dispersion.

The thickener can be added to a repelling location of the base material surface as a countermeasure when the moist dispersant alone is not enough to obtain a sufficient surface coverage or when the water-based coating composition is too low in viscosity and the necessary coat thickness cannot be secured. Ones of molecular weights of several thousand to several tens of thousands are prevalent. It is possible to have it adsorbed on multiple points on the surface of the pigment etc. The thickener itself bonds to form a weak mesh structure and can raise the viscosity of the coating composition.

When the water-based coating composition (β) contains high specific gravity non-oxide ceramic particles (B), anti-corrosive pigment (C), etc., in accordance with need, a viscosity adjuster which can impart a thixotropic property (thixotropy) to the coating may be added. The viscosity adjuster, in the same way as the case of the above thickener,

is adsorbed at multiple points on the surface of the pigment etc. in the water-based coating composition and forms a mesh structure. The viscosity adjuster has a molecular weight of an extremely high several hundreds of thousands to several millions, so forms a strong mesh structure which has a large yield value in the water-based coating composition (β). Therefore, the coating composition (β) is resistant to deformation at a low shear rate and is high in viscosity. If a large shear stress which exceeds the yield value is applied to the coating composition (β), the mesh structure breaks down and the viscosity rapidly falls. Therefore, if adding a viscosity adjuster, at the time of storage or the time of transport when the water-based coating composition (β) is held in a substantially still state, the viscosity of the coating composition (β) is raised to suppress settling of the heavy pigments etc. When being run through piping in a coating plant or when being coated on a base material and otherwise when a high shear stress (high shear rate) is applied, the viscosity of the coating composition (β) is lowered to facilitate flow.

In the case of an organic solvent-based coating composition (β), a coating composition comprised of an organic solvent in which a resin is dissolved is relatively high in viscosity and easy to adjust in viscosity. For this reason, the viscosity of the coating composition can be easily and stably held at the 100 mPa·s or more which is considered advantageous for suppressing pigment sedimentation. Further, the non-oxide ceramic which is used as an electroconductive material is a substance which has hydrophobic portions on its surface, so in general easily disperses in the organic solvent-based coating composition (β) and can be coated without the non-oxide ceramic particles (B) in the coating composition (β) settling at the time of coating, so is preferred.

If coating a coating composition with a viscosity of the organic solvent-based coating composition (β) which forms the coat of 100 to 2000 mPa·s by a roll coater or a curtain coater on a metal sheet, then baking it dry, the non-oxide ceramic particles (B) will not easily settle so this is more preferable. If the viscosity of the coating composition (β) is less than 100 mPa·s, the non-oxide ceramic particles (B) will easily settle, while if it exceeds 2000 mPa·s, the viscosity will be too high and defects in appearance at the time of coating generally called "ribbing" are liable to occur. More preferably, it is 250 to 1000 mPa·s. The viscosity of the organic solvent-based coating composition (β) can be measured by using a B-type viscosity meter at a temperature the same as the temperature of the coating composition at the time of coating by a roll coater or curtain coater.

The viscosity can be adjusted by the type of the organic solvent which is used and the amount of the medium. For the organic solvent, generally a known solvent can be used, but a high boiling point organic solvent is preferable. On the production line of the metal sheet of the present invention, the baking time is short, so if using a low boiling point solvent, coating defects generally called "boiling" are liable to occur. The boiling point of the solvent is preferably 120°C or more. As these high boiling point organic solvents, known solvents, for example, cyclohexane, the aromatic hydrocarbon-based organic solvent Sorbesso (product name of Exxon Mobil), etc. can be used.

Formation of Coat (α)

The coat (α) of the present invention, as explained in the section on "Coat (α)", is preferably obtained by coating the coating composition (β) on a metal sheet by using a roll coat, group roll coat, curtain flow coat, roller curtain coat, dip, air knife, or other known coating method, then drying off the water content or solvent content of the wet coat when the coating composition (β) is a water-based or organic solvent-based composition. Among these, in the case of a water-based or organic solvent-based UV curing type composition or an electron beam curing type composition, it is preferable to use the above coating method to coat the metal sheet, then dry off the water content or solvent content and irradiate the coat by UV rays or electron beams to cause polymerization.

The bake drying method in the case where the coating composition (β) is a water-based or organic solvent-based bake curing type composition will be specifically explained. When the coating composition (β) is a water-based or organic solvent-based bake curing type composition, the bake curing method is not particularly limited. The metal sheet may be heated in advance or the metal sheet may be heated after coating or these may be combined for drying. The heating method is not particularly limited. Hot air, induction heating, near infrared rays, direct flame, etc. may be used alone or combined.

Regarding the bake drying temperature, when the coating composition (β) is a water-based bake curing type composition, a metal sheet surface peak temperature of 120°C to 250°C is preferable, 150°C to 230°C is more preferable, and 180°C to 220°C is most preferable. If the peak temperature is less than 120°C, the coat is insufficiently cured and the corrosion resistance will sometimes fall, while if over 250°C, the bake curing will become excessive and the corrosion resistance and formability will sometimes fall. The bake drying time is preferably 1 to 60 seconds, more preferably 3 to 20 seconds. If less than 1 second, the bake curing is insufficient and the corrosion resistance will sometimes fall, while if over 60 seconds, the productivity will sometimes fall.

When the coating composition (β) is an organic solvent-based bake curing type composition, the metal sheet surface peak temperature is preferably 180°C to 260°C, more preferably 210°C to 250°C. If the peak temperature is less than 180°C, the coat curing is insufficient and the corrosion resistance sometimes falls. If over 260°C, the bake curing becomes excessive and the corrosion resistance and formability sometimes fall. The bake drying time is preferably

10 to 80 seconds, more preferably 40 to 60 seconds. If less than 10 seconds, the bake curing is insufficient and the corrosion resistance sometimes falls, while if over 80 seconds, the productivity sometimes falls.

The method of formation when the coating composition (β) is a water-based or organic solvent-based UV curing type composition or electron beam curing type composition will be specifically explained. These composition is coated by a method similar to the case of the above water-based or organic solvent-based composition, then the water content or solvent content of the wet coat is dried off, then the coat is irradiated by ultraviolet rays or electron beams. The coat is cured and forms a film starting from the radicals which are generated by irradiation by ultraviolet rays or electron beams, so the drying temperature may also be a drying temperature which is lower than the case of a bake curing type composition. In the drying process, it is preferable to make most of the moisture or solvent evaporate at a relatively low metal surface peak temperature of about 80 to 120°C and then irradiate the coat by ultraviolet rays or by electron beams.

The irradiation of ultraviolet rays for radical polymerizing and curing the UV curing type resin in the coat by ultraviolet rays is usually performed in an air atmosphere, inert gas atmosphere, mixed atmosphere of air and an inert gas, etc. In the ultraviolet curing of the present invention, irradiation by ultraviolet rays in a mixed gas atmosphere of air and an inert gas which is adjusted to an oxygen concentration of 10 vol% or less or an inert gas atmosphere is preferable. Oxygen is an inhibitor of radical polymerization, so when the concentration of atmospheric oxygen at the time of ultraviolet irradiation is low, there is little deactivation due to the addition of oxygen to the generated radicals and obstacles to a cross-linking reaction. The UV curing type composition which is used in the present invention is sufficiently polymerized through radical polymerization and cross-linking. For this reason, the adhesion to the non-oxide ceramic particles (B) and the metal sheet surface rises and as a result the corrosion resistance of the coat is improved over the case of ultraviolet curing in an air atmosphere. As the inert gas which is used here, nitrogen gas, carbon dioxide gas, argon gas, and mixed gases of these etc. may be illustrated.

By using, as the ultraviolet rays source, for example, a vapor discharge type high voltage mercury lamp, metal halide lamp, or other rare gas discharge type xenon lamp or other electrode-less lamp using microwaves etc., it is possible to irradiate ultraviolet rays. In the precoated metal sheet of the present invention, any lamp may be used so long able to sufficiently cure a UV curing type of coat and giving the desired resistance weldability, corrosion resistance, and formability. Further, in general, the peak luminance and cumulative amount of the ultraviolet rays which a coat receives governs the curability of the coat, but the ultraviolet rays irradiation conditions are not particularly limited so long as able to sufficiently cure a UV curing type of coat and give the desired corrosion resistance and formability.

When the coating composition (β) is an electron beam curing type composition, for electron beam curing, it is possible to use the usual electron beam irradiation systems which are being used in the fields of printing, painting, film coating, packaging, sterilization, etc. These apply high voltage to the hot electrons which are generated from a hot filament in a high vacuum to accelerate them, take out the obtained electron flow in an inert gas atmosphere, and use this to irradiate a polymerizable substance. In the precoated metal sheet of the present invention, it is possible to use any system so long as able to sufficiently cure an electron beam curable coat and obtain the desired resistance weldability, corrosion resistance, and formability. Further, in general, the accelerating voltage of the electron beam which the coat absorbs governs the depth to which the electron beam penetrates the coat, while the amount of absorbed beams governs the polymerization rate (curability of coat), but the conditions for irradiation of the electron beam are not particularly limited so long as possible to sufficiently cure the electron beam-curing coat and obtain the desired corrosion resistance and formability. However, in the case of radical polymerization by an electron beam, even if there is a slight amount of oxygen present, deactivation due to addition of oxygen to the generated radicals and obstacles to the cross-linking reaction occur and the curing becomes insufficient, so irradiation of electron beams in an inert gas atmosphere with an oxygen concentration of 500 ppm or less is preferable. As the inert gas which is used here, nitrogen gas, carbon dioxide gas, argon gas, and mixed gases of these etc. may be mentioned.

## Examples

### Example I

Below, the present invention will be specifically explained by Example I using a water-based coating composition.

#### 1. Preparation of Metal Sheet

The following five types of galvanized steel sheets were prepared, were dipped in a water-based alkali degreasing agent (made by Nihon Parkerizing Co., Ltd., FC-301) 2.5 mass% 40°C aqueous solution for 2 minutes to degrease the surfaces, then were rinsed and dried to obtain coating- use metal sheets.

EG: electrogalvanized steel sheet (sheet thickness 0.8 mm, plating deposition 40 g/$m^2$) ZL: Electrolytic Zn-10%Ni alloy plated steel sheet (sheet thickness 0.8 mm, plating deposition 40 g/$m^2$) GI: Hot dip galvanized steel sheet (sheet thickness 0.8 mm, plating deposition 60 g/$m^2$) SD: Hot dip Zn-11%Al-3%Mg-0.2%Si alloy plated steel sheet (sheet

thickness 0.8 mm, plating deposition 60 g/$m^2$) GA: Hot dip galvannealed steel sheet (sheet thickness 0.8 mm, 10% Fe, plating deposition 45 g/$m^2$)

2. Formation of Primer Treated Coat As explained in the section on "Coat ($\alpha$)", in the present invention, there is not necessarily a need to provide a primer treated coat between the coat ($\alpha$) and the metal sheet surface, but this is sometimes used to further improve the adhesion of the coat ($\alpha$) to the metal sheet, the corrosion resistance, etc. Here, some of the coating- use metal sheets were provided with primer treated coats.

As the coating compositions for forming the primer treatment coats, the following were prepared:

p1: Water-based coating composition comprised of Zr compound, silane coupling agent, and silica microparticles
p2: Water-based coating composition comprised of polyester resin, silica microparticles, and silane coupling agent

p1 or p2 was bar coated on the above metal sheet for coating use to give a film thickness of 0.08 $\mu$m. This was dried in a hot air furnace at a metal surface peak temperature of 70°C, then was air dried.

3. Preparation of Water-Based Coating Composition and Film Formation

To prepare a water-based coating composition, first, a resin (A1), non-oxide ceramic particles (B), electroconductive particles other than (B), anti-corrosive pigment (C), and silane coupling agent (s) were prepared.

(1) Resin (A1)

The resins A11 to A13 were synthesized and further the commercially available resins A14 and A15 were prepared. These were all resins which were used in the present invention.

<u>A11: Carboxyl Group-Containing Polyester-Based Urethane Resin (Synthesized in Production Example 1 and Recovered as Aqueous Dispersion)</u>

[Production Example 1] A 10-liter pressure resistant reaction vessel which is equipped with a stirring device, reflux cooler, nitrogen gas introduction tube, thermometer, and thermostat was charged with 2,2-dimethylol butanoic acid: 1628 g and $\varepsilon$-caprolactone: 387 2 g. A catalyst constituted by stannous chloride: 27.5 mg was added and the temperature inside the reaction vessel was held at 120°C for a reaction for 3 hours. Due to this, a hydroxyl group value 225.5 mgKOH/g and acid value 114.6 mgKOH/g liquid carboxyl group-containing polyester diol (a11) was obtained.

Next, a 2-liter reaction vessel which is equipped with a stirring device, reflux cooler, nitrogen gas introduction tube, thermometer, and thermostat was charged with 2,4-tolylene diisocyanate: 149.9 g and acetone: 140.0 g. While stirring under a nitrogen stream, the carboxyl group-containing polyester diol (a11): 124.6 g, number average molecular weight 1000 polycaprolactone diol (made by Daicel Corp., PLACCEL 210): 273.1 g, and 1,4-butanediol: 12.4 g were added. The temperature inside of the reaction vessel was held at 60°C for 4 hours to cause a urethanization reaction and prepare an urethane prepolymer having end NCO-group. This urethane prepolymer: 168.3 g was stirred while adding ion exchanged water: 230 g to which triethylamine: 6.1 g was added and further ion exchanged water: 230 g to which hexamethylene diamine: 1.67 g was added was added. Next, the acetone was distilled off under reduced pressure at 60°C over 3 hours to obtain a solid concentration 35%, acid value 24.6 mgKOH/g (converted to solid content) aqueous dispersion of the carboxyl group-containing polyester-based urethane resin (A11).

<u>A12: Sulfonic Acid Group-Containing Polyester-Based Urethane Resin (Synthesized in Production Example 2 and Recovered as Aqueous Dispersion)</u>

[Production Example 2] A pressure resistant reaction vessel which is equipped with a stirring device, reflux cooler, nitrogen gas introduction tube, thermometer, and thermostat was charged, while stirring under a nitrogen stream, with adipic acid: 1100 g, 3- methyl-1,5-pentanediol: 900 g, and tetrabutyl titanate: 0.5 g. The temperature in the reaction vessel was held at 170°C and the reaction performed until the acid value fell to 0.3 mgKOH/g or less. Next, the reaction was performed at 180°C under reduced pressure of 5 kPa or less for 2 hours to obtain a polyester with a hydroxyl group value of 112 mgKOH/g and an acid value of 0.2 mgKOH/g.

Next, a separate reaction vessel equipped in the same way as the above reaction vessel was charged with this polyester polyol: 500 g, dimethyl 5-sulfosodium isophthalate: 134 g, and tetrabutyl titanate: 2 g. In the same way as above, the mixture was stirred under a nitrogen stream while holding the temperature of the reaction vessel at 180°C for an esterification reaction to finally obtain a molecular weight 2117, hydroxyl group value 53 mgKOH/g, acid value 0.3 mgKOH/g sulfonic acid group-containing polyester (a12).

The sulfonic acid group-containing polyester (a12): 280 g, polybutylene adipate: 200 g, 1,4-butanediol: 35 g,

hexamethylene diisocyanate: 118 g, and methylethylketone: 400 g were charged into a reaction vessel equipped with a stirring device, reflux cooler, nitrogen gas introduction tube, thermometer, and thermostat under a nitrogen stream. The mixture was stirred while holding the liquid temperature at 75°C for a urethanization reaction to obtain an NCO content 1% urethane prepolymer. Next, the temperature of the reaction vessel was lowered to 40°C and the mixture was sufficiently stirred while adding ion exchanged water: 955 g uniformly dropwise for phase-transfer emulsification. Next, the inside temperature was lowered to room temperature and a hydrazide adipate aqueous solution obtained by mixing hydrazide adipate: 13 g and ion exchanged water: 110 g was added for amine extension. The solvent was distilled off under some reduced pressure at 60°C, then ion exchanged water was added to obtain a solid concentration 35% and acid value 11 mgKOH/g (converted to solid content) aqueous dispersion of a sulfonic acid group-containing polyester-based urethane resin (A12).

A13: Sulfonic Acid Group-Containing Polyester Resin (Synthesized in Production Example 3 and Recovered as Aqueous Dispersion)

[Production Example 3] A pressure resistant reaction vessel which is equipped with a stirring device, reflux cooler, nitrogen gas introduction tube, thermometer, and thermostat was charged, while stirring under a nitrogen stream, with terephthalic acid: 199 g, isophthalic acid: 232 g, adipic acid: 199 g, 5-sulfosodium isophthalic acid: 33 g, ethylene glycol: 312 g, 2,2-dimethyl-1,3-propanediol: 125 g, 1,5-pentanediol: 187 g, and tetrabutyl titanate: 0.41 g. The temperature in the reaction vessel was raised from 160°C to 230°C over 4 hours for an esterification reaction. Next, the inside of the vessel was gradually reduced in pressure to 5 mmHg over 20 minutes and further a polycondensation reaction was performed at 0.3 mmHg or less at 260°C for 40 minutes. To the obtained copolymer polyester resin: 100 g, butyl cellosolve: 20 g and methylethylketone: 42 g were added, then the mixture was stirred at 80°C for 2 hours to dissolve the components. Furthermore, 213 g of ion exchanged water was added and dispersed in water. After that, the solution was heated while distilling off the solvent to obtain an aqueous dispersion of a solid concentration 30% sulfonic acid group-containing polyester resin (A13).

A14: amino group-containing epoxy resin (made by ADEKA Corp., Adeka Resin EM-0718, aqueous solution)
A15: Nonionic polyether-based urethane resin (made by DIC Corp., Bondic 1520, aqueous dispersion)

(2) Non-Oxide Ceramic Particles (B) Commercially available microparticles (reagent) were used. The volume average size was measured by using a Beckman Coulter Multisizer 3 (precision particle diameter distribution measuring apparatus using the Coulter principle). The electrical resistivity was found by using the microparticles to prepare a length 80 mm, width 50 mm, thickness 2 to 4 mm sintered sheet and measuring it by the four-terminal, four-probe method using Resistivity Meter Loresta EP (Mitsubishi Chemical Analytech Co., Ltd., MCP-T360) and ESP probe (diameter of flat head of terminal of 2 mm) and the constant current application system based on JIS K 7194 at 25°C.

TiN: TiN microparticles (made by Wako Pure Chemical Industries, Ltd., volume average size 1.6 μm, electrical resistivity $20\times10^{-6}$ Ωcm)
TiB: $TiB_2$ microparticles (made by Kojundo Chemical Laboratory Co., Ltd., TII11PB, volume average size 2.9 μm, electrical resistivity $30\times10^{-6}$ Ωcm)
VC: VC microparticles (made by Wako Pure Chemical Industries Ltd., volume average size 2.3 μm, electrical resistivity $140\times10^{-6}$ Ωcm)
ZrB: $ZrB_2$ microparticles (made by Wako Pure Chemical Industries Ltd., volume average size 2.2 μm, electrical resistivity $70\times10^{-6}$ Ωcm)
MoB: $Mo_2B$ microparticles (made by Mitsuwa Chemicals Co., Ltd., dimolybdenum boride, volume average size 5.2 μm, electrical resistivity $30\times10^{-6}$ Ωcm)
LaB: $LaB_6$ microparticles (made by Soekawa Chemical Co., Ltd., lanthanum hexaboride, volume average size 2.8 μm, electrical resistivity $20\times10^{-6}$ Ωcm)
NiSi: $Ni_2Si$ microparticles (obtained by adding water to NII11PB made by Kojundo Chemical Laboratory Co., Ltd., stirring and suspending it, and obtaining by filtration the microparticles which float up after the elapse of 5 minutes, volume average size 4.8 μm, electrical resistivity $40\times10^{-6}$ Ωcm)
TiC: TiC microparticles (made by Wako Pure Chemical Industries Ltd., volume average size 3.2 μm, electrical resistivity $180\times10^{-6}$ Ωcm)
TiN+VC: Mixture of the TiN and the VC (volume ratio: 1:1) VC+ZrB: Mixture of the VC and the ZrB (volume ratio: 1:1)
ZrB+TiC: Mixture of the ZrB and the TiC (volume ratio: 1:1)

(3) Electroconductive Particles Other Than (B) Commercially available microparticles (reagent) were used. Among these, the particles of TaN, VN, and $CrSi_2$ (non-oxide ceramic) were measured for volume average size and electrical resistivity in the same way as the above (2). The particles of Al (aluminum), C (isotropic graphite), ZnO (electroconductive zinc oxide), and $FSi_2$ (Ferrosilicon No. 2 defined in components by JIS G 2302) were measured for volume average size in the same way as the above (2). For the electrical resistivity, the documented value was described.

TaN: TaN microparticles (made by Soekawa Chemical Co., Ltd., tantalum nitride, volume average size 3.7 μm,

electrical resistivity $205\times10^{-6}$ Ωcm) VN: VN microparticles (made by Soekawa Chemical Co., Ltd., vanadium nitride, volume average size 5.8 μm, electrical resistivity $220\times10^{-6}$ Ωcm)

CrSi: $CrSi_2$ microparticles (obtained by adding water to chromium silicide made by Soekawa Chemical Co., Ltd., stirring and suspending it, and obtaining by filtration the microparticles which float up after the elapse of 5 minutes, volume average size 4.2 μm, electrical resistivity $900\times10^{-6}$ Ωcm)

Al: Aluminum particles (made by Kojundo Chemical Laboratory Co., Ltd., ALE11PB, volume average size 3.3 μm, electrical resistivity $2.7\times10^{-6}$ Ωcm)

C: Isotropic graphite particles (made by Kojundo Chemical Laboratory Co., Ltd., CCE03PB, volume average size 6.5 μm, electrical resistivity $1200\times10^{-6}$ Ωcm)

ZnO: Electroconductive zinc oxide particles (made by Hakusui Tech, Pazet 23-K, volume average size 6.6 μm, electrical resistivity $190\times10^{-6}$ Ωcm)

FSi2: Ferrosilicon No. 2 particles (clump like product acquired from Japan Metals and Chemicals (size 5 to 50 mm, Si content 78 mass%) converted to microparticles by a jet mill for use. Volume average size 4.4 μm, electrical resistivity $1000\times10^{-6}$ Ωcm)

(4) Anti-Corrosive Pigment (C)

A commercially available reagent, industrial product, or blend of the same was used.

i1: Magnesium pyrophosphate (reagent made by Soekawa Chemical, $Mg_2P_2O_7$)

i2: Calcium silicate (reagent made by Wako Pure Chemical Industries Ltd., $CaSiO_3$)

i3: Mixture of magnesium hydrogen phosphate (made by Kanto Chemical Co. Inc., $MgHPO_4$):silica microparticles (made by Nissan Chemical Industries Ltd., Snowtex N)=50:50 (molar ratio)

i4: Magnesium hydrogen phosphate (made by Kanto Chemical Co. Inc., $MgHPO_4$)

i5: Mixture of tricalcium phosphate (made by Kanto Chemical Co. Inc., $Ca_3(PO_4)_2$): vanadium pentaoxide (made by Kanto Chemical, $V_2O_5$):silica microparticles (made by Nissan Chemical Industries Ltd., Snowtex N)=25:25:50 (molar ratio)

(5) Silane Coupling Agent (s)

s1: 3-glycidoxypropyltrimethoxysilane (made by Shin-Etsu Chemical Co., Ltd., KBM-403)

s2: 3-aminopropyltrimethoxysilane (made by Shin-Etsu Chemical Co., Ltd., KBM-903)

Next, the resin (A1), non-oxide ceramic particles (B), electroconductive particles other than (B), anti-corrosive pigment (C), silane coupling agent (s), and distilled water were used in various blending ratios to prepare water-based coating compositions.

The non-oxide ceramic particles (B), electroconductive particles other than (B), and anti-corrosive pigment (C) were mixed in desired volume ratios with respect to the total of the resin (A1), non-oxide ceramic particles (B), electroconductive particles other than (B), and anti-corrosive pigment (C) which are contained in the nonvolatile constituents of the water-based coating composition. Further, when using the silane coupling agent s1 or s2, the water-based coating composition was added to 5 parts by mass with respect to 100 parts by mass of the resin (A1) in the nonvolatile constituents. The concentration of the nonvolatile constituents of the water-based coating composition was suitably adjusted by changing the amount of addition of water so as to obtain the targeted coat deposition amount and good coatability. Here, "nonvolatile constituents" mean the components which remain after making the water or organic solvents which were mixed into the coating or composition as a medium evaporate.

Table 1 to Table 6 and Table 8 show the types of the resin (A1), non-oxide ceramic particles (B), electroconductive particles other than (B), anti-corrosive pigment (C), and silane coupling agent (s) which are contained in the nonvolatile constituents of the water-based coating composition. The contents in the coat (vol%) of the non-oxide ceramic particles (B), electroconductive particles other than (B), and anti-corrosive pigment (C) are also shown.

The water-based coating composition was prepared, the components were made to uniformly disperse, then the composition was coated on a metal sheet for coating use or a metal sheet provided with a primer film using a roll coater. This was dried by a hot air furnace at a metal surface peak temperature of 200°C, water cooled, then air dried. Tables 1 to 5 and Table 8 show the coat thickness after film formation (unit: μm). Note that, the coat thickness was calculated by dividing the difference in mass before and after peeling of the coat after coating by the coat specific gravity. The coat specific gravity was calculated from the amounts of the components which form the coat and the known specific gravities of the components.

4. Preparation of Organic Solvent-Based Coating Composition and Film Formation

To prepare the organic solvent-based coating composition, the following organic resin (A) was prepared.

An organic solvent-soluble type of amorphous polyester resin (made by Toyobo Co., Ltd., Vylon GK140) was dissolved in a mixed solvent of Exxon Mobil high boiling point aromatic hydrocarbon-based solvent Sorbesso 150:cyclohexanon=50:50 (mass ratio). Next, a curing agent (hexamethoxymethyl melamine, made by Mitsui-Cytec Co., Cymel 303): 15 parts by mass with respect to 100 parts by mass of the resin and an acid catalyst (block type of dodecylbenzene sulfonic acid, made by Mitsui-Cytec Co., Catalyst 6003B): 0.5 part by mass were added to the solution and stirred to obtain a solution of the melamine curing type polyester resin (A*).

Next, the solution of this resin (A*) and components which were prepared in the above section of "3. Water-Based Coating Composition" such as the non-oxide ceramic particles (B), electroconductive particles other than (B), anti-corrosive pigment (C), and the above mixed solvent of Sorbesso 150:cyclohexanon = 50:50 (mass ratio) were used to prepare organic solvent-based coating composition by various ratios of formulation.

In the same way as the case of the water-based coating composition, the non-oxide ceramic particles (B), electroconductive particles other than (B), and anti-corrosive pigment (C) were mixed by the desired volume ratios to the total amount of the resin (A*), non-oxide ceramic particles (B), electroconductive particles other than (B), and anti-corrosive pigment (C) which are contained in the nonvolatile constituents of the organic solvent-based coating composition. The density of the nonvolatile constituents of the organic solvent-based coating composition was suitably adjusted while changing the amount of addition of the mixed solvent so as to obtain the targeted coat deposition amount and good coatability.

Table 7 shows the types of the resin (A*), non-oxide ceramic particles (B), electroconductive particles other than (B), and anti-corrosive pigment (C) which are contained in the nonvolatile constituents of the organic solvent-based coating composition. The contents in the coat (vol%) are also shown for the non-oxide ceramic particles (B), electroconductive particles other than (B), and anti-corrosive pigment (C).

The organic solvent-based coating composition was prepared, the components were made to uniformly disperse, then the composition was coated on a metal sheet for coating use using a roll coater. This was dried by a hot air furnace at a metal surface peak temperature of 230°C, water cooled, then air dried. Table 7 shows the coat thickness after film formation (unit: μm). The coat thickness was calculated, in the same way as the case of a coat of a water-based coating composition, by dividing the difference in mass before and after peeling of the coat after coating by the coat specific gravity. The coat specific gravity was calculated from the amounts of the components which form the coat and the known specific gravities of the components.

5. Evaluation of Performance

Each precoated metal sheet which was prepared by the method of the above 3 and 4 was used to evaluate the weldability, formability, and corrosion resistance. Below, the methods of the tests and evaluation will be shown.

(1) Weldability

A continuous weldability test of spot welding was conducted using tip size 5 mm, R40 CF type Cr-Cu electrodes at a welding pressure of 1.96 kN and a welding time of 12 cycles/50Hz. The number of welds right before the nugget size crossed 3√t ("t" is the sheet thickness) was found. The following scores were used to evaluate the level of spot weldability.

5: 2000 or more welds 4: 1000 to less than 2000 welds
3: 500 to less than 1000 welds
2: Less than 500 welds
1: Nuggets not formed. Not only one spot welded

(2) Formability

A hydraulic forming tester was used to perform a tubular cup forming test which coats a working oil under conditions of a punch diameter of 50 mm, a punch shoulder radius of 3 mm, a die diameter of 50 mm, a die shoulder radius of 3 mm, a drawing ratio of 1.8, and a wrinkle suppressing pressure of 1 ton. The formability was evaluated by the following indicator:

5: No low gloss or surface defects, cracks, peeling, or other coat defects of the coat seen at all at the worked parts of the coat after forming.
4: Forming possible and slight defects or color changes seen at the worked parts of the coat, but no cracks or peeling of the coat seen at all.
3: Forming possible, but clear defects and some cracks or peeling of the coat seen at the worked parts of the coat.
2: Forming possible, but large defects or large cracks or peeling of the coat seen in the worked parts of the coat.

1: Forming not possible.

(3) Corrosion Resistance

From each precoated metal sheet which was prepared by the method of the above 3 and 4, a 150x70 mm size rectangular test piece was cut out. The ends were sealed with resin to obtain a test piece for corrosion resistance of the flat part. Further, the tubular cup shaped member of the above (2) was dipped in a water-based degreasing agent (made by Nippon Paint, EC-92) 2 mass% in a 40°C aqueous solution, degreased at its surface, rinsed and dried to obtain a test piece for evaluation of the corrosion resistance of the worked part after forming.

These test pieces were subjected to cyclic corrosion tests using the total 8 hours of 2 hours of salt spraying, 4 hours of drying, and 2 hours of wetting as one cycle. The conditions of the salt spray test were based on JIS-Z2371. The drying conditions were a temperature 60°C and a humidity 30%RH or less, while the wetting conditions were a temperature of 50°C and a humidity 95%RH or more. The inventors investigated the state of red rusting of the worked parts and used the following evaluation points to evaluate the level of the corrosion resistance of the worked parts.

5: No red rust forming at 600 cycles
4: No red rust forming at 450 cycles
3: No red rust forming at 300 cycles
2: No red rust forming at 150 cycles
1: Red rust forming at 150 cycles

Table 1 to Table 8 show the results of evaluation.

Table 1

| Precoated metal sheet no. | Metal sheet | Resin (A1) | Ceramic particles | | Anti-corrosive pigment (C) | | Silane coupling agent (s) | Coat thickness (μm) | Weldability | Formability | Corrosion resistance | | Remarks |
|---|---|---|---|---|---|---|---|---|---|---|---|---|---|
| | | | Type | Content (vol%) | Type | content (vol%) | | | | | Flat parts | Worked parts | |
| 1 | GA | A11 | TiN | 0.6 | i3 | 8.0 | - | 5.0 | 3 | 5 | 5 | 5 | Inv. |
| 2 | GA | A11 | TiN | 1.2 | i3 | 8.0 | - | 5.0 | 4 | 5 | 5 | 5 | Inv. |
| 3 | GA | A11 | TiN | 2.0 | i3 | 8.0 | - | 5.0 | 4 | 5 | 5 | 5 | Inv. |
| 4 | GA | A11 | TiN | 4.0 | i3 | 8.0 | - | 5.0 | 4 | 5 | 5 | 5 | Inv. |
| 5 | GA | A11 | TiN | 6.5 | i3 | 8.0 | - | 5.0 | 5 | 5 | 5 | 5 | Inv. |
| 6 | GA | A11 | TiN | 11 | i3 | 8.0 | - | 5.0 | 5 | 5 | 5 | 5 | Inv. |
| 7 | GA | All | TiN | 17 | i3 | 8.0 | - | 5.0 | 5 | 5 | 5 | 5 | Inv. |
| 8 | GA | A11 | TiN | 38 | i3 | 8.0 | - | 5.0 | 5 | 5 | 5 | 5 | Inv. |
| 9 | GA | A11 | TiN | 48 | i3 | 8.0 | - | 5.0 | 5 | 4 | 4 | 4 | Inv. |
| 10 | GA | A11 | TiN | 58 | i3 | 8.0 | - | 5.0 | 5 | 3 | 3 | 3 | Inv. |
| 11 | GA | A11 | - | - | i3 | 8.0 | - | 5.0 | 1 | 5 | 5 | 5 | Comp. |
| 12 | GA | A11 | TiN | 0.4 | i3 | 8.0 | - | 5.0 | 3 | 5 | 5 | 5 | Inv. |
| 13 | GA | A11 | TiN | 63 | i3 | 8.0 | - | 5.0 | 5 | 3 | 3 | 3 | Inv. |
| 14 | GA | A11 | TiN | 6.5 | i3 | 8.0 | - | 1.5 | 5 | 5 | 4 | 3 | Inv. |
| 15 | GA | A11 | TiN | 6.5 | i3 | 8.0 | - | 2.5 | 5 | 5 | 5 | 4 | Inv. |
| 16 | GA | A11 | TiN | 6.5 | i3 | 8.0 | - | 7.5 | 5 | 5 | 5 | 5 | Inv. |
| 17 | GA | A11 | TiN | 6.5 | i3 | 8.0 | - | 14 | 5 | 5 | 5 | 5 | Inv. |
| 18 | GA | A11 | TiN | 6.5 | i3 | 8.0 | - | 20 | 5 | 5 | 5 | 5 | Inv. |
| 19 | GA | A11 | TiN | 6.5 | i3 | 8.0 | - | 28 | 3 | 4 | 5 | 5 | Inv. |
| 20 | GA | A11 | TiN | 6.5 | i3 | 8.0 | - | 33 | 3 | 3 | 5 | 5 | Inv. |
| 21 | GA | A11 | TiN | 6.5 | - | - | - | 5.0 | 5 | 5 | 2 | 1 | Comp. |
| 22 | GA | A11 | TiN | 6.5 | i3 | 0.7 | - | 5.0 | 5 | 5 | 3 | 3 | Inv. |
| 23 | GA | A11 | TiN | 6.5 | i3 | 1.5 | - | 5.0 | 5 | 5 | 4 | 3 | Inv. |

(continued)

| Precoated metal sheet no. | Metal sheet | Resin (A1) | Ceramic particles | | Anti-corrosive pigment (C) | | Silane coupling agent (s) | Coat thickness (μm) | Weldability | Formability | Corrosion resistance | | Remarks |
|---|---|---|---|---|---|---|---|---|---|---|---|---|---|
| | | | Type | Content (vol%) | Type | content (vol%) | | | | | Flat parts | Worked parts | |
| 24 | GA | All | TiN | 6.5 | i3 | 3.0 | - | 5.0 | 5 | 5 | 5 | 5 | Inv. |
| 25 | GA | A11 | TiN | 6.5 | i3 | 13 | - | 5.0 | 5 | 5 | 5 | 5 | Inv. |
| 26 | GA | A11 | TiN | 6.5 | i3 | 18 | - | 5.0 | 5 | 5 | 5 | 5 | Inv. |
| 27 | GA | A11 | TiN | 6.5 | i3 | 23 | - | 5.0 | 5 | 4 | 5 | 5 | Inv. |
| 28 | GA | A11 | TiN | 0.6 | i3 | 8.0 | s1 | 5.0 | 4 | 5 | 5 | 5 | Inv. |
| 29 | GA | A11 | TiN | 1.2 | i3 | 8.0 | s1 | 5.0 | 4 | 5 | 5 | 5 | Inv. |
| 30 | GA | A11 | TiN | 2.0 | i3 | 8.0 | s1 | 5.0 | 4 | 5 | 5 | 5 | Inv. |
| 31 | GA | A11 | TiN | 4.0 | i3 | 8.0 | s1 | 5.0 | 4 | 5 | 5 | 5 | Inv. |
| 32 | GA | A1 | TiN | 6.5 | i3 | 8.0 | s1 | 5.0 | 5 | 5 | 5 | 5 | Inv. |
| 33 | GA | A11 | TiN | 11 | i3 | 8.0 | s1 | 5.0 | 5 | 5 | 5 | 5 | Inv. |
| 34 | GA | A11 | TiN | 17 | i3 | 8.0 | s1 | 5.0 | 5 | 5 | 5 | 5 | Inv. |
| 35 | GA | A11 | TiN | 38 | i3 | 8.0 | s1 | 5.0 | 5 | 5 | 5 | 5 | Inv. |
| 36 | GA | A11 | TiN | 48 | i3 | 8.0 | s1 | 5.0 | 5 | 4 | 5 | 4 | Inv. |
| 37 | GA | A11 | TiN | 58 | i3 | 8.0 | s1 | 5.0 | 5 | 3 | 4 | 3 | Inv. |
| 38 | GA | A11 | - | - | i3 | 8.0 | s1 | 5.0 | 1 | 5 | 5 | 5 | Comp. |
| 39 | GA | A11 | TiN | 6.5 | - | - | s1 | 5.0 | 5 | 5 | 3 | 2 | Comp. |
| 40 | GA | A11 | TiN | 0.6 | i3 | 8.0 | s2 | 5.0 | 3 | 5 | 5 | 5 | Inv. |
| 41 | GA | A11 | TiN | 1.2 | i3 | 8.0 | s2 | 5.0 | 3 | 5 | 5 | 5 | Inv. |
| 42 | GA | A11 | TiN | 2.0 | i3 | 8.0 | s2 | 5.0 | 4 | 5 | 5 | 5 | Inv. |
| 43 | GA | A11 | TiN | 4.0 | i3 | 8.0 | s2 | 5.0 | 5 | 5 | 5 | 5 | Inv. |
| 44 | GA | A11 | TiN | 0.6 | i1 | 8.0 | - | 5.0 | 3 | 5 | 5 | 5 | Inv. |
| 45 | GA | A11 | TiN | 1.2 | i1 | 8.0 | - | 5.0 | 4 | 5 | 5 | 5 | Inv. |
| 46 | GA | A11 | TiN | 2.0 | i1 | 8.0 | - | 5.0 | 4 | 5 | 5 | 5 | Inv. |

(continued)

| Precoated metal sheet no. | Metal sheet | Resin (A1) | Ceramic particles | | Anti-corrosive pigment (C) | | Silane coupling agent (s) | Coat thickness (μm) | Weldability | Formability | Corrosion resistance | | Remarks |
|---|---|---|---|---|---|---|---|---|---|---|---|---|---|
| | | | Type | Content (vol%) | Type | content (vol%) | | | | | Flat parts | Worked parts | |
| 47 | GA | A11 | TiN | 4.0 | i1 | 8.0 | - | 5.0 | 4 | 5 | 5 | 5 | Inv. |
| 48 | GA | A11 | TiN | 6.5 | i1 | 8.0 | - | 5.0 | 5 | 5 | 5 | 5 | Inv. |
| 49 | GA | A11 | TiN | 11 | i1 | 8.0 | - | 5.0 | 5 | 5 | 5 | 5 | Inv. |
| 50 | GA | A11 | TiN | 17 | i1 | 8.0 | - | 5.0 | 5 | 5 | 5 | 5 | Inv. |
| 51 | GA | A11 | TiN | 38 | i1 | 8.0 | - | 5.0 | 5 | 5 | 5 | 5 | Inv. |
| 52 | GA | A11 | TiN | 48 | i1 | 8.0 | - | 5.0 | 5 | 4 | 4 | 4 | Inv. |
| 53 | GA | A11 | TiN | 58 | i1 | 8.0 | - | 5.0 | 5 | 3 | 3 | 3 | Inv. |
| 54 | GA | A11 | TiN | 0.6 | i2 | 8.0 | - | 5.0 | 3 | 5 | 5 | 5 | Inv. |
| 55 | GA | A11 | TiN | 1.2 | i2 | 8.0 | - | 5.0 | 3 | 5 | 5 | 5 | Inv. |
| 56 | GA | A11 | TiN | 2.0 | i2 | 8.0 | - | 5.0 | 4 | 5 | 5 | 5 | Inv. |
| 57 | GA | A11 | TiN | 4.0 | i2 | 8.0 | - | 5.0 | 4 | 5 | 5 | 5 | Inv. |
| 58 | GA | A11 | TiN | 6.5 | i2 | 8.0 | - | 5.0 | 5 | 5 | 5 | 5 | Inv. |
| 59 | GA | A11 | TiN | 11 | i2 | 8.0 | - | 5.0 | 5 | 5 | 5 | 5 | Inv. |
| 60 | GA | A11 | TiN | 0.6 | i4 | 8.0 | - | 5.0 | 3 | 5 | 5 | 5 | Inv. |
| 61 | GA | A11 | TiN | 1.2 | i4 | 8.0 | - | 5.0 | 3 | 5 | 5 | 5 | Inv. |
| 62 | GA | A11 | TiN | 2.0 | i4 | 8.0 | - | 5.0 | 4 | 5 | 5 | 5 | Inv. |
| 63 | GA | All | TiN | 4.0 | i4 | 8.0 | - | 5.0 | 4 | 5 | 5 | 5 | Inv. |
| 64 | GA | A11 | TiN | 0.6 | i5 | 8.0 | - | 5.0 | 3 | 5 | 5 | 5 | Inv. |
| 65 | GA | A11 | TiN | 1.2 | i5 | 8.0 | - | 5.0 | 3 | 5 | 5 | 5 | Inv. |
| 66 | GA | A11 | TiN | 2.0 | i5 | 8.0 | - | 5.0 | 4 | 5 | 5 | 5 | Inv. |
| 67 | GA | A11 | TiN | 4.0 | i5 | 8.0 | - | 5.0 | 4 | 5 | 5 | 5 | Inv. |

Table 2

| Precoated metal sheet no. | Metal sheet | Resin (A1) | Ceramic particles | | Anti-corrosive pigment (C) | | Silane coupling agent (s) | Coat thickness (μm) | Weldability | Formability | Corrosion resistance | | Remarks |
|---|---|---|---|---|---|---|---|---|---|---|---|---|---|
| | | | Type | Content (vol%) | Type | Content (vol%) | | | | | Flat parts | Worked parts | |
| 68 | GA | A11 | 11C | 0.6 | i3 | 8.0 | - | 5.0 | 3 | 5 | 5 | 5 | Inv. |
| 69 | GA | A11 | VC | 1.2 | i3 | 8.0 | - | 5.0 | 3 | 5 | 5 | 5 | Inv. |
| 70 | GA | A11 | VC | 2.0 | i3 | 8.0 | - | 5.0 | 4 | 5 | 5 | 5 | Inv. |
| 71 | GA | A11 | VC | 4.0 | i3 | 8.0 | - | 5.0 | 4 | 5 | 5 | 5 | Inv. |
| 72 | GA | A11 | VC | 6.5 | i3 | 8.0 | - | 5.0 | 4 | 5 | 5 | 5 | Inv. |
| 73 | GA | A11 | VC | 11 | i3 | 8.0 | - | 5.0 | 5 | 5 | 5 | 5 | Inv. |
| 74 | GA | A11 | VC | 17 | i3 | 8.0 | - | 5.0 | 5 | 5 | 5 | 5 | Inv. |
| 75 | GA | A11 | VC | 38 | i3 | 8.0 | - | 5.0 | 5 | 5 | 5 | 5 | Inv. |
| 76 | GA | A11 | VC | 48 | i3 | 8.0 | - | 5.0 | 5 | 3 | 4 | 3 | Inv. |
| 77 | GA | A11 | VC | 58 | i3 | 8.0 | - | 5.0 | 5 | 3 | 3 | 3 | Inv. |
| 78 | GA | A11 | VC | 0.4 | i3 | 8.0 | - | 5.0 | 3 | 5 | 5 | 5 | Inv. |
| 79 | GA | A11 | VC | 63 | i3 | 8.0 | - | 5.0 | 5 | 3 | 3 | 3 | Inv. |
| 80 | GA | A11 | VC | 6.5 | i3 | 8.0 | - | 1.5 | 5 | 5 | 4 | 3 | Inv. |
| 81 | GA | A11 | VC | 6.5 | i3 | 8.0 | - | 2.5 | 5 | 5 | 5 | 4 | Inv. |
| 82 | GA | A11 | VC | 6.5 | i3 | 8.0 | - | 7.5 | 5 | 5 | 5 | 5 | Inv. |
| 83 | GA | A11 | VC | 6.5 | i3 | 8.0 | - | 14 | 5 | 5 | 5 | 5 | Inv. |
| 84 | GA | A11 | VC | 6.5 | i3 | 8.0 | - | 20 | 5 | 4 | 5 | 5 | Inv. |
| 85 | GA | A11 | VC | 6.5 | i3 | 8.0 | - | 28 | 4 | 3 | 5 | 5 | Inv. |
| 86 | GA | A11 | VC | 6.5 | i3 | 8.0 | - | 33 | 3 | 3 | 5 | 5 | Inv. |
| 87 | GA | A11 | VC | 6.5 | - | - | - | 5.0 | 5 | 5 | 2 | 1 | Comp. |
| 88 | GA | A11 | VC | 6.5 | i3 | 0.7 | - | 5.0 | 5 | 5 | 3 | 3 | Inv. |
| 89 | GA | A11 | VC | 6.5 | i3 | 1.5 | - | 5.0 | 5 | 5 | 4 | 3 | Inv. |
| 90 | GA | A11 | VC | 6.5 | i3 | 3.0 | - | 5.0 | 5 | 5 | 5 | 5 | Inv. |

(continued)

| Precoated metal sheet no. | Metal sheet | Resin (A1) | Ceramic particles | | Anti-corrosive pigment (C) | | Silane coupling agent (s) | Coat thickness (μm) | Weldability | Formability | Corrosion resistance | | Remarks |
|---|---|---|---|---|---|---|---|---|---|---|---|---|---|
| | | | Type | Content (vol%) | Type | Content (vol%) | | | | | Flat parts | Worked parts | |
| 91 | GA | A11 | VC | 6.5 | i3 | 13 | - | 5.0 | 5 | 5 | 5 | 5 | Inv. |
| 92 | GA | A11 | VC | 6.5 | i3 | 18 | - | 5.0 | 5 | 5 | 5 | 5 | Inv. |
| 93 | GA | A11 | VC | 6.5 | i3 | 23 | - | 5.0 | 5 | 4 | 5 | 5 | Inv. |
| 94 | GA | A11 | VC | 0.6 | i3 | 8.0 | s1 | 5.0 | 3 | 5 | 5 | 5 | Inv. |
| 95 | GA | A11 | VC | 1.2 | i3 | 8.0 | s1 | 5.0 | 3 | 5 | 5 | 5 | Inv. |
| 96 | GA | A11 | VC | 2.0 | i3 | 8.0 | s1 | 5.0 | 4 | 5 | 5 | 5 | Inv. |
| 97 | GA | A11 | VC | 4.0 | i3 | 8.0 | s1 | 5.0 | 4 | 5 | 5 | 5 | Inv. |
| 98 | GA | A11 | VC | 6.5 | i3 | 8.0 | s1 | 5.0 | 4 | 5 | 5 | 5 | Inv. |
| 99 | GA | A11 | VC | 11 | i3 | 8.0 | s1 | 5.0 | 5 | 5 | 5 | 5 | Inv. |
| 100 | GA | A11 | VC | 17 | i3 | 8.0 | s1 | 5.0 | 5 | 5 | 5 | 5 | Inv. |
| 101 | GA | A11 | VC | 38 | i3 | 8.0 | s1 | 5.0 | 5 | 5 | 5 | 5 | Inv. |
| 102 | GA | A11 | VC | 48 | i3 | 8.0 | s1 | 5.0 | 5 | 3 | 5 | 4 | Inv. |
| 103 | GA | A11 | VC | 58 | i3 | 8.0 | s1 | 5.0 | 5 | 3 | 4 | 4 | Inv. |
| 104 | GA | A11 | VC | 6.5 | - | - | s1 | 5.0 | 5 | 5 | 3 | 2 | Comp. |
| 105 | GA | A11 | VC | 0.6 | i3 | 8.0 | s2 | 5.0 | 3 | 5 | 5 | 5 | Inv. |
| 106 | GA | A11 | VC | 1.2 | i3 | 8.0 | s2 | 5.0 | 3 | 5 | 5 | 5 | Inv. |
| 107 | GA | A11 | VC | 2.0 | i3 | 8.0 | s2 | 5.0 | 4 | 5 | 5 | 5 | Inv. |
| 108 | GA | A11 | VC | 4.0 | i3 | 8.0 | s2 | 5.0 | 5 | 5 | 5 | 5 | Inv. |
| 109 | GA | A11 | VC | 0.6 | i1 | 8.0 | - | 5.0 | 3 | 5 | 5 | 5 | Inv. |
| 110 | GA | A11 | VC | 1.2 | i1 | 8.0 | - | 5.0 | 4 | 5 | 5 | 5 | Inv. |
| 111 | GA | A11 | VC | 2.0 | i1 | 8.0 | - | 5.0 | 4 | 5 | 5 | 5 | Inv. |
| 112 | GA | A11 | VC | 4.0 | i1 | 8.0 | - | 5.0 | 4 | 5 | 5 | 5 | Inv. |
| 113 | GA | A11 | VC | 6.5 | | 8.0 | - | 5.0 | 4 | 5 | 5 | 5 | Inv. |

(continued)

| Precoated metal sheet no. | Metal sheet | Resin (A1) | Ceramic particles | | Anti-corrosive pigment (C) | | Silane coupling agent (s) | Coat thickness (μm) | Weldability | Formability | Corrosion resistance | | Remarks |
|---|---|---|---|---|---|---|---|---|---|---|---|---|---|
| | | | Type | Content (vol%) | Type | Content (vol%) | | | | | Flat parts | Worked parts | |
| 114 | GA | A11 | VC | 11 | i1 | 8.0 | - | 5.0 | 5 | 5 | 5 | 5 | Inv. |
| 115 | GA | A11 | VC | 17 | i1 | 8.0 | - | 5.0 | 5 | 5 | 5 | 5 | Inv. |
| 116 | GA | A11 | VC | 38 | i1 | 8.0 | - | 5.0 | 5 | 5 | 5 | 5 | Inv. |
| 117 | GA | A11 | VC | 48 | i1 | 8.0 | - | 5.0 | 5 | 3 | 4 | 3 | Inv. |
| 118 | GA | A11 | VC | 58 | i1 | 8.0 | - | 5.0 | 5 | 3 | 3 | 3 | Inv. |
| 119 | GA | A11 | VC | 0.6 | i2 | 8.0 | - | 5.0 | 3 | 5 | 5 | 5 | Inv. |
| 120 | GA | A11 | VC | 1.2 | i2 | 8.0 | - | 5.0 | 3 | 5 | 5 | 5 | Inv. |
| 121 | GA | A11 | VC | 2.0 | i2 | 8.0 | - | 5.0 | 4 | 5 | 5 | 5 | Inv. |
| 122 | GA | A11 | VC | 4.0 | i2 | 8.0 | - | 5.0 | 4 | 5 | 5 | 5 | Inv. |
| 123 | GA | A11 | VC | 6.5 | i2 | 8.0 | - | 5.0 | 5 | 5 | 5 | 5 | Inv. |
| 124 | GA | A11 | VC | 11 | i2 | 8.0 | - | 5.0 | 5 | 5 | 5 | 5 | Inv. |
| 125 | GA | A11 | VC | 0.6 | i4 | 8.0 | - | 5.0 | 3 | 5 | 5 | 5 | Inv. |
| 126 | GA | A11 | VC | 1.2 | i4 | 8.0 | - | 5.0 | 3 | 5 | 5 | 5 | Inv. |
| 127 | GA | A11 | VC | 2.0 | i4 | 8.0 | - | 5.0 | 4 | 5 | 5 | 5 | Inv. |
| 128 | GA | A11 | VC | 4.0 | i4 | 8.0 | - | 5.0 | 4 | 5 | 5 | 5 | Inv. |
| 129 | GA | A11 | VC | 0.6 | i5 | 8.0 | - | 5.0 | 3 | 5 | 5 | 5 | Inv. |
| 130 | GA | A11 | VC | 1.2 | i5 | 8.0 | - | 5.0 | 3 | 5 | 5 | 5 | Inv. |
| 131 | GA | A11 | VC | 2.0 | i5 | 8.0 | - | 5.0 | 4 | 5 | 5 | 5 | Inv. |
| 132 | . GA | A11 | VC | 4.0 | i5 | 8.0 | - | 5.0 | 4 | 5 | 5 | 5 | Inv. |

Table 3

| Precoated metal sheet no. | Metal sheet | Resin (A1) | Ceramic particles | | Anti-corrosive pigment (C) | | Silane coupling agent (s) | Coat thickness (μm) | Weldability | Formability | Corrosion resistance | | Remarks |
|---|---|---|---|---|---|---|---|---|---|---|---|---|---|
| | | | Type | Content (vol%) | Type | Content (vol%) | | | | | Flat parts | Worked parts | |
| 133 | GA | A11 | MoB | 0.6 | i3 | 8.0 | - | 5.0 | 3 | 5 | 5 | 5 | Inv. |
| 134 | GA | A11 | MoB | 1.2 | i3 | 8.0 | - | 5.0 | 4 | 5 | 5 | 5 | Inv. |
| 135 | GA | A11 | MoB | 2.0 | i3 | 8.0 | - | 5.0 | 4 | 5 | 5 | 5 | Inv. |
| 136 | GA | A11 | MoB | 4.0 | i3 | 8.0 | - | 5.0 | 4 | 5 | 5 | 5 | Inv. |
| 137 | GA | A11 | MoB | 6.5 | i3 | 8.0 | - | 5.0 | 5 | 5 | 5 | 5 | Inv. |
| 138 | GA | A11 | MoB | 11 | i3 | 8.0 | - | 5.0 | 5 | 5 | 5 | 5 | Inv. |
| 139 | GA | A11 | MoB | 17 | i3 | 8.0 | - | 5.0 | 5 | 4 | 5 | 5 | Inv. |
| 140 | GA | A11 | MoB | 38 | i3 | 8.0 | - | 5.0 | 5 | 4 | 4 | 4 | Inv. |
| 141 | GA | A11 | MoB | 48 | i3 | 8.0 | - | 5.0 | 5 | 3 | 4 | 3 | Inv. |
| 142 | GA | A11 | MoB | 58 | i3 | 8.0 | - | 5.0 | 5 | 3 | 3 | 3 | Inv. |
| 143 | GA | A11 | MoB | 0.4 | i3 | 8.0 | - | 5.0 | 3 | 5 | 5 | 5 | Inv. |
| 144 | GA | A11 | MoB | 63 | i3 | 8.0 | - | 5.0 | 5 | 3 | 3 | 3 | Inv. |
| 145 | GA | A11 | MoB | 6.5 | i3 | 8.0 | - | 1.5 | 5 | 5 | 3 | 3 | Inv. |
| 146 | GA | A11 | MoB | 6.5 | i3 | 8.0 | - | 2.5 | 5 | 5 | 4 | 4 | Inv. |
| 147 | GA | A11 | MoB | 6.5 | i3 | 8.0 | - | 7.5 | 5 | 5 | 5 | 5 | Inv. |
| 148 | GA | A11 | MoB | 6.5 | i3 | 8.0 | - | 14 | 5 | 5 | 5 | 5 | Inv. |
| 149 | GA | A11 | MoB | 6.5 | i3 | 8.0 | - | 20 | 5 | 4 | 5 | 5 | Inv. |
| 150 | GA | A11 | MoB | 6.5 | i3 | 8.0 | - | 28 | 4 | 4 | 5 | 5 | Inv. |
| 151 | GA | A11 | MoB | 6.5 | i3 | 8.0 | - | 33 | 4 | 4 | 5 | 5 | Inv. |
| 152 | GA | A11 | MoB | 6.5 | - | - | - | 5.0 | 5 | 4 | 1 | 1 | Comp. |
| 153 | GA | A11 | MoB | 6.5 | i3 | 0.7 | - | 5.0 | 5 | 5 | 3 | 3 | Inv. |
| 154 | GA | A11 | MoB | 6.5 | i3 | 1.5 | - | 5.0 | 5 | 5 | 3 | 3 | Inv. |
| 155 | GA | A11 | MoB | 6.5 | i3 | 3.0 | - | 5.0 | 5 | 5 | 4 | 5 | Inv. |

(continued)

| Precoated metal sheet no. | Metal sheet | Resin (A1) | Ceramic particles | | Anti-corrosive pigment (C) | | Silane coupling agent (s) | Coat thickness (μm) | Weldability | Formability | Corrosion resistance | | Remarks |
|---|---|---|---|---|---|---|---|---|---|---|---|---|---|
| | | | Type | Content (vol%) | Type | Content (vol%) | | | | | Flat parts | Worked parts | |
| 156 | GA | A11 | MoB | 6.5 | i3 | 13 | - | 5.0 | 5 | 4 | 5 | 5 | Inv. |
| 157 | GA | A11 | MoB | 6.5 | i3 | 18 | - | 5.0 | 5 | 4 | 5 | 5 | Inv. |
| 158 | GA | A11 | MoB | 6.5 | i3 | 23 | - | 5.0 | 4 | 3 | 5 | 5 | Inv. |
| 159 | GA | A11 | ZrB | 0.6 | i3 | 8.0 | - | 5.0 | 3 | 5 | 5 | 5 | Inv. |
| 160 | GA | A11 | ZrB | 1.2 | i3 | 8.0 | - | 5.0 | 4 | 5 | 5 | 5 | Inv. |
| 161 | GA | A11 | ZrB | 2.0 | i3 | 8.0 | - | 5.0 | 4 | 5 | 5 | 5 | Inv. |
| 162 | GA | A11 | ZrB | 4.0 | i3 | 8.0 | - | 5.0 | 4 | 5 | 5 | 5 | Inv. |
| 163 | GA | A11 | ZrB | 6.5 | i3 | 8.0 | - | 5.0 | 5 | 5 | 5 | 5 | Inv. |
| 164 | GA | A11 | ZrB | 11 | i3 | 8.0 | - | 5.0 | 5 | 5 | 5 | 5 | Inv. |
| 165 | GA | A11 | ZrB | 17 | i3 | 8.0 | - | 5.0 | 5 | 5 | 5 | 5 | Inv. |
| 166 | GA | A11 | ZrB | 38 | i3 | 8.0 | - | 5.0 | 5 | 5 | 5 | 5 | Inv. |
| 167 | GA | A11 | ZrB | 48 | i3 | 8.0 | - | 5.0 | 5 | 4 | 4 | 4 | Inv. |
| 168 | GA | A11 | ZrB | 58 | i3 | 8.0 | - | 5.0 | 5 | 3 | 3 | 3 | Inv. |
| 169 | GA | A11 | ZrB | 0.4 | i3 | 8.0 | - | 5.0 | 3 | 5 | 5 | 5 | Inv. |
| 170 | GA | A11 | ZrB | 63 | i3 | 8.0 | - | 5.0 | 5 | 3 | 4 | 3 | Inv. |
| 171 | GA | A11 | ZrB | 6.5 | i3 | 8.0 | - | 1.5 | 5 | 5 | 4 | 4 | Inv. |
| 172 | GA | A11 | ZrB | 6.5 | i3 | 8.0 | - | 2.5 | 5 | 5 | 5 | 4 | Inv. |
| 173 | GA | A11 | ZrB | 6.5 | i3 | 8.0 | - | 7.5 | 5 | 5 | 5 | 5 | Inv. |
| 174 | GA | A11 | ZrB | 6.5 | i3 | 8.0 | - | 14 | 5 | 5 | 5 | 5 | Inv. |
| 175 | GA | A11 | ZrB | 6.5 | i3 | 8.0 | - | 20 | 5 | 5 | 5 | 5 | Inv. |
| 176 | GA | A11 | ZrB | 6.5 | i3 | 8.0 | - | 28 | 5 | 4 | 5 | 5 | Inv. |
| 177 | GA | A11 | ZrB | 6.5 | i3 | 8.0 | - | 33 | 4 | 3 | 5 | 5 | Inv. |
| 178 | GA | A11 | ZrB | 6.5 | - | - | - | 5.0 | 5 | 5 | 1 | 1 | Comp. |

(continued)

| Precoated metal sheet no. | Metal sheet | Resin (A1) | Ceramic particles | | Anti-corrosive pigment (C) | | Silane coupling agent (s) | Coat thickness (μm) | Weldability | Formability | Corrosion resistance | | Remarks |
|---|---|---|---|---|---|---|---|---|---|---|---|---|---|
| | | | Type | Content (vol%) | Type | Content (vol%) | | | | | Flat parts | Worked parts | |
| 179 | GA | A11 | ZrB | 6.5 | i3 | 0.7 | - | 5.0 | 5 | 5 | 3 | 3 | Inv. |
| 180 | GA | A11 | ZrB | 6.5 | i3 | 1.5 | - | 5.0 | 5 | 5 | 3 | 3 | Inv. |
| 181 | GA | A11 | ZrB | 6.5 | i3 | 3.0 | - | 5.0 | 5 | 5 | 4 | 4 | Inv. |
| 182 | GA | A11 | ZrB | 6.5 | i3 | 13 | - | 5.0 | 5 | 4 | 5 | 5 | Inv. |
| 183 | GA | A11 | ZrB | 6.5 | i3 | 18 | - | 5.0 | 5 | 4 | 5 | 5 | Inv. |
| 184 | GA | A11 | ZrB | 6.5 | i3 | 23 | - | 5.0 | 5 | 4 | 5 | 5 | Inv. |
| 185 | GA | A11 | TiB | 0.6 | i3 | 8.0 | - | 5.0 | 3 | 5 | 5 | 5 | Inv. |
| 186 | GA | A11 | TiB | 1.2 | i3 | 8.0 | - | 5.0 | 3 | 5 | 5 | 5 | Inv. |
| 187 | GA | A11 | TiB | 2.0 | i3 | 8.0 | - | 5.0 | 3 | 5 | 5 | 5 | Inv. |
| 188 | GA | A11 | TiB | 4.0 | i3 | 8.0 | - | 5.0 | 3 | 5 | 5 | 5 | Inv. |
| 189 | GA | A11 | TiB | 6.5 | i3 | 8.0 | - | 5.0 | 4 | 5 | 5 | 5 | Inv. |
| 190 | GA | A11 | TiB | 11 | i3 | 8.0 | - | 5.0 | 5 | 5 | 5 | 5 | Inv. |
| 191 | GA | A11 | TiB | 17 | i3 | 8.0 | - | 5.0 | 5 | 5 | 5 | 5 | Inv. |
| 192 | GA | A11 | TiB | 38 | i3 | 8.0 | - | 5.0 | 5 | 5 | 5 | 4 | Inv. |
| 193 | GA | A11 | TiB | 48 | i3 | 8.0 | - | 5.0 | 5 | 3 | 4 | 4 | Inv. |
| 194 | GA | A11 | TiB | 58 | i3 | 8.0 | - | 5.0 | 5 | 3 | 3 | 3 | Inv. |
| 195 | GA | A11 | TiB | 0.4 | i3 | 8.0 | - | 5.0 | 3 | 5 | 5 | 5 | Inv. |
| 196 | GA | A11 | TiB | 63 | i3 | 8.0 | - | 5.0 | 5 | 3 | 3 | 3 | Inv. |

Table 4

| Precoated metal sheet no. | Metal sheet | Resin (A1) | Ceramic particles | | Anti-corrosive pigment (C) | | Silane coupling agent (s) | Coat thickness (μm) | Weldability | Formability | Corrosion resistance | | Remarks |
|---|---|---|---|---|---|---|---|---|---|---|---|---|---|
| | | | Type | Content (vol%) | Type | Content (vol%) | | | | | Flat parts | Worked parts | |
| 197 | EG | A11 | TiN | 0.6 | i3 | 8.0 | - | 5.0 | 3 | 5 | 5 | 5 | Inv. |
| 198 | EG | A11 | TiN | 1.2 | i3 | 8.0 | - | 5.0 | 4 | 5 | 5 | 5 | Inv. |
| 199 | EG | A11 | TiN | 2.0 | i3 | 8.0 | - | 5.0 | 4 | 5 | 5 | 5 | Inv. |
| 200 | EG | A11 | TiN | 4.0 | i3 | 8.0 | - | 5.0 | 4 | 5 | 5 | 5 | Inv. |
| 201 | EG | A11 | TiN | 6.5 | i3 | 8.0 | - | 5.0 | 5 | 5 | 5 | 5 | Inv. |
| 202 | EG | A11 | TiN | 11 | i3 | 8.0 | - | 5.0 | 5 | 5 | 5 | 5 | Inv. |
| 203 | EG | A11 | TiN | 17 | i3 | 8.0 | - | 5.0 | 5 | 5 | 5 | 5 | Inv. |
| 204 | EG | A11 | TiN | 38 | i3 | 8.0 | - | 5.0 | 5 | 5 | 4 | 4 | Inv. |
| 205 | EG | A11 | TiN | 48 | i3 | 8.0 | - | 5.0 | 5 | 4 | 3 | 3 | Inv. |
| 206 | EG | A11 | TiN | 58 | i3 | 8.0 | - | 5.0 | 5 | 3 | 3 | 3 | Inv. |
| 207 | EG | A11 | - | - | i3 | 8.0 | - | 5.0 | 1 | 5 | 5 | 5 | Comp. |
| 208 | EG | A11 | TiN | 0.4 | i3 | 8.0 | - | 5.0 | 3 | 5 | 5 | 5 | Inv. |
| 209 | EG | A11 | TiN | 63 | i3 | 8.0 | - | 5.0 | 5 | 3 | 3 | 3 | Inv. |
| 210 | EG | A11 | TiN | 6.5 | i3 | 8.0 | - | 1.5 | 5 | 5 | 4 | 3 | Inv. |
| 211 | EG | A11 | TiN | 6.5 | i3 | 8.0 | - | 2.5 | 5 | 5 | 5 | 3 | Inv. |
| 212 | EG | A11 | TiN | 6.5 | i3 | 8.0 | - | 7.5 | 5 | 5 | 5 | 5 | Inv. |
| 213 | EG | A11 | TiN | 6.5 | i3 | 8.0 | - | 14 | 5 | 5 | 5 | 5 | Inv. |
| 214 | EG | A11 | TiN | 6.5 | i3 | 8.0 | - | 20 | 5 | 4 | 5 | 5 | Inv. |
| 215 | EG | A11 | TiN | 6.5 | i3 | 8.0 | - | 28 | 4 | 4 | 5 | 5 | Inv. |
| 216 | EG | A11 | TiN | 6.5 | i3 | 8.0 | - | 33 | 3 | 4 | 5 | 5 | Inv. |
| 217 | EG | A11 | TiN | 6.5 | | - | - | 5.0 | 5 | 5 | 1 | 1 | Comp. |
| 218 | GI | A11 | TiN | 0.6 | i3 | 8.0 | - | 5.0 | 3 | 5 | 5 | 5 | Inv. |
| 219 | GI | A11 | TiN | 1.2 | i3 | 8.0 | - | 5.0 | 3 | 5 | 5 | 5 | Inv. |

(continued)

| Precoated metal sheet no. | Metal sheet | Resin (A1) | Ceramic particles | | Anti-corrosive pigment (C) | | Silane coupling agent (s) | Coat thickness (μm) | Weldability | Formability | Corrosion resistance | | Remarks |
|---|---|---|---|---|---|---|---|---|---|---|---|---|---|
| | | | Type | Content (vol%) | Type | Content (vol%) | | | | | Flat parts | Worked parts | |
| 220 | GI | A11 | TiN | 2.0 | i3 | 8.0 | - | 5.0 | 4 | 5 | 5 | 5 | Inv. |
| 221 | GI | A11 | TiN | 4.0 | i3 | 8.0 | - | 5.0 | 4 | 5 | 5 | 5 | Inv. |
| 222 | GI | A11 | TiN | 6.5 | i3 | 8.0 | - | 5.0 | 5 | 5 | 5 | 5 | Inv. |
| 223 | GI | A11 | TiN | 11 | i3 | 8.0 | - | 5.0 | 5 | 5 | 5 | 5 | Inv. |
| 224 | GI | A11 | TiN | 17 | i3 | 8.0 | - | 5.0 | 5 | 5 | 5 | 5 | Inv. |
| 225 | GI | A11 | TiN | 38 | i3 | 8.0 | - | 5.0 | 5 | 5 | 4 | 4 | Inv. |
| 226 | GI | A11 | TiN | 48 | i3 | 8.0 | - | 5.0 | 5 | 3 | 4 | 3 | Inv. |
| 227 | GI | A11 | TiN | 58 | i3 | 8.0 | - | 5.0 | 5 | 3 | 3 | 3 | Inv. |
| 228 | GI | A11 | - | - | i3 | 8.0 | - | 5.0 | 1 | 5 | 5 | 5 | Comp. |
| 229 | SD | A11 | TiN | 0.6 | i3 | 8.0 | - | 5.0 | 3 | 5 | 5 | 5 | Inv. |
| 230 | SD | A11 | TiN | 1.2 | i3 | 8.0 | - | 5.0 | 4 | 5 | 5 | 5 | Inv. |
| 231 | SD | A11 | TiN | 2.0 | i3 | 8.0 | - | 5.0 | 4 | 5 | 5 | 5 | Inv. |
| 232 | SD | A11 | TiN | 4.0 | i3 | 8.0 | - | 5.0 | 4 | 5 | 5 | 5 | Inv. |
| 233 | SD | A11 | TiN | 6.5 | i3 | 8.0 | - | 5.0 | 5 | 5 | 5 | 5 | Inv. |
| 234 | SD | A11 | TiN | 11 | i3 | 8.0 | - | 5.0 | 5 | 5 | 5 | 5 | Inv. |
| 235 | SD | A11 | TiN | 17 | i3 | 8.0 | - | 5.0 | 5 | 5 | 5 | 5 | Inv. |
| 236 | SD | A11 | TiN | 38 | i3 | 8.0 | - | 5.0 | 5 | 5 | 4 | 5 | Inv. |
| 237 | SD | A11 | TiN | 48 | i3 | 8.0 | - | 5.0 | 5 | 4 | 3 | 3 | Inv. |
| 238 | SD | A11 | TiN | 58 | i3 | 8.0 | - | 5.0 | 5 | 4 | 3 | 3 | Inv. |
| 239 | SD | A11 | - | - | i3 | 8.0 | - | 5.0 | 1 | 5 | 5 | 5 | Comp. |
| 240 | SD | A11 | TiN | 0.4 | i3 | 8.0 | - | 5.0 | 3 | 5 | 5 | 5 | Inv. |
| 241 | SD | A11 | TiN | 63 | i3 | 8.0 | - | 5.0 | 5 | 3 | 3 | 3 | Inv. |
| 242 | SD | A11 | TiN | 6.5 | i3 | 8.0 | - | 1.5 | 5 | 5 | 4 | 3 | Inv. |

(continued)

| Precoated metal sheet no. | Metal sheet | Resin (A1) | Ceramic particles | | Anti-corrosive pigment (C) | | Silane coupling agent (s) | Coat thickness (μm) | Weldability | Formability | Corrosion resistance | | Remarks |
|---|---|---|---|---|---|---|---|---|---|---|---|---|---|
| | | | Type | Content (vol%) | Type | Content (vol%) | | | | | Flat parts | Worked parts | |
| 243 | SD | A11 | TiN | 6.5 | i3 | 8.0 | - | 2.5 | 5 | 5 | 5 | 4 | Inv. |
| 244 | SD | A11 | TiN | 6.5 | i3 | 8.0 | - | 7.5 | 5 | 5 | 5 | 5 | Inv. |
| 245 | SD | A11 | TiN | 6.5 | i3 | 8.0 | - | 14 | 5 | 5 | 5 | 5 | Inv. |
| 246 | SD | A11 | TiN | 6.5 | i3 | 8.0 | - | 20 | 5 | 4 | 5 | 5 | Inv. |
| 247 | SD | A11 | TiN | 6.5 | i3 | 8.0 | - | 28 | 4 | 4 | 5 | 5 | Inv. |
| 248 | SD | A11 | TiN | 6.5 | i3 | 8.0 | - | 33 | 3 | 3 | 5 | 5 | Inv. |
| 249 | SD | A11 | TiN | 6.5 | - | - | - | 5.0 | 5 | 5 | 2 | 1 | Comp. |

Table 5

| Precoated metal sheet no. | Metal sheet | Resin (A1) | Ceramic particles | | Anti-corrosive pigment (C) | | Silane coupling agent (s) | Coat thickness (μm) | Weldability | Formability | Corrosion resistance | | Remarks |
|---|---|---|---|---|---|---|---|---|---|---|---|---|---|
| | | | Type | Content (vol%) | Type | Content (vol%) | | | | | Flat parts | Worked parts | |
| 250 | GA | A12 | TiN | 0.6 | i3 | 8.0 | - | 5.0 | 3 | 5 | 5 | 5 | Inv. |
| 251 | GA | A12 | TiN | 1.2 | i3 | 8.0 | - | 5.0 | 3 | 5 | 5 | 5 | Inv. |
| 252 | GA | A12 | TiN | 2.0 | i3 | 8.0 | - | 5.0 | 4 | 5 | 5 | 5 | Inv. |
| 253 | GA | A12 | TiN | 4.0 | i3 | 8.0 | - | 5.0 | 4 | 5 | 5 | 5 | Inv. |
| 254 | GA | A12 | TiN | 6.5 | i3 | 8.0 | - | 5.0 | 5 | 5 | 5 | 5 | Inv. |
| 255 | GA | A12 | TiN | 11 | i3 | 8.0 | - | 5.0 | 5 | 5 | 5 | 5 | Inv. |
| 256 | GA | A12 | TiN | 17 | i3 | 8.0 | - | 5.0 | 5 | 5 | 5 | 5 | Inv. |
| 257 | GA | A12 | TiN | 38 | i3 | 8.0 | - | 5.0 | 5 | 5 | 5 | 4 | Inv. |
| 258 | GA | A12 | TiN | 48 | i3 | 8.0 | - | 5.0 | 5 | 4 | 5 | 3 | Inv. |
| 259 | GA | A12 | TiN | 58 | i3 | 8.0 | - | 5.0 | 5 | 3 | 4 | 3 | Inv. |
| 260 | GA | A12 | - | - | i3 | 8.0 | - | 5.0 | 1 | 5 | 5 | 5 | Comp. |
| 261 | GA | A12 | TiN | 0.4 | i3 | 8.0 | - | 5.0 | 3 | 5 | 5 | 5 | Inv. |
| 262 | GA | A12 | TiN | 63 | i3 | 8.0 | - | 5.0 | 5 | 3 | 3 | 3 | Inv. |
| 263 | GA | A12 | TiN | 6.5 | i3 | 8.0 | - | 1.5 | 5 | 5 | 4 | 3 | Inv. |
| 264 | GA | A12 | TiN | 6.5 | i3 | 8.0 | - | 2.5 | 5 | 5 | 5 | 4 | Inv. |
| 265 | GA | A12 | TiN | 6.5 | i3 | 8.0 | - | 7.5 | 5 | 5 | 5 | 5 | Inv. |
| 266 | GA | A12 | TiN | 6.5 | i3 | 8.0 | - | 14 | 5 | 5 | 5 | 5 | Inv. |
| 267 | GA | A12 | TiN | 6.5 | i3 | 8.0 | - | 20 | 5 | 5 | 5 | 5 | Inv. |
| 268 | GA | A12 | TiN | 6.5 | i3 | 8.0 | - | 28 | 4 | 4 | 5 | 5 | Inv. |
| 269 | GA | A12 | TiN | 6.5 | i3 | 8.0 | - | 33 | 3 | 3 | 5 | 5 | Inv. |
| 270 | GA | A12 | TiN | 6.5 | - | - | - | 5.0 | 5 | 5 | 2 | 1 | Comp. |
| 271 | GA | A12 | TiN | 6.5 | i3 | 0.7 | - | 5.0 | 5 | 5 | 3 | 3 | Inv. |
| 272 | GA | A12 | TiN | 6.5 | i3 | 1.5 | - | 5.0 | 5 | 5 | 4 | 4 | Inv. |

(continued)

| Precoated metal sheet no. | Metal sheet | Resin (A1) | Ceramic particles | | Anti-corrosive pigment (C) | | Silane coupling agent (s) | Coat thickness (μm) | Weldability | Formability | Corrosion resistance | | Remarks |
|---|---|---|---|---|---|---|---|---|---|---|---|---|---|
| | | | Type | Content (vol%) | Type | Content (vol%) | | | | | Flat parts | Worked parts | |
| 273 | GA | A12 | TiN | 6.5 | i3 | 3.0 | - | 5.0 | 5 | 5 | 5 | 5 | Inv. |
| 274 | GA | A12 | TiN | 6.5 | i3 | 13 | - | 5.0 | 5 | 5 | 5 | 5 | Inv. |
| 275 | GA | A12 | TiN | 6.5 | i3 | 18 | - | 5.0 | 5 | 5 | 5 | 5 | Inv. |
| 276 | GA | A12 | TiN | 6.5 | i3 | 23 | - | 5.0 | 5 | 4 | 5 | 5 | Inv. |
| 277 | GA | A12 | TiN | 0.6 | i3 | 8.0 | s1 | 5.0 | 3 | 5 | 5 | 5 | Inv. |
| 278 | GA | A12 | TiN | 1.2 | i3 | 8.0 | s1 | 5.0 | 3 | 5 | 5 | 5 | Inv. |
| 279 | GA | A12 | TiN | 2.0 | i3 | 8.0 | s1 | 5.0 | 4 | 5 | 5 | 5 | Inv. |
| 280 | GA | A12 | TiN | 4.0 | i3 | 8.0 | s1 | 5.0 | 4 | 5 | 5 | 5 | Inv. |
| 281 | GA | A12 | TiN | 6.5 | i3 | 8.0 | s1 | 5.0 | 5 | 5 | 5 | 5 | Inv. |
| 282 | GA | A12 | TiN | 11 | i3 | 8.0 | s1 | 5.0 | 5 | 5 | 5 | 5 | Inv. |
| 283 | GA | A12 | TiN | 17 | i3 | 8.0 | s1 | 5.0 | 5 | 5 | 5 | 5 | Inv. |
| 284 | GA | A12 | TiN | 38 | i3 | 8.0 | s1 | 5.0 | 5 | 5 | 5. | 5 | Inv. |
| 285 | GA | A12 | TiN | 48 | i3 | 8.0 | s1 | 5.0 | 5 | 4 | 5 | 5 | Inv. |
| 286 | GA | A12 | TiN | 58 | i3 | 8.0 | s1 | 5.0 | 5 | 3 | 4 | 4 | Inv. |
| 287 | GA | A12 | | - | i3 | 8.0 | s1 | 5.0 | 1 | 5 | 5 | 5 | Comp. |
| 289 | GA | A12 | TiN | 0.6 | i3 | 8.0 | s2 | 5.0 | 5 | 5 | 5 | 5 | Inv. |
| 290 | GA | A12 | TiN | 1.2 | i3 | 8.0 | s2 | 5.0 | 5 | 5 | 5 | 5 | Inv. |
| 291 | GA | A12 | TiN | 2.0 | i3 | 8.0 | s2 | 5.0 | 5 | 5 | 5 | 5 | Inv. |
| 292 | GA | A12 | TiN | 4.0 | i3 | 8.0 | s2 | 5.0 | 5 | 5 | 5 | 5 | Inv. |
| 293 | GA | A12 | TiN | 0.6 | i1 | 8.0 | - | 5.0 | 3 | 5 | 5 | 5 | Inv. |
| 294 | GA | A12 | TiN | 1.2 | i1 | 8.0 | - | 5.0 | 3 | 5 | 5 | 5 | Inv. |
| 295 | GA | A12 | TiN | 2.0 | i1 | 8.0 | - | 5.0 | 4 | 5 | 5 | 5 | Inv. |
| 296 | GA | A12 | TiN | 4.0 | i1 | 8.0 | - | 5.0 | 4 | 5 | 5 | 5 | Inv. |

(continued)

| Precoated metal sheet no. | Metal sheet | Resin (A1) | Ceramic particles | | Anti-corrosive pigment (C) | | Silane coupling agent (s) | Coat thickness (μm) | Weldability | Formability | Corrosion resistance | | Remarks |
|---|---|---|---|---|---|---|---|---|---|---|---|---|---|
| | | | Type | Content (vol%) | Type | Content (vol%) | | | | | Flat parts | Worked parts | |
| 297 | GA | A12 | TiN | 6.5 | i1 | 8.0 | - | 5.0 | 5 | 5 | 5 | 5 | Inv. |
| 298 | GA | A12 | TiN | 11 | i1 | 8.0 | - | 5.0 | 5 | 5 | 5 | 5 | Inv. |
| 299 | GA | A12 | TiN | 17 | i1 | 8.0 | - | 5.0 | 5 | 5 | 5 | 5 | Inv. |
| 300 | GA | A12 | TiN | 38 | i1 | 8.0 | - | 5.0 | 5 | 5 | 5 | 5 | Inv. |
| 301 | GA | A12 | TiN | 48 | i1 | 8.0 | - | 5.0 | 5 | 4 | 5 | 4 | Inv. |
| 302 | GA | A12 | TiN | 58 | i1 | 8.0 | - | 5.0 | 5 | 3 | 4 | 3 | Inv. |
| 303 | GA | A12 | TiN | 0.6 | i2 | 8.0 | - | 5.0 | 3 | 5 | 5 | 5 | Inv. |
| 304 | GA | A12 | TiN | 1.2 | i2 | 8.0 | - | 5.0 | 3 | 5 | 5 | 5 | Inv. |
| 305 | GA | A12 | TiN | 2.0 | i2 | 8.0 | - | 5.0 | 3 | 5 | 5 | 5 | Inv. |
| 306 | GA | A12 | TiN | 4.0 | i2 | 8.0 | - | 5.0 | 4 | 5 | 5 | 5 | Inv. |
| 307 | GA | A12 | TiN | 6.5 | i2 | 8.0 | - | 5.0 | 5 | 5 | 5 | 5 | Inv. |
| 308 | GA | A12 | TiN | 11 | i2 | 8.0 | - | 5.0 | 5 | 5 | 5 | 5 | Inv. |
| 309 | GA | A12 | TiN | 0.6 | i4 | 8.0 | - | 5.0 | 3 | 5 | 5 | 5 | Inv. |
| 310 | GA | A12 | TiN | 1.2 | i4 | 8.0 | - | 5.0 | 3 | 5 | 5 | 5 | Inv. |
| 311 | GA | A12 | TiN | 2.0 | i4 | 8.0 | - | 5.0 | 3 | 5 | 5 | 5 | Inv. |
| 312 | GA | A12 | TiN | 4.0 | i4 | 8.0 | - | 5.0 | 4 | 5 | 5 | 5 | Inv. |
| 313 | GA | A12 | TiN | 0.6 | i5 | 8.0 | - | 5.0 | 3 | 5 | 5 | 5 | Inv. |
| 314 | GA | A12 | TiN | 1.2 | i5 | 8.0 | - | 5.0 | 3 | 5 | 5 | 5 | Inv. |
| 315 | GA | A12 | TiN | 2.0 | i5 | 8.0 | - | 5.0 | 3 | 5 | 5 | 5 | Inv. |
| 316 | GA | A12 | TiN | 4.0 | i5 | 8.0 | - | 5.0 | 4 | 5 | 5 | 5 | Inv. |

Table 6

| Precoated metal sheet no. | Metal sheet | Resin (A1) | Ceramic particles | | Anti-corrosive pigment (C) | | Silane coupling agent (s) | Coat thickness (μm) | Weldability | Formability | Corrosion resistance | | Remarks |
|---|---|---|---|---|---|---|---|---|---|---|---|---|---|
| | | | Type | Content (vol%) | Type | Content (vol%) | | | | | Flat parts | Worked parts | |
| 317 | GA | A13 | TiN | 0.6 | i3 | 8.0 | - | 5.0 | 3 | 5 | 5 | 5 | Inv. |
| 318 | GA | A13 | TiN | 1.2 | i3 | 8.0 | - | 5.0 | 3 | 5 | 5 | 5 | Inv. |
| 319 | GA | A13 | TiN | 2.0 | i3 | 8.0 | - | 5.0 | 4 | 5 | 5 | 5 | Inv. |
| 320 | GA | A13 | TiN | 4.0 | i3 | 8.0 | - | 5.0 | 4 | 5 | 5 | 5 | Inv. |
| 321 | GA | A13 | TiN | 6.5 | i3 | 8.0 | - | 5.0 | 5 | 5 | 5 | 5 | Inv. |
| 322 | GA | A13 | TiN | 11 | i3 | 8.0 | - | 5.0 | 5 | 5 | 5 | 5 | Inv. |
| 323 | GA | A13 | TiN | 17 | i3 | 8.0 | - | 5.0 | 5 | 5 | 4 | 4 | Inv. |
| 324 | GA | A13 | TiN | 38 | i3 | 8.0 | - | 5.0 | 5 | 5 | 4 | 4 | Inv. |
| 325 | GA | A13 | TiN | 48 | i3 | 8.0 | - | 5.0 | 5 | 4 | 3 | 3 | Inv. |
| 326 | GA | A13 | TiN | 58 | i3 | 8.0 | - | 5.0 | 5 | 3 | 3 | 3 | Inv. |
| 327 | GA | A13 | - | - | i3 | 8.0 | - | 5.0 | 1 | 5 | 5 | 5 | Comp. |
| 328 | GA | A13 | TiN | 0.4 | i3 | 8.0 | - | 5.0 | 3 | 5 | 5 | 5 | Inv. |
| 329 | GA | A13 | TiN | 63 | i3 | 8.0 | - | 5.0 | 5 | 3 | 3 | 3 | Inv. |
| 330 | GA | A13 | TiN | 6.5 | i3 | 8.0 | - | 1.5 | 5 | 5 | 3 | 3 | Inv. |
| 331 | GA | A13 | TiN | 6.5 | i3 | 8.0 | - | 2.5 | 5 | 5 | 3 | 4 | Inv. |
| 332 | GA | A13 | TiN | 6.5 | i3 | 8.0 | - | 7.5 | 5 | 5 | 5 | 5 | Inv. |
| 333 | GA | A13 | TiN | 6.5 | i3 | 8.0 | - | 14 | 5 | 5 | 5 | 5 | Inv. |
| 334 | GA | A13 | TiN | 6.5 | i3 | 8.0 | - | 20 | 5 | 5 | 5 | 5 | Inv. |
| 335 | GA | A13 | TiN | 6.5 | i3 | 8.0 | - | 28 | 4 | 4 | 5 | 5 | Inv. |
| 336 | GA | A13 | TiN | 6.5 | i3 | 8.0 | - | 33 | 3 | 3 | 5 | 5 | Inv. |
| 337 | GA | A13 | TiN | 6.5 | - | - | - | 5.0 | 5 | 5 | 1 | 1 | Comp. |
| 338 | GA | A14 | TiN | 0.6 | i3 | 8.0 | - | 5.0 | 3 | 5 | 5 | 5 | Inv. |
| 339 | GA | A14 | TiN | 1.2 | i3 | 8.0 | - | 5.0 | 3 | 5 | 5 | 5 | Inv. |

(continued)

| Precoated metal sheet no. | Metal sheet | Resin (A1) | Ceramic particles | | Anti-corrosive pigment (C) | | Silane coupling agent (s) | Coat thickness (μm) | Weldability | Formability | Corrosion resistance | | Remarks |
|---|---|---|---|---|---|---|---|---|---|---|---|---|---|
| | | | Type | Content (vol%) | Type | Content (vol%) | | | | | Flat parts | Worked parts | |
| 340 | GA | A14 | TiN | 2.0 | i3 | 8.0 | - | 5.0 | 3 | 5 | 5 | 5 | Inv. |
| 341 | GA | A14 | TiN | 4.0 | i3 | 8.0 | - | 5.0 | 4 | 5 | 5 | 5 | Inv. |
| 342 | GA | A14 | TiN | 6.5 | i3 | 8.0 | - | 5.0 | 5 | 5 | 5 | 5 | Inv. |
| 343 | GA | A14 | TiN | 11 | i3 | 8.0 | - | 5.0 | 5 | 5 | 5 | 5 | Inv. |
| 344 | GA | A14 | TiN | 17 | i3 | 8.0 | - | 5.0 | 5 | 5 | 4 | 4 | Inv. |
| 345 | GA | A14 | TiN | 38 | i3 | 8.0 | - | 5.0 | 5 | 5 | 4 | 4 | Inv. |
| 346 | GA | A14 | TiN | 48 | i3 | 8.0 | - | 5.0 | 5 | 4 | 4 | 3 | Inv. |
| 347 | GA | A14 | TiN | 58 | i3 | 8.0 | - | 5.0 | 5 | 3 | 3 | 3 | Inv. |
| 348 | GA | A14 | - | - | i3 | 8.0 | - | 5.0 | 1 | 5 | 5 | 5 | Comp. |
| 349 | GA | A14 | TiN | 0.4 | i3 | 8.0 | - | 5.0 | 3 | 5 | 5 | 5 | Inv. |
| 350 | GA | A14 | TiN | 63 | i3 | 8.0 | - | 5.0 | 5 | 3 | 3 | 3 | Inv. |
| 351 | GA | A14 | TiN | 6.5 | i3 | 8.0 | - | 1.5 | 5 | 5 | 3 | 3 | Inv. |
| 352 | GA | A14 | TiN | 6.5 | i3 | 8.0 | - | 2.5 | 5 | 5 | 3 | 4 | Inv. |
| 353 | GA | A14 | TiN | 6.5 | i3 | 8.0 | - | 7.5 | 5 | 5 | 5 | 5 | Inv. |
| 354 | GA | A14 | TiN | 6.5 | i3 | 8.0 | - | 14 | 5 | 5 | 5 | 5 | Inv. |
| 355 | GA | A14 | TiN | 6.5 | i3 | 8.0 | - | 20 | 5 | 5 | 5 | 5 | Inv. |
| 356 | GA | A14 | TiN | 6.5 | i3 | 8.0 | - | 28 | 5 | 4 | 5 | 5 | Inv. |
| 357 | GA | A14 | TiN | 6.5 | i3 | 8.0 | - | 33 | 4 | 3 | 5 | 5 | Inv. |
| 358 | GA | A14 | TiN | 6.5 | - | - | - | 5.0 | 5 | 5 | 1 | 1 | Comp. |
| 359 | GA | A15 | TiN | 0.6 | i3 | 8.0 | - | 5.0 | 3 | 5 | 5 | 5 | Inv. |
| 360 | GA | A15 | TiN | 1.2 | i3 | 8.0 | - | 5.0 | 3 | 5 | 5 | 5 | Inv. |
| 361 | GA | A15 | TiN | 2.0 | i3 | 8.0 | - | 5.0 | 3 | 5 | 5 | 5 | Inv. |
| 362 | GA | A15 | TiN | 4.0 | i3 | 8.0 | - | 5.0 | 4 | 5 | 5 | 5 | Inv. |

(continued)

| Precoated metal sheet no. | Metal sheet | Resin (A1) | Ceramic particles | | Anti-corrosive pigment (C) | | Silane coupling agent (s) | Coat thickness ($\mu$m) | Weldability | Formability | Corrosion resistance | | Remarks |
|---|---|---|---|---|---|---|---|---|---|---|---|---|---|
| | | | Type | Content (vol%) | Type | Content (vol%) | | | | | Flat parts | Worked parts | |
| 363 | GA | A15 | TiN | 6.5 | i3 | 8.0 | - | 5.0 | 5 | 5 | 5 | 5 | Inv. |
| 364 | GA | A15 | TiN | 11 | i3 | 8.0 | - | 5.0 | 5 | 5 | 5 | 5 | Inv. |
| 365 | GA | A15 | TiN | 17 | i3 | 8.0 | - | 5.0 | 5 | 5 | 4 | 3 | Inv. |
| 366 | GA | A15 | TiN | 38 | i3 | 8.0 | - | 5.0 | 5 | 4 | 4 | 3 | Inv. |
| 367 | GA | A15 | TiN | 48 | i3 | 8.0 | - | 5.0 | 5 | 3 | 3 | 3 | Inv. |
| 368 | GA | A15 | TiN | 58 | i3 | 8.0 | - | 5.0 | 5 | 3 | 3 | 3 | Inv. |
| 369 | GA | A15 | - | - | i3 | 8.0 | - | 5.0 | 1 | 5 | 5 | 5 | Comp. |
| 370 | GA | A15 | TiN | 0.4 | i3 | 8.0 | - | 5.0 | 3 | 5 | 5 | 5 | Inv. |
| 371 | GA | A15 | TiN | 63 | i3 | 8.0 | - | 5.0 | 5 | 3 | 3 | 3 | Inv. |
| 372 | GA | A15 | TiN | 6.5 | i3 | 8.0 | - | 1.5 | 5 | 5 | 3 | 3 | Inv. |
| 373 | GA | A15 | TiN | 6.5 | i3 | 8.0 | - | 2.5 | 5 | 5 | 3 | 3 | Inv. |
| 374 | GA | A15 | TiN | 6.5 | i3 | 8.0 | - | 7.5 | 5 | 5 | 5 | 5 | Inv. |
| 375 | GA | A15 | TiN | 6.5 | i3 | 8.0 | - | 14 | 5 | 4 | 5 | 5 | Inv. |
| 376 | GA | A15 | TiN | 6.5 | i3 | 8.0 | - | 20 | 5 | 4 | 5 | 5 | Inv. |
| 377 | GA | A15 | TiN | 6.5 | i3 | 8.0 | - | 28 | 4 | 4 | 5 | 5 | Inv. |
| 378 | GA | A15 | TiN | 6.5 | i3 | 8.0 | - | 33 | 3 | 3 | 5 | 5 | Inv. |
| 379 | GA | A15 | TiN | 6.5 | - | - | - | 5.0 | 5 | 5 | 1 | 1 | Comp. |

Table 7

| Precoated metal sheet no. | Metal sheet | Primer film | Resin (A1) | Ceramic particles | | Anti-corrosive pigment (C) | | Coat thickness (μm) | Weldability | Formability | Corrosion resistance | | Remarks |
|---|---|---|---|---|---|---|---|---|---|---|---|---|---|
| | | | | Type | Content (vol%) | Type | Content (vol%) | | | | Flat parts | Worked parts | |
| 380 | GA | - | A11 | Al | 0.6 | i3 | 8.0 | 5.0 | 1 | 5 | 5 | 4 | Comp. |
| 381 | GA | - | A11 | Al | 1.2 | i3 | 8.0 | 5.0 | 1 | 5 | 5 | 4 | Comp. |
| 382 | GA | - | A11 | Al | 2.0 | i3 | 8.0 | 5.0 | 1 | 5 | 5 | 4 | Comp. |
| 383 | GA | - | A11 | Al | 4.0 | i3 | 8.0 | 5.0 | 1 | 5 | 5 | 4 | Comp. |
| 384 | GA | - | A11 | Al | 6.5 | i3 | 8.0 | 5.0 | 1 | 5 | 5 | 4 | Comp. |
| 385 | GA | - | A11 | Al | 11 | i3 | 8.0 | 5.0 | 1 | 5 | 5 | 4 | Comp. |
| 386 | GA | - | A11 | Al | 17 | i3 | 8.0 | 5.0 | 2 | 4 | 5 | 3 | Comp. |
| 387 | GA | - | A11 | Al | 38 | i3 | 8.0 | 5.0 | 3 | 2 | 4 | 2 | Comp. |
| 388 | GA | - | A11 | Al | 48 | i3 | 8.0 | 5.0 | 5 | 1 | 3 | 2 | Comp. |
| 389 | GA | - | A11 | Al | 58 | i3 | 8.0 | 5.0 | 5 | 1 | 2 | 1 | Comp. |
| 390 | GA | - | A11 | C | 6.5 | i3 | 8.0 | 5.0 | 1 | 5 | 5 | 4 | Comp. |
| 391 | GA | - | A11 | C | 11 | i3 | 8.0 | 5.0 | 1 | 5 | 5 | 4 | Comp. |
| 392 | GA | - | A11 | C | 17 | i3 | 8.0 | 5.0 | 1 | 4 | 5 | 3 | Comp. |
| 393 | GA | - | A11 | C | 38 | i3 | 8.0 | 5.0 | 2 | 3 | 4 | 2 | Comp. |
| 394 | GA | - | A11 | C | 48 | i3 | 8.0 | 5.0 | 3 | 2 | 3 | 1 | Comp. |
| 395 | GA | - | A11 | C | 58 | i3 | 8.0 | 5.0 | 4 | 1 | 2 | 1 | Comp. |
| 396 | GA | - | A11 | ZnO | 6.5 | i3 | 8.0 | 5.0 | 1 | 5 | 5 | 4 | Comp. |
| 397 | GA | - | A11 | ZnO | 11 | i3 | 8.0 | 5.0 | 1 | 5 | 5 | 4 | Comp. |
| 398 | GA | - | A11 | ZnO | 17 | i3 | 8.0 | 5.0 | 2 | 4 | 4 | 3 | Comp. |
| 399 | GA | - | A11 | ZnO | 38 | i3 | 8.0 | 5.0 | 3 | 3 | 3 | 2 | Comp. |
| 400 | GA | - | A11 | ZnO | 48 | i3 | 8.0 | 5.0 | 4 | 2 | 3 | 2 | Comp. |
| 401 | GA | - | A11 | ZnO | 58 | i3 | 8.0 | 5.0 | 5 | 1 | 1 | 1 | Comp. |
| 402 | GA | - | A11 | FSi2 | 6.5 | i3 | 8.0 | 5.0 | 1 | 5 | 5 | 4 | Comp. |

(continued)

| Precoated metal sheet no. | Metal sheet | Primer film | Resin (A1) | Ceramic particles | | Anti-corrosive pigment (C) | | Coat thickness (μm) | Weldability | Formability | Corrosion resistance | | Remarks |
|---|---|---|---|---|---|---|---|---|---|---|---|---|---|
| | | | | Type | Content (vol%) | Type | Content (vol%) | | | | Flat parts | Worked parts | |
| 403 | GA | - | A11 | $FSi_2$ | 11 | i3 | 8.0 | 5.0 | 2 | 5 | 5 | 4 | Comp. |
| 404 | GA | - | A11 | FSi2 | 17 | i3 | 8.0 | 5.0 | 2 | 4 | 5 | 3 | Comp. |
| 405 | GA | - | A11 | $FSi_2$ | 38 | i3 | 8.0 | 5.0 | 3 | 2 | 4 | 2 | Comp. |
| 406 | GA | - | A11 | FSi2 | 48 | i3 | 8.0 | 5.0 | 5 | 1 | 3 | 2 | Comp. |
| 407 | GA | - | A11 | FSi2 | 58 | i3 | 8.0 | 5.0 | 5 | 1 | 2 | 1 | Comp. |
| 408 | GA | p1 | A11 | TiN | 0.6 | i3 | 8.0 | 5.0 | 3 | 5 | 5 | 5 | Inv. |
| 409 | GA | p1 | A11 | TiN | 1.2 | i3 | 8.0 | 5.0 | 3 | 5 | 5 | 5 | Inv. |
| 410 | GA | p1 | A11 | TiN | 2.0 | i3 | 8.0 | 5.0 | 4 | 5 | 5 | 5 | Inv. |
| 411 | GA | p1 | A11 | TiN | 4.0 | i3 | 8.0 | 5.0 | 4 | 5 | 5 | 5 | Inv. |
| 412 | GA | p1 | A11 | TiN | 6.5 | i3 | 8.0 | 5.0 | 5 | 5 | 5 | 5 | Inv. |
| 413 | GA | p1 | A11 | TiN | 11 | i3 | 8.0 | 5.0 | 5 | 5 | 5 | 5 | Inv. |
| 414 | GA | p1 | A11 | TiN | 17 | i3 | 8.0 | 5.0 | 5 | 5 | 5 | 5 | Inv. |
| 415 | GA | p1 | A11 | TiN | 38 | i3 | 8.0 | 5.0 | 5 | 5 | 5 | 5 | Inv. |
| 416 | GA | p1 | A11 | TiN | 48 | i3 | 8.0 | 5.0 | 5 | 4 | 5 | 4 | Inv. |
| 417 | GA | p1 | A11 | TiN | 58 | i3 | 8.0 | 5.0 | 5 | 4 | 4 | 4 | Inv. |
| 418 | GA | p2 | A11 | TiN | 0.6 | i3 | 8.0 | 5.0 | 3 | 5 | 5 | 5 | Inv. |
| 419 | GA | p2 | A11 | TiN | 1.2 | i3 | 8.0 | 5.0 | 3 | 5 | 5 | 5 | Inv. |
| 420 | GA | p2 | A11 | TiN | 2.0 | i3 | 8.0 | 5.0 | 4 | 5 | 5 | 5 | Inv. |
| 421 | GA | p2 | A11 | TiN | 4.0 | i3 | 8.0 | 5.0 | 4 | 5 | 5 | 5 | Inv. |
| 422 | GA | p2 | A11 | TiN | 6.5 | i3 | 8.0 | 5.0 | 5 | 5 | 5 | 5 | Inv. |
| 423 | GA | p2 | A11 | TiN | 11 | i3 | 8.0 | 5.0 | 5 | 5 | 5 | 5 | Inv. |
| 424 | GA | p2 | A11 | TiN | 17 | i3 | 8.0 | 5.0 | 5 | 5 | 5 | 5 | Inv. |
| 425 | GA | p2 | A11 | TiN | 38 | i3 | 8.0 | 5.0 | 5 | 5 | 5 | 5 | Inv. |

(continued)

| Precoated metal sheet no. | Metal sheet | Primer film | Resin (A1) | Ceramic particles | | Anti-corrosive pigment (C) | | Coat thickness (μm) | Weldability | Formability | Corrosion resistance | | Remarks |
|---|---|---|---|---|---|---|---|---|---|---|---|---|---|
| | | | | Type | Content (vol%) | Type | Content (vol%) | | | | Flat parts | Worked parts | |
| 426 | GA | p2 | A11 | TiN | 48 | i3 | 8.0 | 5.0 | 5 | 4 | 5 | 5 | Inv. |
| 427 | GA | p2 | A11 | TiN | 58 | i3 | 8.0 | 5.0 | 5 | 4 | 5 | 4 | Inv. |
| 428 | GA | - | A* | TiN | 0.6 | i3 | 8.0 | 5.0 | 3 | 5 | 5 | 5 | Inv. |
| 429 | GA | - | A* | TiN | 1.2 | i3 | 8.0 | 5.0 | 3 | 5 | 5 | 5 | Inv. |
| 430 | GA | - | A* | TiN | 2.0 | i3 | 8.0 | 5.0 | 3 | 5 | 5 | 5 | Inv. |
| 431 | GA | - | A* | TiN | 4.0 | i3 | 8.0 | 5.0 | 4 | 4 | 5 | 5 | Inv. |
| 432 | GA | - | A* | TiN | 6.5 | i3 | 8.0 | 5.0 | 5 | 4 | 5 | 5 | Inv. |
| 433 | GA | - | A* | TiN | 11 | i3 | 8.0 | 5.0 | 5 | 4 | 5 | 5 | Inv. |
| 434 | GA | - | A* | TiN | 17 | i3 | 8.0 | 5.0 | 5 | 4 | 5 | 4 | Inv. |
| 435 | GA | - | A* | TiN | 38 | i3 | 8.0 | 5.0 | 5 | 3 | 4 | 4 | Inv. |
| 436 | GA | - | A* | TiN | 48 | i3 | 8.0 | 5.0 | 5 | 3 | 3 | 3 | Inv. |
| 437 | GA | - | A* | TiN | 58 | i3 | 8.0 | 5.0 | 5 | 3 | 3 | 3 | Inv. |
| 438 | GA | - | A* | Al | 0.6 | i3 | 8.0 | 5.0 | 1 | 5 | 5 | 5 | Comp. |
| 439 | GA | - | A* | Al | 1.2 | i3 | 8.0 | 5.0 | 1 | 5 | 5 | 5 | Comp. |
| 440 | GA | - | A* | Al | 2.0 | i3 | 8.0 | 5.0 | 1 | 5 | 5 | 4 | Comp |
| 441 | GA | - | A* | Al | 4.0 | i3 | 8.0 | 5.0 | 1 | 4 | 4 | 3 | Comp. |
| 442 | GA | - | A* | Al | 38 | i3 | 8.0 | 5.0 | 3 | 2 | 4 | 2 | Comp. |
| 443 | GA | - | A* | Al | 58 | i3 | 8.0 | 5.0 | 4 | 2 | 1 | 1 | Comp. |
| 444 | GA | - | A* | C | 0.6 | i3 | 8.0 | 5.0 | 1 | 5 | 5 | 5 | Comp. |
| 445 | GA | - | A* | C | 1.2 | i3 | 8.0 | 5.0 | 1 | 5 | 5 | 5 | Comp. |
| 446 | GA | - | A* | C | 2.0 | i3 | 8.0 | 5.0 | 1 | 5 | 5 | 4 | Comp. |
| 447 | GA | - | A* | C | 4.0 | i3 | 8.0 | 5.0 | 1 | 4 | 4 | 3 | Comp. |
| 448 | GA | - | A* | C | 38 | i3 | 8.0 | 5.0 | 2 | 3 | 3 | 2 | Comp. |

(continued)

| Precoated metal sheet no. | Metal sheet | Primer film | Resin (A1) | Ceramic particles | | Anti-corrosive pigment (C) | | Coat thickness (μm) | Weldability | Formability | Corrosion resistance | | Remarks |
|---|---|---|---|---|---|---|---|---|---|---|---|---|---|
| | | | | Type | Content (vol%) | Type | Content (vol%) | | | | Flat parts | Worked parts | |
| 449 | GA | - | A* | C | 58 | i3 | 8.0 | 5.0 | 4 | 1 | 2 | 1 | Comp. |
| 450 | GA | - | A* | FSi2 | 0.6 | i3 | 8.0 | 5.0 | 1 | 5 | 5 | 5 | Comp. |
| 451 | GA | - | A* | FSi2 | 1.2 | i3 | 8.0 | 5.0 | 1 | 5 | 5 | 5 | Comp. |
| 452 | GA | - | A* | FSi2 | 2.0 | i3 | 8.0 | 5.0 | 1 | 5 | 5 | 4 | Comp. |
| 453 | GA | - | A* | FSi2 | 4.0 | i3 | 8.0 | 5.0 | 1 | 4 | 4 | 3 | Comp. |
| 454 | GA | - | A* | FSi2 | 38 | i3 | 8.0 | 5.0 | 4 | 2 | 4 | 2 | Comp. |
| 455 | GA | - | A* | FSi2 | 58 | i3 | 8.0 | 5.0 | 5 | 1 | 3 | 1 | Comp. |

Table 8-1

| Precoated metal sheet no. | Metal sheet | Resin (A1) | Ceramic particles | | Anti-corrosive pigment (C) | | Silane coupling agent (s) | Coat thickness (μm) | Weldability | Formability | Corrosion resistance | | Remarks |
|---|---|---|---|---|---|---|---|---|---|---|---|---|---|
| | | | Type | Content (vol%) | Type | Content (vol%) | | | | | Flat parts | Worked parts | |
| 456 | GA | A11 | LaB | 0.6 | i3 | 8.0 | - | 5.0 | 3 | 5 | 5 | 5 | Inv. |
| 457 | GA | A11 | LaB | 1.2 | i3 | 8.0 | - | 5.0 | 4 | 5 | 5 | 5 | Inv. |
| 458 | GA | A11 | LaB | 2.0 | i3 | 8.0 | - | 5.0 | 5 | 5 | 5 | 5 | Inv. |
| 459 | GA | A11 | LaB | 4.0 | i3 | 8.0 | - | 5.0 | 5 | 5 | 5 | 5 | Inv. |
| 460 | GA | A11 | LaB | 6.5 | i3 | 8.0 | - | 5.0 | 5 | 5 | 5 | 5 | Inv. |
| 461 | GA | A11 | LaB | 11 | i3 | 8.0 | - | 5.0 | 5 | 5 | 5 | 5 | Inv. |
| 462 | GA | A11 | LaB | 17 | i3 | 8.0 | - | 5.0 | 5 | 5 | 5 | 5 | Inv. |
| 463 | GA | A11 | LaB | 38 | i3 | 8.0 | - | 5.0 | 5 | 5 | 5 | 5 | Inv. |
| 464 | GA | A11 | LaB | 48 | i3 | 8.0 | - | 5.0 | 5 | 3 | 4 | 3 | Inv. |
| 465 | GA | A11 | LaB | 58 | i3 | 8.0 | - | 5.0 | 5 | 3 | 3 | 3 | Inv. |
| 466 | GA | A11 | LaB | 0.4 | i3 | 8.0 | - | 5.0 | 3 | 5 | 5 | 5 | Inv. |
| 467 | GA | A11 | LaB | 63 | i3 | 8.0 | - | 5.0 | 5 | 3 | 4 | 3 | Inv. |
| 468 | GA | A11 | LaB | 6.5 | i3 | 8.0 | - | 1.5 | 5 | 5 | 4 | 3 | Inv. |
| 469 | GA | A11 | LaB | 6.5 | i3 | 8.0 | - | 2.5 | 5 | 5 | 5 | 4 | Inv. |
| 470 | GA | A11 | LaB | 6.5 | i3 | 8.0 | - | 7.5 | 5 | 5 | 5 | 5 | Inv. |
| 471 | GA | A11 | LaB | 6.5 | i3 | 8.0 | - | 14 | 5 | 5 | 5 | 5 | Inv. |
| 472 | GA | A11 | LaB | 6.5 | i3 | 8.0 | - | 20 | 5 | 5 | 5 | 5 | Inv. |
| 473 | GA | A11 | LaB | 6.5 | i3 | 8.0 | - | 28 | 3 | 4 | 5 | 5 | Inv. |
| 474 | GA | A11 | LaB | 6.5 | i3 | 8.0 | - | 33 | 3 | 3 | 5 | 5 | Inv. |
| 475 | GA | A11 | LaB | 6.5 | - | - | - | 5.0 | 5 | 5 | 2 | 1 | Comp. |
| 476 | GA | A11 | LaB | 6.5 | i3 | 0.7 | - | 5.0 | 5 | 5 | 3 | 3 | Inv. |
| 477 | GA | A11 | LaB | 6.5 | i3 | 1.5 | - | 5.0 | 5 | 5 | 3 | 3 | Inv. |
| 478 | GA | A11 | LaB | 6.5 | i3 | 3.0 | - | 5.0 | 5 | 5 | 5 | 4 | Inv. |

(continued)

| Precoated metal sheet no. | Metal sheet | Resin (A1) | Ceramic particles | | Anti-corrosive pigment (C) | | Silane coupling agent (s) | Coat thickness (μm) | Weldability | Formability | Corrosion resistance | | Remarks |
|---|---|---|---|---|---|---|---|---|---|---|---|---|---|
| | | | Type | Content (vol%) | Type | Content (vol%) | | | | | Flat parts | Worked parts | |
| 479 | GA | A11 | LaB | 6.5 | i3 | 13 | - | 5.0 | 5 | 5 | 5 | 5 | Inv. |
| 480 | GA | A11 | LaB | 6.5 | i3 | 18 | - | 5.0 | 5 | 5 | 5 | 5 | Inv. |
| 481 | GA | A11 | LaB | 6.5 | i3 | 23 | - | 5.0 | 5 | 5 | 5 | 5 | Inv. |
| 482 | GA | A11 | LaB | 0.6 | i3 | 8.0 | s1 | 5.0 | 3 | 5 | 5 | 5 | Inv. |
| 483 | GA | A11 | LaB | 1.2 | i3 | 8.0 | s1 | 5.0 | 3 | 5 | 5 | 5 | Inv. |
| 484 | GA | A11 | LaB | 2.0 | i3 | 8.0 | s1 | 5.0 | 4 | 5 | 5 | 5 | Inv. |
| 485 | GA | A11 | LaB | 4.0 | i3 | 8.0 | s1 | 5.0 | 4 | 5 | 5 | 5 | Inv. |
| 486 | GA | A11 | LaB | 6.5 | i3 | 8.0 | s1 | 5.0 | 5 | 5 | 5 | 5 | Inv. |
| 487 | GA | A11 | LaB | 11 | i3 | 8.0 | s1 | 5.0 | 5 | 5 | 5 | 5 | Inv. |
| 488 | GA | A11 | LaB | 17 | i3 | 8.0 | s1 | 5.0 | 5 | 5 | 5 | 5 | Inv. |
| 489 | GA | A11 | LaB | 38 | i3 | 8.0 | s1 | 5.0 | 5 | 5 | 4 | 4 | Inv. |
| 490 | GA | A11 | LaB | 48 | i3 | 8.0 | s1 | 5.0 | 5 | 3 | 3 | 3 | Inv. |
| 491 | GA | A11 | LaB | 58 | i3 | 8.0 | s1 | 5.0 | 5 | 3 | 3 | 3 | Inv. |
| 492 | GA | A11 | LaB | 6.5 | - | - | s1 | 5.0 | 5 | 5 | 3 | 2 | Comp. |
| 493 | GA | A11 | NiSi | 0.6 | i3 | 8.0 | - | 5.0 | 3 | 5 | 5 | 5 | Inv. |
| 494 | GA | A11 | NiSi | 1.2 | i3 | 8.0 | - | 5.0 | 3 | 5 | 5 | 5 | Inv. |
| 495 | GA | A11 | NiSi | 2.0 | i3 | 8.0 | - | 5.0 | 4 | 5 | 5 | 5 | Inv. |
| 496 | GA | A11 | NiSi | 4.0 | i3 | 8.0 | - | 5.0 | 4 | 5 | 5 | 5 | Inv. |
| 497 | GA | A11 | NiSi | 6.5 | i3 | 8.0 | - | 5.0 | 4 | 5 | 5 | 5 | Inv. |
| 498 | GA | A11 | NiSi | 11 | i3 | 8.0 | - | 5.0 | 5 | 5 | 5 | 5 | Inv. |
| 499 | GA | A11 | NiSi | 17 | i3 | 8.0 | - | 5.0 | 5 | 5 | 5 | 5 | Inv. |
| 500 | GA | A11 | NiSi | 38 | i3 | 8.0 | - | 5.0 | 5 | 5 | 4 | 4 | Inv. |
| 501 | GA | A11 | NiSi | 48 | i3 | 8.0 | - | 5.0 | 5 | 3 | 3 | 3 | Inv. |

(continued)

| Precoated metal sheet no. | Metal sheet | Resin (A1) | Ceramic particles | | Anti-corrosive pigment (C) | | Silane coupling agent (s) | Coat thickness (μm) | Weldability | Formability | Corrosion resistance | | Remarks |
|---|---|---|---|---|---|---|---|---|---|---|---|---|---|
| | | | Type | Content (vol%) | Type | Content (vol%) | | | | | Flat parts | Worked parts | |
| 502 | GA | A11 | NiSi | 58 | i3 | 8.0 | - | 5.0 | 5 | 3 | 3 | 3 | Inv. |
| 503 | GA | A11 | NiSi | 0.4 | i3 | 8.0 | - | 5.0 | 3 | 5 | 5 | 5 | Inv. |
| 504 | GA | A11 | NiSi | 63 | i3 | 8.0 | - | 5.0 | 5 | 3 | 4 | 3 | Inv. |
| 505 | GA | A11 | NiSi | 6.5 | i3 | 8.0 | - | 1.5 | 5 | 5 | 3 | 3 | Inv. |
| 506 | GA | A11 | NiSi | 6.5 | i3 | 8.0 | - | 2.5 | 5 | 5 | 5 | 4 | Inv. |
| 507 | GA | A11 | NiSi | 6.5 | i3 | 8.0 | - | 7.5 | 5 | 5 | 5 | 5 | Inv. |
| 508 | GA | A11 | NiSi | 6.5 | i3 | 8.0 | - | 14 | 5 | 5 | 5 | 5 | Inv. |
| 509 | GA | A11 | NiSi | 6.5 | i3 | 8.0 | - | 20 | 5 | 4 | 5 | 5 | Inv. |
| 510 | GA | A11 | NiSi | 6.5 | i3 | 8.0 | - | 28 | 3 | 3 | 5 | 5 | Inv. |
| 511 | GA | A11 | NiSi | 6.5 | i3 | 8.0 | - | 33 | 3 | 3 | 5 | 5 | Inv. |
| 512 | GA | A11 | NiSi | 6.5 | - | - | - | 5.0 | 5 | 5 | 2 | 1 | Comp. |

Table 8-2

| Precoated metal sheet no. | Metal sheet | Resin (A1) | Ceramic particles | | Anti-corrosive pigment (C) | | Silane coupling agent (s) | Coat thickness (μm) | Weldability | Formability | Corrosion resistance | | Remarks |
|---|---|---|---|---|---|---|---|---|---|---|---|---|---|
| | | | Type | Content (vol%) | Type | Content (vol%) | | | | | Flat parts | Worked parts | |
| 513 | GA | A11 | NiSi | 6.5 | i3 | 0.7 | - | 5.0 | 5 | 5 | 3 | 3 | Inv. |
| 514 | GA | A11 | NiSi | 6.5 | i3 | 1.5 | - | 5.0 | 5 | 5 | 4 | 3 | Inv. |
| 515 | GA | A11 | NiSi | 6.5 | i3 | 3.0 | - | 5.0 | 5 | 5 | 5 | 5 | Inv. |
| 516 | GA | A11 | NiSi | 6.5 | i3 | 13 | - | 5.0 | 5 | 5 | 5 | 5 | Inv. |
| 517 | GA | A11 | NiSi | 6.5 | i3 | 18 | - | 5.0 | 5 | 5 | 5 | 5 | Inv. |
| 518 | GA | A11 | NiSi | 6.5 | i3 | 23 | - | 5.0 | 5 | 4 | 5 | 5 | Inv. |
| 519 | GA | A11 | NiSi | 0.6 | i3 | 8.0 | s1 | 5.0 | 3 | 5 | 5 | 5 | Inv. |
| 520 | GA | A11 | NiSi | 1.2 | i3 | 8.0 | s1 | 5.0 | 4 | 5 | 5 | 5 | Inv. |
| 521 | GA | A11 | NiSi | 2.0 | i3 | 8.0 | s1 | 5.0 | 4 | 5 | 5 | 5 | Inv. |
| 522 | GA | A11 | NiSi | 4.0 | i3 | 8.0 | s1 | 5.0 | 4 | 5 | 5 | 5 | Inv. |
| 523 | GA | A11 | NiSi | 6.5 | i3 | 8.0 | s1 | 5.0 | 4 | 5 | 5 | 5 | Inv. |
| 524 | GA | A11 | NiSi | 11 | i3 | 8.0 | s1 | 5.0 | 5 | 5 | 5 | 5 | Inv. |
| 525 | GA | A11 | NiSi | 17 | i3 | 8.0 | s1 | 5.0 | 5 | 5 | 5 | 5 | Inv. |
| 526 | GA | A11 | NiSi | 38 | i3 | 8.0 | s1 | 5.0 | 5 | 5 | 5 | 5 | Inv. |
| 527 | GA | A11 | NiSi | 48 | i3 | 8.0 | s1 | 5.0 | 5 | 4 | 4 | 3 | Inv. |
| 528 | GA | A11 | NiSi | 58 | i3 | 8.0 | s1 | 5.0 | 5 | 3 | 4 | 3 | Inv. |
| 529 | GA | A11 | NiS | 6.5 | - | - | s1 | 5.0 | 5 | 5 | 2 | 1 | Comp. |
| 530 | GA | A11 | TiC | 6.5 | i3 | 8.0 | - | 2.5 | 3 | 5 | 4 | 4 | Inv. |
| 531 | GA | A11 | TiC | 6.5 | i3 | 8.0 | - | 5.0 | 5 | 5 | 5 | 5 | Inv. |
| 532 | GA | A11 | TiN+VC | 6.5 | i3 | 8.0 | - | 2.5 | 5 | 5 | 5 | 4 | Inv. |
| 533 | GA | A11 | TiN+VC | 6.5 | i3 | 8.0 | - | 5.0 | 5 | 5 | 5 | 5 | Inv. |
| 534 | GA | A11 | VC+ZrB | 6.5 | i3 | 8.0 | - | 2.5 | 5 | 5 | 5 | 4 | Inv. |
| 535 | GA | A11 | VC+ZrB | 6.5 | i3 | 8.0 | - | 5.0 | 5 | 5 | 5 | 5 | Inv. |

(continued)

| Precoated metal sheet no. | Metal sheet | Resin (A1) | Ceramic particles | | Anti-corrosive pigment (C) | | Silane coupling agent (s) | Coat thickness (μm) | Weldability | Formability | Corrosion resistance | | Remarks |
|---|---|---|---|---|---|---|---|---|---|---|---|---|---|
| | | | Type | Content (vol%) | Type | Content (vol%) | | | | | Flat parts | Worked parts | |
| 536 | GA | A11 | ZrB+Tic | 6.5 | i3 | 8.0 | - | 2.5 | 5 | 5 | 5 | 4 | Inv. |
| 537 | GA | A11 | ZrB+Tic | 6.5 | i3 | 8.0 | - | 5.0 | 5 | 5 | 5 | 5 | Inv. |

In the precoated metal sheet of the invention examples, regardless of the types of the metal sheet, resin (A1), and non-oxide ceramic particles (B), excellent weldability, formability, and corrosion resistance can all be achieved. What should be particularly noted about the performance of the precoated metal sheet of the invention examples is as follows:

In the examples, when using the resins A11 (carboxyl group-containing polyester-based urethane resin) and A12 (sulfonic acid group-containing polyester-based urethane resin), compared with when using A13 (sulfonic acid group-containing polyester resin), A14 (amino group-containing epoxy resin), and A15 (nonionic polyether-based urethane resin), the formability and the corrosion resistance tend to be excellent. The reason is believed to be as follows: As explained in the section on the Organic Resin (A), if the structure of the resin (A1) contains a carboxyl group, sulfonic acid group, amino group, or other groups of the group of polar functional groups, the adhesion with the base material constituted by a metal sheet (when there is a primer, the primer layer) is improved and the forming flexibility of the coat ($\alpha$) (coat adhesion, crack resistance, etc.) and the corrosion resistance etc. can be improved. Further, as stated in the same section of the "Organic Resin (A)", if the resin (A1) is a polyurethane resin or modified polyurethane resin, since the urethane groups (-NHCOO-) in the structure have a considerably higher molecular cohesive energy compared with other organic groups, the effect that the coat becomes tougher and, at the time of press-forming, coat peeling or galling become harder and in addition the relatively high cohesive energy causes the coverage of corrosive factors (density of coat) to improve and raises the corrosion resistance. In this way, the mechanism differs, but when the resin structure contains a carboxyl groups, sulfonic acid group, amino group, or other groups of the group of polar functional groups and when the resin structure contains a urethane group (-NHCOO-), the formability and the corrosion resistance rises. The resins A11 and A12 have both the group of polar functional groups and urethane groups in the resin structure, so compared with the case of A13, A14, and A15 which only have one, the formability and the corrosion resistance tend to be excellent.

By mixing the silane coupling agent in the coating composition or providing a primer film between the coat and the metal sheet surface, compared with otherwise, the corrosion resistance of the coat tends to be improved. If the content of the non-oxide ceramic particles (B) in the coat is greater than the preferable range (0.5 to 60 vol%), the formability and the corrosion resistance are easily detrimentally affected. When the coat thickness is thinner than the preferable range of thickness (2 to 30 $\mu$m thickness), the corrosion resistance tends to be low, while when thicker, the weldability and the formability tend to fall. When using non-oxide ceramic particles (TaN, VN, and $CrSi_2$) with an electrical resistivity of over $185\times10^{-6}$ $\Omega$cm, the desired weldability cannot be obtained.

In precoated metal sheet which is obtained using the the leading electroconductive particles (aluminum particles, isotropic graphite particles, electroconductive zinc oxide particles, ferrosilicon No. 2 particles) which is used in the prior art (group of patent literature shown in the section on "Background Art"), it is necessary to add a large amount of these electroconductive particles so as to obtain a sufficient resistance weldability. In this case, the press-formability or corrosion resistance remarkably falls.

Note that, the documented value of the electrical resistivity of aluminum is somewhat lower than the electrical resistivity of the non-oxide ceramic particles (B) which are used in the present invention, but in the same way as isotropic graphite particles, electroconductive zinc oxide particles, and ferrosilicon no. 2 particles, a large amount has to be added to the coat to obtain sufficient resistance weldability. This is because aluminum particles are easily formed with aluminum oxide insulating layers (bayerite) of several hundred nm thickness on the particle surfaces due to the moisture in the storing atmosphere, so as long as not stored in an absolute dry atmosphere, the particles rise in electrical resistivity.

Even when using non-oxide ceramic particles (B) constituted by a mixture of the non-oxide ceramic particles of the components of the present invention in any ratio, advantageous effects similar to the case of use alone are exhibited.

Example II

Next, the effects which the particle diameter of the non-oxide ceramic particles (B) and the number which are arranged on the surface of the metal sheet have on the weldability and the effects which the ratio (D1/B) of the total volume of the metal oxide nanoparticles (D1) in the form of primary particles (1 nm to 100 nm) with respect to the total volume of the non-oxide ceramic particles (B) have on the weldability will be specifically explained by Example II.

1. Preparation of Metal Sheet

The following five types of galvanized steel sheet the same as those which were used in Example I were prepared and treated in the same way as Example I to obtain metal sheet for coating use:

EG: electrogalvanized steel sheet (sheet thickness 0.8 mm, plating deposition 40 g/$m^2$)
ZL: Electrolytic Zn-10%Ni alloy plated steel sheet (sheet thickness 0.8 mm, plating deposition 40 g/$m^2$)
GI: Hot dip galvanized steel sheet (sheet thickness 0.8 mm, plating deposition 60 g/$m^2$)
SD: Hot dip Zn-11%Al-3%Mg-0.2%Si alloy plated steel sheet (sheet thickness 0.8 mm, plating deposition 60 g/$m^2$)

GA: Hot dip galvannealed steel sheet (sheet thickness 0.8 mm, 10% Fe, plating deposition 45 g/$m^2$)

2. Primer Film

In Example II, the metal sheet for coating use which was used was evaluated without providing a primer film.

3. Preparation of Water-Based Coating Composition and Film Formation

To prepare a water-based coating composition, first, the resin (A1), non-oxide ceramic particles (B), electroconductive particles other than (B), and an anti-corrosive pigment (C) were prepared.

(1) Resin (A1)

The resin A11 which was synthesized in Example I was used in Example II.

(2) Non-Oxide Ceramic Particles (B) Commercially available microparticles (reagent) were used. The volume average size was measured by using a Beckman Coulter Multisizer 3 (precision particle diameter distribution measuring apparatus using the Coulter principle). The electrical resistivity was found by using the microparticles to prepare a length 80 mm, width 50 mm, thickness 2 to 4 mm sintered sheet and measuring it by the four-terminal, four-probe method using Resistivity Meter Loresta EP (Mitsubishi Chemical Analytech Co., Ltd., MCP-T360) and ESP probe (diameter of flat head of terminal of 2 mm) and the constant current application system based on JIS K 7194 at 25°C.

(made by Wako Pure Chemical Industries Ltd., volume average size 1.6 μm, electrical resistivity $20\times10^{-6}$ Ωcm)
ZrB: $ZrB_2$ microparticles (made by Wako Pure Chemical Industries Ltd., volume average size 2.2 μm, electrical resistivity $70\times10^{-6}$ Ωcm)
NiSi: $Ni_2Si$ microparticles (obtained by adding water to NII11PB made by Kojundo Chemical Laboratory Co., Ltd., stirring and suspending it, and obtaining by filtration the microparticles which float up after the elapse of 5 minutes, volume average size 4.8 μm, electrical resistivity $40\times10^{-6}$ Ωcm)

(3) Anti-Corrosive Pigment (C)

i4: Magnesium hydrogen phosphate (made by Kanto Chemical Co. Inc., $MgHPO_4$) was used.

(4) Silane Coupling Agent (s)

In Example II, no silane coupling agent was used.

(5) Metal oxide nanoparticles (D1) with a particle diameter of 1 nm to less than 100 nm which includes one or more types of metal elements which are selected from Si, Ti, Al, and Zr:

on1: Silica nanoparticles with an average particle diameter of 10 to 20 nm (made by Nissan Chemical Industries Ltd., Snowtex N)
on2: Average particle diameter 70 to 100 nm silica nanoparticles (made by Nissan Chemical Industries Ltd., Snowtex ZL)
on3: Colloidal alumina (made by Nissan Chemical Industries Ltd., Aluminasol 100)
on4: Average particle diameter 40 nm nano zirconia dispersion (made by Sumitomo Osaka Cement)

(6) Metal oxide (D2) with a particle diameter of 100 nm or more which includes one or more types of metal elements which are selected from Si, Ti, Al, and Zr:

o1: Average particle diameter 0.25 μm titania microparticles (made by Ishihara Sangyo Kaisha, Ltd., CR-EL)
o2: Average particle diameter 0.7 μm silica microparticles (made by Denki Kagaku Kogyo Kabushiki Kaisha, SFP-30M)
o3: Average particle diameter 1.5 μm silica microparticles (made by Corefront Corporation, Sicastar 43-00-153)

Next, the resin (A1), non-oxide ceramic particles (B), anti-corrosive pigment (C), and distilled water were used to prepare water-based coating compositions by various ratios of composition.

Among the non-oxide ceramic particles (B), the number of particle diameter 1 to 24 μm particles (B1) which are arranged at the surface of the metal sheet was determined as follows: First, the above-mentioned Beckman Coulter Multisizer 3 was used to find the particle diameter distribution based on the volume of the non-oxide ceramic particles (B) and find the number of particle diameter 1 to 24 μm particles which are contained per unit volume of the ceramic

ceramic particles (B) (number (B1)/vol(B)) (unit: /$\mu m^3$). This was calculated as the quotient obtained by dividing the number (number (B1)) of particle diameter 1 to 24 $\mu$m particles (B1) which can be found from the frequency distribution of the number of particles with respect to the particle diameter in the above particle diameter distribution by the total volume (volume (B)) of the non-oxide ceramic particles (B) which are used to measurement the particle diameter distribution. The total volume (volume (B)) of the non-oxide ceramic particles (B) was calculated by totaling up the average particle volume in each particle diameter class in the frequency distribution and the cumulative total of the particles. The following formula was used to calculate the number of particle diameter 1 to 24 $\mu$m particles (B1) which are arranged on the surface of the metal sheet from the (number (B1)/vol (B)), average coat thickness (aveT) (unit: $\mu$m), and volume fraction of the non-oxide ceramic particles (B) in the coat (fraction (B)).

$$\text{Number of particle diameter 1 to 24 } \mu\text{m particles (B1) which are arranged at the surface of the metal sheet (unit: /mm}^2\text{)} = (\text{number(B1)/vol(B)}) \times (\text{aveT}) \times (\text{fraction(B)}) \times 10^6$$

In Example II, the above technique was used to calculate the number of particle diameter 1 to 24 $\mu$m particles (B1) which are arranged at the surface of the metal sheet, but in the case of a precoated metal sheet which is already coated and therefore the coat composition is not known, the precoated metal sheet can be analyzed as explained below to calculate the number of particles (B1) which are arranged at the surface of the metal sheet.

The amount of non-oxide ceramic particles (B) (including particle diameter 1 to 24 $\mu$m non-oxide ceramic particles (B1)) and the amount of anti-corrosive pigment (C) (including the amount of particle diameter 1 nm to less than 100 nm metal oxide microparticles (D1) and particle diameter 100 nm or more metal oxide microparticles (D2)) can be calculated by observing the coat cross-section by an electron microscope, differentiating the particles, counting the numbers per cross-section, and converting them to the numbers per coat volume. In this case, if necessary, it is possible to use an EDX spectroanalysis system etc. to differentiate the particles.

It is also possible to use the amounts of the particles (B) (including (B1)) and the pigment (C) (including (D1) and (D2)) which are contained in the coating before application and the amount of deposition of the coat on the metal sheet (product of amount of deposition of coating on metal sheet and ratio of nonvolatile constituents in coating) to calculate the amounts of particles in the coat. In this case, for example, a Malvern particle image analyzing system Morphologi G3 or other system may be used to individually discriminate and count by image analysis the particles in the coating which has been diluted to a suitable concentration so as to calculate the number. This technique can also be used when dissolving the coat which has been deposited on the metal sheet so as to count the number of particles.

Tables 9 show the types and contents in the coat (unit: vol%) of the resin (A1), non-oxide ceramic particles (B) (including (B1)), and anti-corrosive pigment (C) (including (D1) and (D2)) which are contained in the nonvolatile constituents of the water-based coating compositions. The (D1/B) ratio is also shown in Tables 9.

The water-based coating composition was prepared, the components were made to uniformly disperse, then the composition was coated on a metal sheet for coating use or a metal sheet provided with a primer film using a roll coater. This was dried by a hot air furnace at a metal surface peak temperature of 200°C, water cooled, then air dried. Tables 9 show the coat thickness after film formation (unit: $\mu$m) and the number of particles (B1) which are arranged at the surface of the metal sheet (unit: /$mm^2$). Note that, the coat thickness was calculated by dividing the difference in mass before and after peeling of the coat after coating by the coat specific gravity. The coat specific gravity was calculated from the amounts of the components which form the coat and the known specific gravities of the components.

4. Evaluation of Performance

Each precoated metal sheet which was prepared by the above method was evaluated for weldability, formability, and corrosion resistance. Below, the methods of the tests and evaluation are shown.

(1) Suitable Weldability

Two precoated metal sheets of the same specifications were spot welded in a test using tip size 5 mm, R40 CF type Cr-Cu electrodes at a welding pressure of 1.96 kN and a welding time of 12 cycles/50Hz while changing the welding current. The weld current was raised from 3 kA by 0.1 kA increments for welding. The presence of any phenomenon of metal sheet and coat melted or heat decomposed at the time of welding being explosively ejected from between the precoated metal sheet and the electrodes (explosive splatter) was observed. When forming a weld nugget,

the nugget size (average of long axis and short axis of nuggets) was measured. The minimum current where the nugget size becomes 3√t ("t" is the sheet thickness) or more was made the "minimum current for nugget formation", while the minimum current where explosive splatter occurs was made the "minimum current for explosive splatter". (Minimum current for explosive splatter)-(minimum current for nugget formation) was made the "suitable welding current range". The following scores were used to evaluate the level of suitable weldability. The suitable welding current range is an indicator of whether a sufficient nugget size is secured for securing weld strength and whether the explosively splattered components redeposit on the precoated metal sheet to thereby degrade the appearance or a drop in corrosion resistance or other problems arise and therefore whether good welding is easy (precoated metal sheet with large suitable welding current range is easily welded well). The suitable welding current range becomes a discrete value of 0.1 kA intervals for this measurement method. Even if the score is low, weld strength is secured if nuggets are formed, but as explained above, there can be problems such as deterioration of the appearance or a drop in the corrosion resistance and sometimes the weld zone has to be touched up etc.

5: Suitable welding current range of 2 kA or more
4: Suitable welding current range of 1.5 kA to less than 2.0 kA
3: Suitable welding current range of 1.0 kA to less than 1.5 kA
2: Suitable welding current range of 0.5 kA to less than 1.0 kA
1: Suitable welding current range of less than 0.5 kA (including case of minimum current of occurrence of explosion < minimum current of formation of nuggets)

(2) The method of evaluation of the formability was the same as Example I.

(3) Corrosion Resistance

From each precoated metal sheet which was prepared by the above method, a 150×70 mm size rectangular test piece was cut out. The ends were sealed with resin to obtain a test piece for corrosion resistance of the flat part. Further, the tubular cup shaped member of the above (2) was dipped in a water-based degreasing agent (made by Nippon Paint, EC-92) 2 mass% in a 40°C aqueous solution, degreased at its surface, rinsed and dried to obtain a test piece for evaluation of the corrosion resistance of the worked part after forming. Further, a 70x70 mm size square test piece was cut out, was bent 1T (test piece sandwiched between plates of the same thickness and bent 180 degrees), and was sealed at the ends by resin to obtain a test piece for the corrosion resistance of the 1T bent part.

These test pieces were subjected to cyclic corrosion tests using the total 8 hours of 2 hours of salt spraying, 4 hours of drying, and 2 hours of wetting as one cycle. The conditions of the salt spray test were based on JIS-Z2371. The drying conditions were a temperature 60°C and a humidity 30%RH or less, while the wetting conditions were a temperature of 50°C and a humidity 95%RH or more. For part of the standards, the test was extended to 1000 cycles. The inventors investigated the state of red rusting of the worked parts and used the following evaluation points to evaluate the level of the corrosion resistance of the worked parts.

6: No red rusting at 1000 cycles
5: No red rusting at 600 cycles
4: No red rusting at 450 cycles
3: No red rusting at 300 cycles
2: No red rusting at 150 cycles
1: Red rusting at 150 cycles

Tables 9 show the results of evaluation together.

Table 9-1

| Precoated metal sheet no. | Metal sheet | Resin (A1) | Ceramic particles (B) | | | | Anti-corrosive pigment (C) | | | | | | (B1/B) | Coat thick-ness (μm) | Weld-ability | Form-ability | Corrosion resistance at 600 cycles | | Suitable weld-ability | Corrosion resistance at 1000 cycles | | | Remarks |
|---|---|---|---|---|---|---|---|---|---|---|---|---|---|---|---|---|---|---|---|---|---|---|---|
| | | | Type | Aver. part. size | Content of (B) in coat (vol%) | No. of part. size 1 to 24 μm (B1) on metal sheet surface ($/mm^2$) | Type | Content (vol%) | In (C), part. size 1 to 100 nm metal oxide particles (B1) | Content of (B1) in coat (vol%) | In (C), part. size over 100 nm metal oxide particles (B2) | Content of (B2) in coat (vol%) | | | | | Flat parts | Worked parts | | Flat parts | Worked parts (cup) | Worked parts (1T) | |
| II-a-1 | EG | A11 | ZrB | 2.2 | 0.6 | 16.1 | i4 | 8 | on1 | 4 | on1 | - | 6.667 | 5 | 3 | 5 | | | 2 | 6 | 6 | 4 | Inv. |
| II-a-2 | EG | A11 | ZrB | 2.2 | 2 | 53.8 | i4 | 8 | on1 | 4 | on1 | - | 2 | 5 | 4 | 5 | | | 3 | 6 | 6 | 4 | Inv. |
| II-a-3 | EG | A11 | ZrB | 2.2 | 6.5 | 174.9 | i4 | 8 | on1 | 4 | on1 | - | 0.615 | 5 | 5 | 5 | | | 4 | 6 | 5 | 4 | Inv. |
| II-a-4 | EG | A11 | ZrB | 2.2 | 17 | 457.3 | i4 | 8 | on1 | 4 | on1 | - | 0.235 | 5 | 5 | 5 | | | 5 | 5 | 5 | 4 | Inv. |
| II-a-5 | EG | A11 | ZrB | 2.2 | 58 | 1560.2 | i4 | 8 | on1 | 4 | on1 | - | 0.069 | 5 | 5 | 3 | | | 5 | 3 | 3 | 2 | Inv. |
| II-a-6 | EG | A11 | ZrB | 2.2 | 0.4 | 6.5 | i4 | 8 | on1 | 4 | on1 | - | 10 | 3 | 5 | 5 | | | 3 | 5 | 5 | 5 | Inv. |
| II-a-8 | EG | A11 | ZrB | 2.2 | 6.5 | 17.5 | i4 | 8 | on1 | 4 | on1 | - | 0.615 | 0.5 | 5 | 5 | | | 5 | 2 | 1 | 1 | Comp. |
| II-a-9 | EG | A11 | ZrB | 2.2 | 6.5 | 35.0 | i4 | 8 | on1 | 4 | on1 | - | 0.615 | 1 | 5 | 5 | | | 5 | 3 | 2 | 2 | Inv. |
| II-a-10 | EG | A11 | ZrB | 2.2 | 6.5 | 52.5 | i4 | 8 | on1 | 4 | on1 | - | 0.615 | 1.5 | 5 | 5 | | | 5 | 4 | 3 | 3 | Inv. |
| II-a-11 | EG | A11 | ZrB | 2.2 | 6.5 | 87.4 | i4 | 8 | on1 | 4 | on1 | - | 0.615 | 2.5 | 5 | 5 | | | 5 | 4 | 3 | 3 | Inv. |
| II-a-12 | EG | A11 | ZrB | 2.2 | 6.5 | 699.4 | i4 | 8 | on1 | 4 | on1 | - | 0.615 | 20 | 5 | 4 | | | 2 | 6 | 6 | 5 | Inv. |
| II-a-13 | EG | A11 | ZrB | 2.2 | 6.5 | 1154.0 | i4 | 8 | on1 | 4 | on1 | - | 0.615 | 33 | 3 | 4 | | | 1 | 6 | 6 | 5 | Comp. |
| II-a-14 | GI | A11 | ZrB | 2.2 | 0.6 | 16.1 | i4 | 8 | on1 | 4 | on1 | - | 6.667 | 5 | 3 | 5 | | | 2 | 6 | 6 | 4 | Inv. |
| II-a-15 | GI | A11 | ZrB | 2.2 | 2 | 53.8 | i4 | 8 | on1 | 4 | on1 | - | 2 | 5 | 4 | 5 | | | 3 | 6 | 6 | 4 | Inv. |
| II-a-16 | GI | A11 | ZrB | 2.2 | 6.5 | 174.9 | i4 | 8 | on1 | 4 | on1 | - | 0.615 | 5 | 5 | 5 | | | 4 | 6 | 5 | 4 | Inv. |
| II-a-17 | GI | A11 | ZrB | 2.2 | 17 | 457.3 | i4 | 8 | on1 | 4 | on1 | - | 0.235 | 5 | 5 | 5 | | | 5 | 5 | 5 | 4 | Inv. |
| II-a-18 | GI | A11 | ZrB | 2.2 | 58 | 1560.2 | i4 | 8 | on1 | 4 | on1 | - | 0.069 | 5 | 5 | 3 | | | 5 | 3 | 3 | 3 | Inv. |
| II-a-19 | SD | A11 | ZrB | 2.2 | 0.6 | 16.1 | i4 | 8 | on1 | 4 | on1 | - | 6.667 | 5 | 3 | 5 | | | 2 | 6 | 6 | 4 | Inv. |
| II-a-20 | SD | A11 | ZrB | 2.2 | 2 | 53.8 | i4 | 8 | on1 | 4 | on1 | - | 2 | 5 | 4 | 5 | | | 3 | 6 | 6 | 4 | Inv. |
| II-a-21 | SD | A11 | ZrB | 2.2 | 6.5 | 174.9 | i4 | 8 | on1 | 4 | on1 | - | 0.615 | 5 | 5 | 5 | | | 4 | 6 | 5 | 4 | Inv. |
| II-a-22 | SD | A11 | ZrB | 2.2 | 17 | 457.3 | i4 | 8 | on1 | 4 | on1 | - | 0.235 | 5 | 5 | 5 | | | 5 | 5 | 5 | 4 | Inv. |
| II-a-23 | SD | A11 | ZrB | 2.2 | 58 | 1560.2 | i4 | 8 | on1 | 4 | on1 | - | 0.069 | 5 | 5 | 4 | | | 5 | 3 | 3 | 3 | Inv. |
| II-a-24 | ZL | A11 | ZrB | 2.2 | 0.6 | 16.1 | i4 | 8 | on1 | 4 | on1 | - | 6.667 | 5 | 3 | 5 | | | 2 | 6 | 6 | 4 | Inv. |
| II-a-25 | ZL | A11 | ZrB | 2.2 | 2 | 53.8 | i4 | 8 | on1 | 4 | on1 | - | 2 | 5 | 4 | 5 | | | 3 | 6 | 6 | 4 | Inv. |
| II-a-26 | ZL | A11 | ZrB | 2.2 | 6.5 | 174.3 | i4 | 8 | on1 | 4 | on1 | - | 0.615 | 5 | 5 | 5 | | | 4 | 6 | 5 | 4 | Inv. |
| II-a-27 | ZL | A11 | ZrB | 2.2 | 17 | 457.3 | i4 | 8 | on1 | 4 | on1 | - | 0.235 | 5 | 5 | 5 | | | 5 | 5 | 5 | 4 | Inv. |
| II-a-28 | ZL | A11 | ZrB | 2.2 | 58 | 1560.2 | i4 | 8 | on1 | 4 | on1 | - | 0.069 | 5 | 5 | 4 | | | 5 | 4 | 3 | 3 | Inv. |
| II-a-29 | GA | A11 | ZrB | 2.2 | 0.6 | 16.1 | i4 | 8 | on1 | 4 | on1 | - | 6.667 | 5 | 3 | 5 | | | 2 | 6 | 6 | 4 | Inv. |
| II-a-30 | GA | A11 | ZrB | 2.2 | 2 | 53.8 | i4 | 8 | on1 | 4 | on1 | - | 2 | 5 | 4 | 5 | | | 3 | 6 | 6 | 4 | Inv. |
| II-a-31 | GA | A11 | ZrB | 2.2 | 6.5 | 174.9 | i4 | 8 | on1 | 4 | on1 | - | 0.615 | 5 | 5 | 5 | | | 4 | 6 | 5 | 4 | Inv. |
| II-a-32 | GA | A11 | ZrB | 2.2 | 17 | 457.3 | i4 | 8 | on1 | 4 | on1 | - | 0.235 | 5 | 5 | 5 | | | 5 | 5 | 5 | 4 | Inv. |
| II-a-33 | GA | A11 | ZrB | 2.2 | 58 | 1560.2 | i4 | 8 | on1 | 4 | on1 | - | 0.069 | 5 | 5 | 3 | | | 5 | 3 | 3 | 3 | Inv. |
| II-b-1 | GA | A11 | TiN | 1.6 | 0.6 | 30.1 | i4 | 8 | on1 | 4 | on1 | - | 6.667 | 5 | 2 | 5 | | | 2 | 6 | 6 | 4 | Inv. |
| II-b-2 | GA | A11 | TiN | 1.6 | 1.2 | 60.1 | i4 | 8 | on1 | 4 | on1 | - | 3.333 | 5 | 4 | 5 | | | 3 | 6 | 6 | 4 | Inv. |
| II-b-3 | GA | A11 | TiN | 1.6 | 2 | 100.2 | i4 | 8 | on1 | 4 | on1 | - | 2 | 5 | 4 | 5 | | | 5 | 6 | 6 | 4 | Inv. |
| II-b-4 | GA | A11 | TiN | 1.6 | 4 | 200.4 | i4 | 8 | on1 | 4 | on1 . | - | 1 | 5 | 4 | 5 | | | 5 | 6 | 6 | 4 | Inv. |
| II-b-5 | GA | A11 | TiN | 1.6 | 0.6 | 30.1 | i4 | 8 | None | - | None | - | 0 | 5 | 3 | 5 | | | 3 | 6 | 6 | 4 | Inv. |
| II-b-6 | GA | A11 | TiN | 1.6 | 1.2 | 60.1 | i4 | 8 | None | - | None | - | 0 | 5 | 3 | 5 | | | 4 | 6 | 6 | 4 | Inv. |
| II-b-7 | GA | A11 | TiN | 1.6 | 2 | 100.2 | i4 | 8 | None | - | None | - | 0 | 5 | 4 | 5 | | | 5 | 6 | 6 | 4 | Inv. |
| II-b-8 | GA | A11 | TiN | 1.6 | 4 | 200.4 | i4 | 8 | None | - | None | - | 0 | 5 | 4 | 5 | | | 5 | 5 | 5 | 3 | Inv. |

Table 9-2

| Precoated metal sheet no. | Metal sheet | Resin (A1) | Ceramic particles (B) | | | | Anti-corrosive pigment (C) | | | | | | (D1/B) | Coat thickness (μm) | Weldability | Formability | Corrosion resistance at 600 cycles | | Suitable weldability | Corrosion resistance at 1000 cycles | | | Remarks |
|---|---|---|---|---|---|---|---|---|---|---|---|---|---|---|---|---|---|---|---|---|---|---|---|
| | | | Type | Aver. part. size | Content of (B) in coat (vol%) | No. of part. size 1 to 24 μm (B1) on metal sheet surface (/mm$^2$) | Type | Content (vol%) | In (C), part. size 1 to 100 nm metal oxide particles (D1) | Content of (D1) in coat (vol%) | In (C), part. size over 100 nm metal oxide particles (D2) | Content of (D2) in coat (vol%) | | | | | Flat parts | Worked parts | | Flat parts | Worked parts (cup) | Worked parts (1T) | |
| II-c-1 | EG | A11 | ZrB | 2.2 | 0.8 | 40.1 | i4 | 30 | on1 | 20 | o1 | 4 | 25 | 5 | 4 | 5 | 5 | 5 | 1 | - | - | - | Comp. |
| II-c-2 | EG | A11 | ZrB | 2.2 | 0.8 | 40.1 | i4 | 30 | on1 | 16 | o1 | 8 | 20 | 5 | 4 | 5 | 5 | 5 | 2 | - | - | - | Inv. |
| II-c-4 | EG | A11 | ZrB | 2.2 | 1.6 | 80.2 | i4 | 30 | on1 | 16 | o1 | 8 | 10 | 5 | 5 | 5 | 5 | 5 | 3 | - | - | - | Inv. |
| II-c-5 | EG | A11 | ZrB | 2.2 | 1.5 | 75.1 | i4 | 30 | on1 | 24 | None | - | 16 | 5 | 5 | 5 | 5 | 5 | 3 | - | - | - | Inv. |
| II-c-6 | EG | A11 | ZrB | 2.2 | 2.5 | 125.2 | i4 | 30 | on1 | 15 | o1 | 9 | 6 | 5 | 5 | 5 | 5 | 5 | 4 | - | - | - | Inv. |
| II-c-7 | EG | A11 | ZrB | 2.2 | 2.5 | 125.2 | i4 | 30 | on1 | 8 | o1 | 16 | 3.2 | 5 | 5 | 5 | 5 | 5 | 4 | - | - | - | Inv. |
| II-c-8 | EG | A11 | ZrB | 2.2 | 2.5 | 125.2 | i4 | 30 | on1 | 5 | o1 | 19 | 2 | 5 | 5 | 5 | 5 | 5 | 5 | - | - | - | Inv. |
| II-c-9 | EG | A11 | ZrB | 2.2 | 6.5 | 325.6 | i4 | 30 | on1 | 3.25 | o1 | 20.75 | 0.5 | 5 | 5 | 5 | 5 | 5 | 5 | - | - | - | Inv. |
| II-c-10 | EG | A11 | ZrB | 2.2 | 17 | 851.6 | i4 | 1 | on1 | 4 | None | - | 0.235 | 5 | 5 | 5 | 5 | 4 | 5 | - | - | - | Inv. |
| II-c-11 | GA | A11 | ZrB | 2.2 | 0.8 | 40.1 | i4 | 30 | on1 | 20 | o1 | 4 | 25 | 5 | 4 | 5 | 5 | 5 | 1 | - | - | - | Comp. |
| II-c-12 | GA | A11 | ZrB | 2.2 | 0.8 | 40.1 | i4 | 30 | on1 | 16 | o1 | 8 | 20 | 5 | 4 | 5 | 5 | 5 | 2 | - | - | - | Inv. |
| II-c-14 | GA | A11 | ZrB | 2.2 | 1.6 | 80.2 | i4 | 30 | on1 | 16 | o1 | 8 | 10 | 5 | 5 | 5 | 5 | 5 | 3 | - | - | - | Inv. |
| II-c-15 | GA | A11 | ZrB | 2.2 | 1.5 | 75.1 | i4 | 30 | on1 | 24 | None | - | 16 | 5 | 5 | 5 | 5 | 5 | 3 | - | - | - | Inv. |
| II-c-16 | GA | A11 | ZrB | 2.2 | 2.5 | 125.2 | i4 | 30 | on1 | 15 | o1 | 9 | 6 | 5 | 5 | 5 | 5 | 5 | 4 | - | - | - | Inv. |
| II-c-17 | GA | A11 | ZrB | 2.2 | 2.5 | 125.2 | i4 | 30 | on1 | 8 | o1 | 16 | 3.2 | 5 | 5 | 5 | 5 | 5 | 4 | - | - | - | Inv. |
| II-c-18 | GA | A11 | ZrB | 2.2 | 2.5 | 125.2 | i4 | 30 | on1 | 5 | o1 | 19 | 2 | 5 | 5 | 5 | 5 | 5 | 5 | - | - | - | Inv. |
| II-c-19 | GA | A11 | ZrB | 2.2 | 6.5 | 325.6 | i4 | 30 | on1 | 3.25 | o1 | 20.75 | 0.5 | 5 | 5 | 5 | 5 | 5 | 5 | - | - | - | Inv. |
| II-c-20 | GA | A11 | ZrB | 2.2 | 17 | 851.6 | i4 | 1 | on1 | 4 | None | - | 0.235 | 5 | 5 | 5 | 5 | 4 | 5 | - | - | - | Inv. |
| II-c-21 | EG | A11 | ZrB | 2.2 | 2.5 | 125.2 | i4 | 30 | on1 | 15 | o2 | 9 | 6 | 5 | 5 | 5 | 5 | 5 | 4 | - | - | - | Inv. |
| II-c-22 | EG | A11 | ZrB | 2.2 | 2.5 | 125.2 | i4 | 30 | on1 | 5 | o2 | 19 | 2 | 5 | 5 | 5 | 5 | 5 | 5 | - | - | - | Inv. |
| II-c-23 | EG | A11 | ZrB | 2.2 | 2.5 | 125.2 | i4 | 30 | on1 | 15 | o3 | 9 | 6 | 5 | 5 | 5 | 5 | 5 | 4 | - | - | - | Inv. |
| II-c-24 | EG | A11 | ZrB | 2.2 | 2.5 | 125.2 | i4 | 30 | on1 | 5 | o3 | 19 | 2 | 5 | 5 | 5 | 5 | 5 | 5 | - | - | - | Inv. |
| II-c-25 | GA | A11 | ZrB | 2.2 | 2.5 | 125.2 | i4 | 30 | on1 | 15 | o2 | 9 | 6 | 5 | 5 | 5 | 5 | 5 | 4 | - | - | - | Inv. |
| II-c-26 | GA | A11 | ZrB | 2.2 | 2.5 | 125.2 | i4 | 30 | on1 | 5 | o2 | 19 | 2 | 5 | 5 | 5 | 5 | 5 | 5 | - | - | - | Inv. |
| II-c-27 | EG | A11 | ZrB | 2.2 | 2.5 | 125.2 | i4 | 30 | on2 | 15 | o1 | 9 | 6 | 5 | 5 | 5 | 5 | 5 | 4 | - | - | - | Inv. |
| II-c-28 | EG | A11 | ZrB | 2.2 | 2.5 | 125.2 | i4 | 30 | on2 | 5 | o1 | 19 | 2 | 5 | 5 | 5 | 5 | 5 | 5 | - | - | - | Inv. |
| II-c-29 | EG | A11 | ZrB | 2.2 | 2.5 | 125.2 | i4 | 30 | on3 | 15 | o2 | 9 | 6 | 5 | 5 | 5 | 5 | 5 | 4 | - | - | - | Inv. |
| II-c-30 | EG | A11 | ZrB | 2.2 | 2.5 | 125.2 | i4 | 30 | on3 | 5 | o2 | 19 | 2 | 5 | 5 | 5 | 5 | 5 | 5 | - | - | - | Inv. |
| II-c-31 | EG | A11 | ZrB | 2.2 | 2.5 | 125.2 | i4 | 30 | on4 | 15 | o3 | 9 | 6 | 5 | 5 | 5 | 5 | 5 | 4 | - | - | - | Inv. |
| II-c-32 | EG | A11 | ZrB | 2.2 | 2.5 | 125.2 | i4 | 30 | on4 | 5 | o3 | 19 | 2 | 5 | 5 | 5 | 5 | 5 | 5 | - | - | - | Inv. |

Table 9-3

| Precoated metal sheet no. | Metal sheet | Resin (A1) | Ceramic particles (B) | | | | Anti-corrosive pigment (C) | | | | | | (D1/B) | Coat thickness (μm) | Weldability | Formability | Corrosion resistance at 600 cycles | | Suitable weldability | Corrosion resistance at 1000 cycles | | | Remarks |
|---|---|---|---|---|---|---|---|---|---|---|---|---|---|---|---|---|---|---|---|---|---|---|---|
| | | | Type | Aver. part. size | Content of (B) in coat (vol%) | No. of part. size 1 to 24 μm (B1) on metal sheet surface (/mm$^2$) | Type | Content (vol%) | In (C), part. size 1 to 100 nm metal oxide particles (D1) | Content of (D1) in coat (vol%) | In (C), part. size over 100 nm metal oxide particles (D2) | Content of (D2) in coat (vol%) | | | | | Flat parts | Worked parts | | Flat parts | Worked parts (cup) | Worked parts (1T) | |
| II-d-1 | EG | A11 | NiSi | 4.8 | 0.6 | 0.5 | i4 | 8 | on1 | 4 | None | - | 6.667 | 1 | 5 | 5 | 4 | 4 | 3 | - | - | - | Inv. |
| II-d-2 | EG | A11 | NiSi | 4.8 | 1 | 0.8 | i4 | 8 | on1 | 4 | None | - | 4 | 1 | 5 | 5 | 3 | 3 | 5 | - | - | - | Inv. |
| II-d-3 | EG | A11 | TiN | 1.6 | 64.1 | 40000.0 | i4 | 8 | on1 | 4 | None | - | 0.062 | 30 | 5 | 3 | 5 | 5 | 5 | - | - | - | Inv. |
| II-d-4 | EG | A11 | TiN | 1.6 | 80.1 | 50000.0 | i4 | 8 | on1 | 4 | None | - | 0.05 | 30 | 5 | 2 | 5 | 5 | 5 | - | - | - | Inv. |
| II-d-5 | ZL | A11 | NiSi | 4.8 | 0.6 | 0.5 | i4 | 8 | on1 | 4 | None | - | 6.667 | 1 | 5 | 5 | 4 | 4 | 3 | - | - | - | Inv. |
| II-d-6 | ZL | A11 | NiSi | 4.8 | 1 | 0.8 | i4 | 8 | on1 | 4 | None | - | 4 | 1 | 5 | 5 | 4 | 3 | 5 | - | - | - | Inv. |
| II-d-7 | ZL | A11 | TiN | 1.6 | 64.1 | 40000.0 | i4 | 8 | on1 | 4 | None | - | 0.062 | 30 | 5 | 3 | 5 | 5 | 5 | - | - | - | Inv. |
| II-d-8 | ZL | A11 | TiN | 1.6 | 80.1 | 50000.0 | i4 | 8 | on1 | 4 | None | - | 0.05 | 30 | 5 | 2 | 5 | 5 | 5 | - | - | - | Inv. |

As explained above, in Example II, the following advantageous effects could be confirmed. The coated steel sheets of the invention examples where, among the non-oxide ceramic particles (B), the number of the particle diameter 1 to 24 μm particles (B1) which are arranged at the metal sheet surface, the (D1/B) ratio, and the coat thickness were in the ranges which were prescribed in the present invention and where the coat thickness is in the range of the present invention had a suitable weldability of a good score of 2 or more.

The larger the number of the particle diameter 1 μm to 24 μm non-oxide ceramic particles (B1) which are arranged at the metal sheet surface, the better the suitable weldability tends to become. Further, if (D1/B) is small or the thinner the coat thickness, the better the suitable weldability tends to become.

Coated steel sheets with a content of the anti-corrosive pigment (C) and a coat thickness within the ranges which are prescribed in the present invention were excellent in corrosion resistance of the flat parts, formed parts (cups), and formed parts (1T bent). Among the anti-corrosive pigments (C), if the content of the particle diameter 1 to 100 nm metal oxide particles (D1) is large, the suitable weldability falls somewhat, while the corrosion resistance is further improved as a general trend. In the anti-corrosive pigment (C), if the content of the particle diameter 1 to 100 nm metal oxide particles (D1) is equal, by adding particle diameter 100 nm or more metal oxide particles (D2), there is the effect that the corrosion resistance is improved. In this case, if (D1/B) is equal, the drop in the suitable weldability is small. If the number of non-oxide ceramic particles (B) per unit area is in the range of the present invention, the effect is exhibited that the suitable weldability is improved. When the number per area is small, compared with a large level, the suitable weldability fell. On the other hand, if too great, the improvement in the suitable weldability became saturated and the formability or corrosion resistance fell. Note that the above-mentioned non-oxide ceramic electroconductive particles have long term stability in acidic or alkali aqueous solutions, neutral water, and various non-water-based solvents, so it is possible to freely select a water-based or solvent-based coating composition which is suitable for obtaining the coat of the present invention.

As explained above, according to the present invention, by just adding specific electroconductive particles and anti-corrosive pigment to a resin-based coat, precoated metal sheet for automobile use which is excellent in resistance weldability, corrosion resistance, and formability is obtained. The above electroconductive particles have long term stability in acidic or alkali aqueous solutions, neutral water, and various non-water-based solvents, so it is possible to freely select a water-based or solvent-based coating composition which is suitable for obtaining the coat of the present invention.

## Claims

1. Precoated metal sheet for automobile use comprising a metal sheet and a coat (α) on at least one surface of said metal sheet, wherein said coat (α) comprises an organic resin (A), non-oxide ceramic particles (B) selected from at least one type of borides, carbides, nitrides, and silicides and which have an electrical resistivity at 25°C of $0.1\times10^{-6}$ to $185\times10^{-6}$ Ωcm, and an anti-corrosive pigment (C).

2. The precoated metal sheet for automobile use according to claim 1 wherein said organic resin (A) comprises an organic resin (A1) having at least one type of hydrophilic functional group.

3. The precoated metal sheet for automobile use according to claim 1 wherein said organic resin (A) comprises an organic resin (A1) having at least one type of hydrophilic functional group and a derivative (A2) of said resin (A1).

4. The precoated metal sheet for automobile use according to claim 2 or 3 wherein said organic resin (A1) has at least one type of functional group which is selected from a carboxyl group (-COOH), a carboxylate group ($-COO^-M^+$, where $M^+$ is a monovalent cation), sulfonic acid group ($-SO_3H$), sulfonate group ($-SO_3^-M^+$, where $M^+$ is a monovalent cation), primary amino group ($-NH_2$), secondary amino group ($-NHR^1$, where $R^1$ is a hydrocarbon group), tertiary amino group ($-NR^1R^2$, where $R^1$ and $R^2$ are hydrocarbon groups), quaternary ammonium salt group ($-N^+R^1R^2R^3X$-, where $R^1$, $R^2$, and $R^3$ are hydrocarbon groups, and $X^-$ is a monovalent anion), sulfonium salt group ($-S^+R^1R^2X$-, where $R^1$ and $R^2$ are hydrocarbon groups, and $X^-$ is a monovalent anion), phosphonium salt group ($-P^+R^1R^2R^3X^-$, where $R^1$, $R^2$, and $R^3$ are hydrocarbon groups, and $X^-$ is a monovalent anion).

5. The precoated metal sheet for automobile use according to claim 3 wherein the derivative (A2) of said resin (A1) is a resin ($A2_{Si}$) of the following general formula (I):

General Formula (I)

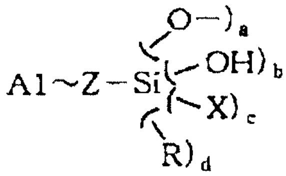

(where, "A1" indicates the organic resin (A1), "Z-" indicates a hydrocarbon chain having $C_1$ to $C_9$, $N_0$ to $N_2$, and $O_0$ to $O_2$, and "A1~Z" indicates "A1" and "Z" which are covalently bonded through functional groups of the two. Further, "-O-" is an ether bond, "-OH" is a hydroxyl group, "-X" is a $C_1$ to $C_3$ hydrolyzable alkoxy group, hydrolyzable halogeno group, or hydrolyzable acetoxy group, "-R" is a $C_1$ to $C_3$ alkyl group, and a, b, c, and d which show the numbers of substituents are all integers of 0 to 3, where a+b+c+d=3).

**6.** The precoated metal sheet for automobile use according to any one of claims 1 to 5 wherein said non-oxide ceramic particles (B) have an electrical resistivity at 25°C of $0.1\times10^{-6}$ to $100\times10^{-6}$ $\Omega$cm.

**7.** The precoated metal sheet for automobile use according to any one of claims 1 to 6 wherein among said non-oxide ceramic particles (B), the particles (B1) with a particle diameter of 1 $\mu$m to 24 $\mu$m are arranged on at least one surface of said metal sheet at a rate of $0.8/mm^2$ to $40000/mm^2$.

**8.** The precoated metal sheet for automobile use according to any one of claims 1 to 7 wherein said non-oxide ceramic particles (B) are a mixture of one or more particles selected from the group consisting of boride ceramics: $BaB_6$, $CeB_6$, $Co_2B$, CoB, FeB, $GdB_4$, $GdB_6$, $LaB_4$, $LaB_6$, $Mo_2B$, MoB, $MoB_2$, $Mo_2B_5$, $Nb_3B_2$, NbB, $Nb_3B_4$, $NbB_2$, $NdB_4$, $NdB_6$, $PrB_4$, $PrB_6$, $SrB_6$, TaB, $TaB_2$, TiB, $TiB_2$, VB, $VB_2$, $W_2B_5$, $YB_4$, $YB_6$, $YB_{12}$, and $ZrB_2$, carbide ceramics: MoC, $Mo_2C$, $Nb_2C$, NbC, $Ta_2C$, TaC, TiC, $V_2C$, VC, WC, $W_2C$, and ZrC, nitride ceramics: $Mo_2N$, $Nb_2N$, NbN, ScN, $Ta_2N$, TiN, and ZrN, and silicide ceramics: $CoSi_2$, $Mo_3Si$, $Mo_5Si_3$, $MoSi_2$, $NbSi_2$, $Ni_2Si$, $Ta_2Si$, $TaSi_2$, TiSi, $TiSi_2$, $V_5Si_3$, $VSi_2$, $W_3Si$, $WSi_2$, ZrSi, and $ZrSi_2$.

**9.** The precoated metal sheet for automobile use according to any one of claims 1 to 8 wherein said anti-corrosive pigment (C) comprises one or more types selected from silicate compounds, phosphate compounds, vanadate compounds, and metal oxide microparticles (D).

**10.** The precoated metal sheet for automobile use according to claim 9 wherein said metal oxide microparticles (D) comprise one or more types of metal elements selected from the group consisting of Si, Ti, Al, and Zr.

**11.** The precoated metal sheet for automobile use according to any one of claims 1 to 10 wherein among said metal oxide microparticles (D), the ratio (D1/B) of the total volume of the metal oxide nanoparticles (D1) with a particle diameter of 1 nm to 100 nm in said coat ($\alpha$) to the total volume of said non-oxide ceramic particles (B) is 20 or less.

**12.** The precoated metal sheet for automobile use according to any one of claims 1 to 11 wherein the content of said non-oxide ceramic particles (B) in the coat ($\alpha$) at 25°C is 0.5 to 65 vol%.

**13.** The precoated metal sheet for automobile use according to any one of claims 1 to 12 wherein said coat ($\alpha$) has a thickness of 2 to 30 $\mu$m.

**14.** The precoated metal sheet for automobile use according to any one of claims 1 to 13 wherein said coat ($\alpha$) is formed by coating a water-based coating composition.

FIG. 1

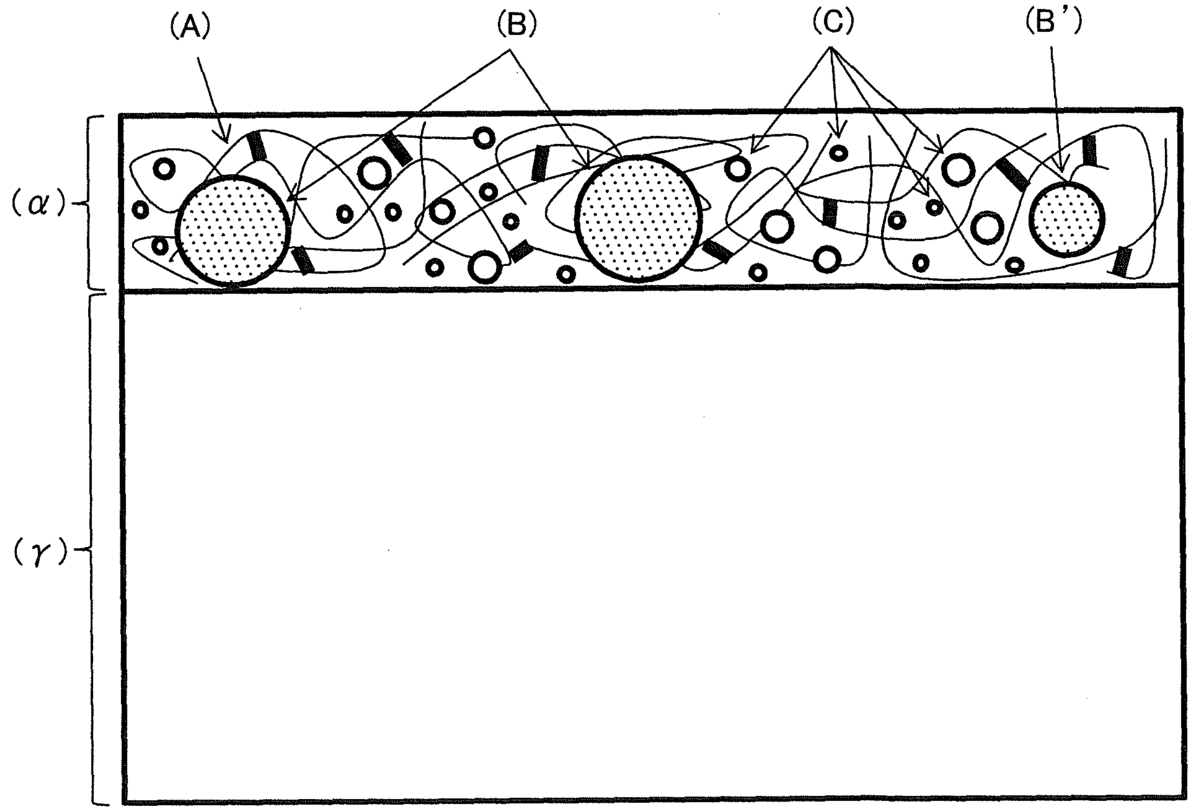

FIG. 2

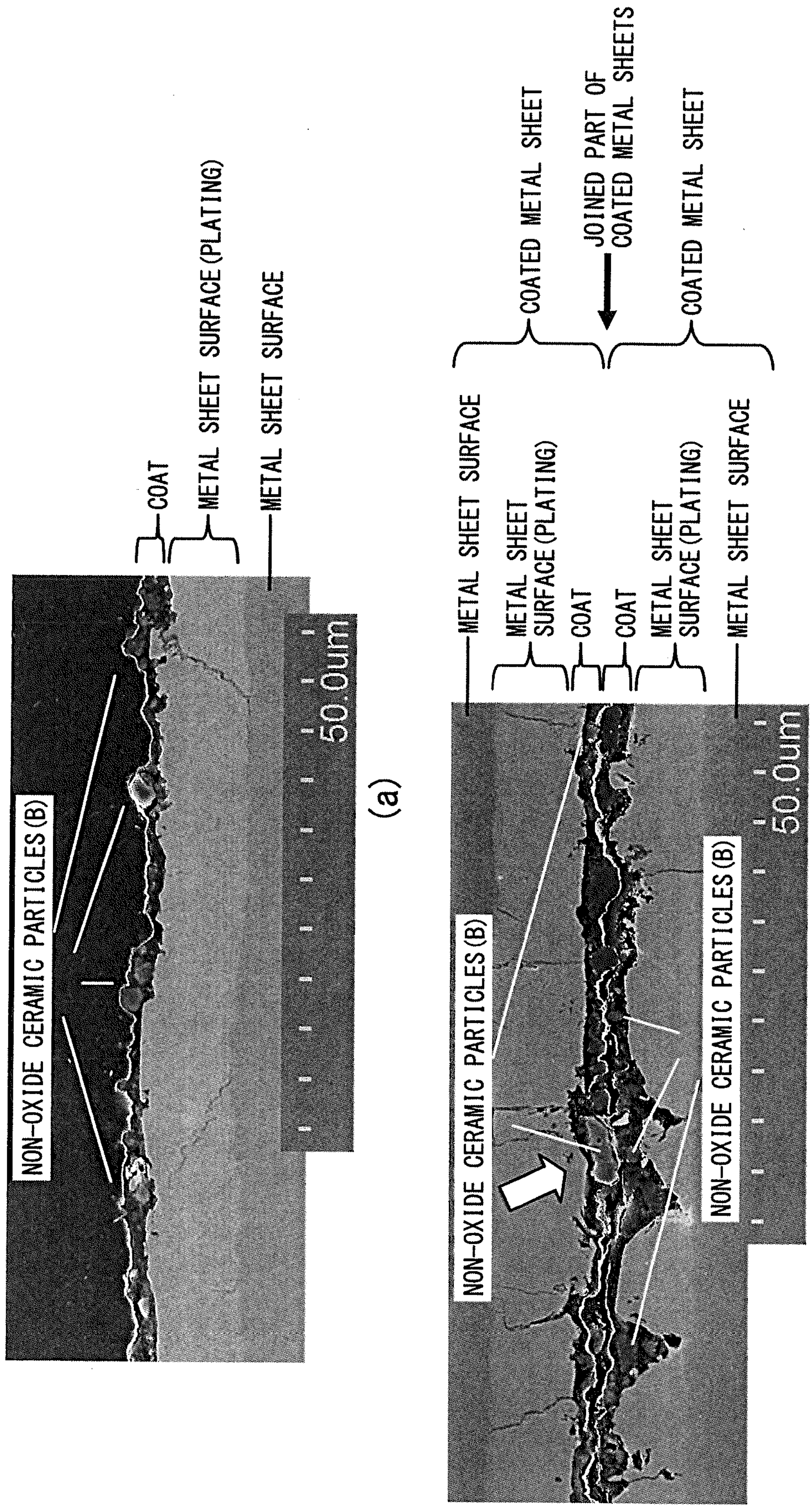
NON-OXIDE CERAMIC PARTICLES (B)
COAT
METAL SHEET SURFACE (PLATING)
METAL SHEET SURFACE
50.0um
(a)
COATED METAL SHEET
JOINED PART OF COATED METAL SHEETS
COATED METAL SHEET
METAL SHEET SURFACE
METAL SHEET SURFACE (PLATING)
COAT
COAT
METAL SHEET SURFACE (PLATING)
METAL SHEET SURFACE
NON-OXIDE CERAMIC PARTICLES (B)
NON-OXIDE CERAMIC PARTICLES (B)
50.0um
(b)

FIG. 3

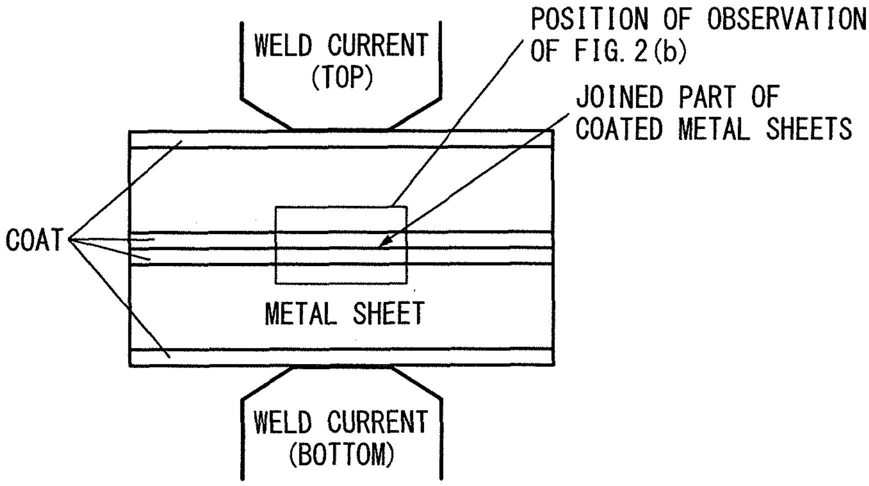
WELD CURRENT
(TOP)
POSITION OF OBSERVATION
OF FIG. 2(b)
JOINED PART OF
COATED METAL SHEETS
COAT
METAL SHEET
WELD CURRENT
(BOTTOM)

FIG. 4

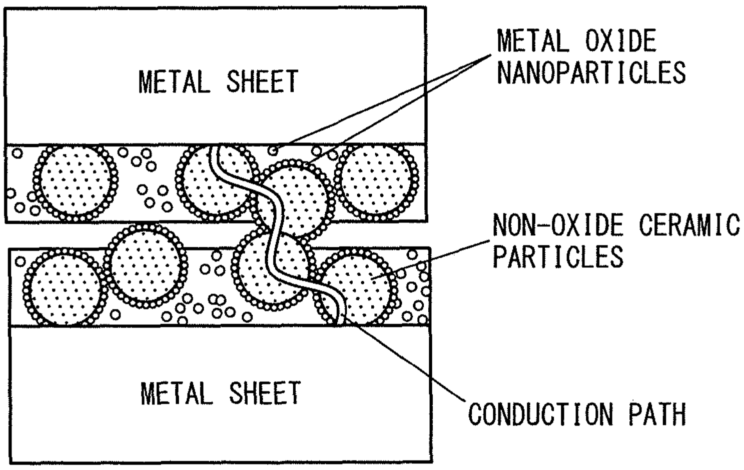
METAL SHEET
METAL OXIDE
NANOPARTICLES
NON-OXIDE CERAMIC
PARTICLES
METAL SHEET
CONDUCTION PATH

## INTERNATIONAL SEARCH REPORT

International application No.
PCT/JP2013/056021

A. CLASSIFICATION OF SUBJECT MATTER
*B32B15/08*(2006.01)i, *B05D7/14*(2006.01)i, *B05D7/24*(2006.01)i, *C09D5/08*(2006.01)i, *C09D7/12*(2006.01)i, *C09D201/00*(2006.01)i, *C23C26/00*(2006.01)i

According to International Patent Classification (IPC) or to both national classification and IPC

B. FIELDS SEARCHED

Minimum documentation searched (classification system followed by classification symbols)
B32B15/08, B05D7/14, B05D7/24, C09D5/08, C09D7/12, C09D201/00, C23C26/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2005-288730 A (JFE Steel Corp.), 20 October 2005 (20.10.2005), claims; paragraphs [0001], [0011], [0013] to [0044]; examples (Family: none) | 1-14 |
| X<br>A | JP 2005-288731 A (JFE Steel Corp.), 20 October 2005 (20.10.2005), claims; paragraphs [0001], [0011], [0013] to [0035]; examples (Family: none) | 1-4,6-14<br>5 |
| Y<br><br>A | JP 2001-234315 A (Nippon Steel Corp.), 31 August 2001 (31.08.2001), claims; paragraphs [0013] to [0029], [0038] to [0039]; examples (Family: none) | 1-4,6-8,<br>12-14<br>5,9-11 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 23 May, 2013 (23.05.13) | 04 June, 2013 (04.06.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2013/056021

C (Continuation). DOCUMENTS CONSIDERED TO BE RELEVANT

| Category* | Citation of document, with indication, where appropriate, of the relevant passages | Relevant to claim No. |
|---|---|---|
| Y | JP 51-64542 A (Nippon Steel Corp.), 04 June 1976 (04.06.1976), claims; page 2, lower left column to lower right column; examples (Family: none) | 1-4,6-8, 12-14 |
| Y | JP 57-189842 A (Nippon Steel Corp.), 22 November 1982 (22.11.1982), claims; page 1, right column, lines 4 to 13; page 2, lower left column, line 7 to page 5 & US 4524111 A & GB 2101010 A & DE 3218819 A & FR 2506340 A & BE 893223 A & NL 8202088 A & AU 8368082 A & CA 1200723 A & IT 1201524 B & AU 551639 B | 1-4,6-8, 12-14 |
| Y | JP 61-76570 A (Mitsui Engineering & Shipbuilding Co., Ltd.), 19 April 1986 (19.04.1986), page 1, right column, line 12 to page 2, upper left column, line 2 (Family: none) | 1-4,6-8, 12-14 |
| E,X<br>E,A | JP 5021107 B2 (Nippon Steel Corp.), 05 September 2012 (05.09.2012), claims; paragraph [0123]; examples & WO 2012/029988 A1 & TW 201221594 A | 1-6,8-14<br>7 |
| E,A | JP 2012-162713 A (Nippon Steel Corp.), 30 August 2012 (30.08.2012), claims; examples (Family: none) | 1-14 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 55017508 A
- JP 9276788 A
- JP 2000070842 A
- JP 2003513141 A
- JP 2005288730 A
- JP 2005325427 A
- JP 2004042622 A
- JP 2003268567 A